(19) Europäisches Patentamt / European Patent Office / Office européen des brevets

(11) **EP 2 573 650 A1**

(12) **EUROPEAN PATENT APPLICATION**
published in accordance with Art. 153(4) EPC

(43) Date of publication:
**27.03.2013 Bulletin 2013/13**

(21) Application number: **11783243.6**

(22) Date of filing: **13.05.2011**

(51) Int Cl.:
*G06F 3/02* (2006.01)  *G06F 3/023* (2006.01)
*G06F 3/033* (2013.01)  *G06F 3/041* (2006.01)
*G06F 3/048* (2013.01)  *H03M 11/08* (2006.01)
*H04M 1/247* (2006.01)

(86) International application number:
**PCT/JP2011/002667**

(87) International publication number:
**WO 2011/145304 (24.11.2011 Gazette 2011/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.05.2010 JP 2010116118**
**20.05.2010 JP 2010116117**
**20.05.2010 JP 2010116116**

(71) Applicant: **NEC Corporation**
**Tokyo 108-8001 (JP)**

(72) Inventor: **OGA, Toshiyuki**
**Tokyo 108-8001 (JP)**

(74) Representative: **Vossius & Partner**
**Siebertstrasse 4**
**81675 München (DE)**

(54) **PORTABLE INFORMATION PROCESSING TERMINAL**

(57) A portable information processing terminal 200 includes a display device 201 formed on a predetermined surface of a casing of the portable information processing terminal 200, operation keys 202 disposed on a surface of the casing, the surface being on the opposite side of the surface on which the display device 201 is formed, and a control device 203 that detects an operating state input to the operation keys 202 and performs processing according to the detected operating state. When the control device 203 detects a sequential operation performed on a plurality of the operation keys 202, the control device 203 accepts an input of information representing a predetermined direction corresponding to the sequential operation performed on the plurality of the operation keys 202.

Fig.9

EP 2 573 650 A1

**Description**

TECHNICAL FIELD

The present invention relates to a portable information processing terminal, and in particular, to a portable information processing terminal having a plurality of operation keys. The present invention also relates to a portable information processing terminal having a touch panel and operation keys. The present invention also relates to a portable information, processing terminal having a casing equipped with a display device and a casing equipped with an operation device. The present invention also relates to a program for a portable information processing terminal, a recording medium which records the program, and an input acceptance method implemented by a portable information processing terminal.

BACKGROUND ART

In recent years, portable information processing terminals such as mobile phones have been widely used. In portable information processing terminals, portability is the most important feature, thus size reduction has been developing. The second important feature may be operability as information processing terminals.

Operations of a portable information processing terminal include an input operation from a user, and an output operation to a user. Regarding the input operation, operability of input devices, which includes operation keys such as a numeric keypad, a touch panel, and a pointing device, is important, while regarding the output operation, visibility of a display has a particular importance as the size of a portable information terminal is reduced.

Regarding the operability of an input device, the following features are desired: a large input device, easy to operate, a small number of operating steps being required for each operating item, the operating method being easily understandable instinctively (directions in up, down, left, and right, size, and rotational directions conform to the senses such as vision and touch of an operator), and peculiar bodily motion which is uncommon in daily life being not required, for example.

On the other hand, regarding the visibility of a display, features such as a large display size and consideration being made to its arrangement (not interfere with an action by an operator, that is, not to be hidden behind the hand, for example) are desired.

Further, the operability which should be considered particularly because of the characteristics of a portable information processing terminal includes the followings: as a portable information processing terminal is used by being held by hand rather than placed on a desk, it should have high operability in such a condition (may be held by one hand or both hands); it should be operable by the hand holding the terminal (when the operator moves while holding the portable information terminal, the other hand may be used for other purposes like holding baggage); the form should be changeable in order to provide optimum operability according to the change of the used conditions (for example, in the case of foldable separated casings, in the scene where it can be used on a desk, when the folded casings are opened, the occupied space would be larger but the terminal can be operated easily); and if the form is changeable, the terminal should recognize the form by itself and operation procedures should be changeable according to the form (for example, in the case of foldable separated casings, the terminal recognizes a folding state and adjust the directional information input through the input device according to the state).

Further, low power consumption is mandatory for a portable information processing terminal because, as it is driven by a battery, the power consumption directly affects the operating time.

Patent Document 1 discloses a technique for realizing a portable information processing terminal satisfying some of the above-described requirements. In order to realize both a large input device (keys) and a large display, and to enable the terminal to be operated by the hand holding it, Patent Document 1 discloses a technique of providing an input device on the rear surface of the portable information processing terminal (back surface of the display). Further, as a measure against deterioration in operability (deterioration in the visibility of the input device and an increase in the possibility of erroneous operation) which may be caused by such a configuration, Patent Document 1 discloses an operation assisting function of the rear-side input device, that is, a technique of detecting a finger touch and displaying its position on the display, and a control technique of adjusting the key arrangements when the front and back sides of the portable information terminal are reversed.

Patent Document 1: JP 4161224 B

However, the above-described techniques are still unable to satisfy the various requirements described above, including operability, with respect to a portable information processing terminal. For example, in the above-described techniques, as only a pressing operation can be made on the operation keys on the rear side, other operations such as a vector input cannot be performed using the keys on the rear surface. As such, the operating method is limited, so that further improvement in operability cannot be achieved. Further, in the above-described techniques, as only inputs from the operation keys on the rear side are accepted, the operating method is limited, so that further improvement in operability cannot be achieved. Further, in the above-described techniques, as the position of the input device on the rear surface relative to the display device on the front surface is fixed, the operational feeling of a user would be uncomfortable. This provides a problem that operability for a user cannot be improved.

Accordingly, an object of the present invention is to further improve operability of a portable information processing terminal, which is the problem to be solved as described above.

In order to achieve the object, a portable information processing terminal, which is an aspect of the present invention, includes:

a display device formed on a predetermined surface of a casing of the portable information processing terminal;
operation keys disposed on a surface of the casing, the surface being on the opposite side of the surface on which the display device is formed; and
a control device that detects an operating state input to the operation keys, and performs processing according to the detected operating state, wherein
when the control device detects a sequential operation performed on a plurality of the operation keys, the control device accepts an input of information representing a predetermined direction corresponding to the sequential operation performed on the plurality of the operation keys.

Further, a program, which is another aspect of the present invention, is a program for causing a control device of a portable information processing terminal to realize, the portable information processing terminal including a display device formed on a predetermined surface of a casing of the portable information processing terminal; operation keys disposed on a surface of the casing, the surface being on the opposite side of the surface on which the display device is formed; and the control device that detects an operating state input to the operation keys and performs processing according to the detected operating state,
an input acceptance means for accepting, when detecting a sequential operation performed on a plurality of the operation keys, an input of information representing a predetermined direction corresponding to the sequential operation performed on the plurality of the operation keys.

Further, a computer-readable recording medium, storing a program which is another aspect of the present invention, is a computer-readable recording medium storing a program for causing a control device of a portable information processing terminal to realize, the portable information processing terminal including a display device formed on a predetermined surface of a casing of the portable information processing terminal; operation keys disposed on a surface of the casing, the surface being on the opposite side of the surface on which the display device is formed; and the control device that detects an operating state input to the operation keys and performs processing according to the detected operating state,
an input acceptance means for accepting, when detecting a sequential operation performed on a plurality of the operation keys, an input of information representing a predetermined direction corresponding to the sequential operation performed on the plurality of the operation keys.

Further, an input acceptance method, which is another aspect of the present invention, includes,
in a portable information processing terminal including a display device formed on a predetermined surface of a casing of the portable information processing terminal; operation keys disposed on a surface of the casing, the surface being on the opposite side of the surface on which the display device is formed; and a control device that detects an operating state input to the operation keys and performs processing according to the detected operating state,
when detecting a sequential operation performed on a plurality of the operation keys, accepting an input of information representing a predetermined direction corresponding to the sequential operation performed on the plurality of the operation keys.

Further, in order to achieve the object, a portable information processing terminal, which is an aspect of the present invention, includes:

a display device of a touch panel type in which information is able to be input by a touching operation;
an operation key disposed at a position different from a position of the display device; and
a control device that detects operating states of the display device and the operation key, and performs processing according to the detected operating states, wherein
the control device detects a temporary position input specifying a position on the display device by a touching operation performed on the display device, and when detecting an operation performed on the operation key in a state where the temporary position input is detected, accepts the position corresponding to the temporary position input as positional information.

Further, a portable information processing terminal, which is another aspect of the present invention, includes a display device of a touch panel type in which information is able to be input by a touching operation, the display device being formed on a predetermined surface of a casing of the portable information processing terminal;

an operation key formed on a surface of the casing, the surface being on the opposite side of the surface on which the display device is formed; and

a control device that detects operating states of the display device and the operation key, and performs processing according to the detected operating states, wherein

the control device detects a touching operation performed on the display device and an operation performed on the operation key, and accepts a predetermined input according to a combination of the touching operation performed on the display device and the operation performed on the operation key.

Further, a program, which is another aspect of the present invention, is a program for causing a control device of a portable information processing terminal to realize, the portable information processing terminal including a display device of a touch panel type in which information is able to be input by a touching operation; an operation key disposed at a position different from a position of the display device; and the control device that detects operating states of the display device and the operation key and performs processing according to the detected operating states,

an input acceptance means for detecting a temporary position input specifying a position on the display device by a touching operation performed on the display device, and when detecting an operation performed on the operation key in a state where the temporary position input is detected, accepting the position corresponding to the temporary position input as input positional information.

Further, a computer-readable recording medium, storing a program which is another aspect of the present invention, is a computer-readable recording medium storing a program for causing a control device of a portable information processing terminal to realize, the portable information processing terminal including a display device of a touch panel type in which information is able to be input by a touching operation; an operation key disposed at a position different from a position of the display device; and the control device that detects operating states of the display device and the operation key and performs processing according to the detected operating states,

an input acceptance means for detecting a temporary position input specifying a position on the display device by a touching operation performed on the display device, and when detecting an operation performed on the operation key in a state where the temporary position input is detected, accepting the position corresponding to the temporary position input as input positional information.

Further, an input acceptance method, which is another aspect of the present invention, includes:

in a portable information processing terminal including a display device of a touch panel type in which information is able to be input by a touching operation; an operation key disposed at a position different from a position of the display device; and a control device that detects operating states of the display device and the operation key and performs processing according to the detected operating states,

detecting a temporary position input specifying a position on the display device by a touching operation performed on the display device, and when detecting an operation performed on the operation key in a state where the temporary position input is detected, accepting the position corresponding to the temporary position input as input positional information.

Further, in order to achieve the object, a portable information processing terminal, which is an aspect of the present invention, includes:

a display device-side casing including a display device;

an operation device-side casing including an operation device;

a control device that accepts an input value predetermined corresponding to an operating state of the operation device and performs processing according to the input value; and

a detection means for detecting a direction of a display surface of the display device and a direction of an operation surface of the operation device.

The control device is adapted to convert the input value corresponding to the operating state of the operation device into an input value corresponding to another operating state according to the direction of the operation surface relative to the display surface, and accept the converted input value.

Further, a program, which is another aspect of the present invention, is a program for causing a control device of a portable information processing terminal to realize, the portable information processing terminals including a display device-side casing including a display device; an operation device-side casing including an operation device; the control device that accepts an input value predetermined corresponding to an operating state of the operation device and performs processing according to the input value; and a detection means for detecting a direction of a display surface of the display device and a direction of an operation surface of the operation device,

an input acceptance means for converting the input value corresponding to the operating state of the operation device into an input value corresponding to another operating state according to the direction of the operation surface relative to the display surface, and accepting the converted input value.

Further, a computer-readable recording medium, storing a program which is another aspect of the present invention, is a computer-readable recording medium storing a program for causing a control device of a portable information processing terminal to realize, the portable information processing terminal including a display device-side casing including a display device; an operation device-side casing including an operation device; the control device that accepts an input value predetermined corresponding to an operating state of the operation device and performs processing according to the input value; and a detection means for detecting a direction of a display surface of the display device and a direction of an operation surface of the operation device,

an input acceptance means for converting the input value corresponding to the operating state of the operation device into an input value corresponding to another operating state according to the direction of the operation surface relative to the display surface, and accepting the converted input value.

Further, an input acceptance method, which is another aspect of the present invention, includes:

in a portable information processing terminal including a display device-side casing including a display device; an operation device-side casing including an operation device; and a control device that accepts an input value predetermined corresponding to an operating state of the operation device and performs processing according to the input value,

detecting a direction of a display surface of the display device and a direction of an operation surface of the operation device; and

converting the input value corresponding to the operating state of the operation device into an input value corresponding to another operating state according to the direction of the operation surface relative to the display surface, and accepting the converted input value.

Further, a portable information processing terminal, which is another aspect of the present invention, includes:

a display device;
an operation key;
an input means different from the operation key; and
a control device that detects input states of the operation key and the input means, and performs processing according to the detected input states, wherein
the control device detects a temporary position input specifying a position on the display device by an input to the input means, and when detecting an operation performed on the operation key in a state where the temporary position input is detected, accepts the position corresponding to the temporary position input as input positional information.

Further, a portable information processing terminal, which is another aspect of the present invention, includes:

a first input means:
a second input means different from the first input means; and
a control device that detects input states of the first input means and the second input means, and performs processing according to the detected input states, wherein
the control device detects a temporary direction input specifying a direction with regard to the portable information processing terminal by an input to the second input means, and when detecting an operation performed on the first input means in a state where the temporary direction input is detected, accepts the direction corresponding to the temporary direction input as input directional information.

Further, a computer-readable recording medium, storing a program which is another aspect of the present invention, is a computer-readable recording medium storing a program for causing a control device of a portable information processing terminal to realize, the portable information processing terminal including a display device; an operation key; an input means different from the operation key; and the control device that detects input states of the operation key and the input means and performs processing according to the detected input states,

a means for detecting a temporary position input specifying a position on the display device by an input to the input means, and when detecting an operation performed on the operation key in a state where the temporary position input is detected, accepting the position corresponding to the temporary position input as input positional information.

Further, an input acceptance method, which is another aspect of the present invention, includes:

by a portable information processing terminal including a display device; an operation key; an input means different from the operation key; and a control device that detects input states of the operation key and the input means and performs processing according to the detected input states,

detecting a temporary position input specifying a position on the display device by an input to the input means, and when detecting an operation performed on the operation key in a state where the temporary position input is detected, accepting the position corresponding to the temporary position input as input positional information.

Further, a computer-readable recording medium, storing a program which is another aspect of the present invention, is a computer-readable recording medium storing a program for causing a control device of a portable information processing terminal to realize, the portable information processing terminal including a first input means; a second input means different from the first input means; and a control device that detects input states of the first input means and the second input means and performs processing according to the detected input states,

a means for detecting a temporary direction input specifying a direction with regard to the portable information processing terminal by an input to the second input means, and when detecting an operation performed on the first input means in a state where the temporary direction input is detected, accepting the direction corresponding to the temporary direction input as input directional information.

Further, an input acceptance method, which is another aspect of the present invention, includes:

by a portable information processing terminal including a first input means; a second input means different from the first input means; and a control device that detects input states of the first input means and the second input means and performs processing according to the detected input states,

detecting a temporary direction input specifying a direction with regard to the portable information processing terminal by an input to the second input means, and when detecting an operation performed on the first input means in a state where the temporary direction input is detected, accepting the direction corresponding to the temporary direction input as input directional information.

As the present invention is configured as described above, the present invention is able to improve operability of a portable information processing terminal.

BRIEF DESCRIPTION OF DRAWINGS

Fig. 1 is an external view showing a configuration of a portable information processing terminal according to the present invention.
Fig. 2 is an illustration showing a state of using the portable information processing terminal according to the present invention.
Fig. 3 is an external view showing another configuration of a portable information processing terminal according to the present invention.
Fig. 4 is an external view showing another configuration of a portable information processing terminal according to the present invention.
Fig. 5 is a block diagram showing a configuration of the portable information processing terminal according to the present invention.
Fig. 6 is an illustration regarding display control of information displayed on a portable information processing terminal.
Fig. 7 is an illustration showing a state of inputting characters in a portable information processing terminal.
Fig. 8 is an illustration showing a state of inputting characters in a portable information processing terminal.
Fig. 9 is an illustration showing a state of operating a rear-side keyboard of a portable information processing terminal.
Fig. 10 is an illustration showing a state of a displacement/scrolling operation in a portable information processing terminal.
Fig. 11 is an illustration showing a state of a displacement/scrolling operation in a portable information processing terminal.
Fig. 12 is an illustration showing a state of a displacement/scrolling operation in a portable information processing terminal.
Fig. 13 is an illustration showing a state of a displacement/scrolling operation in a portable information processing terminal.
Fig. 14 is an illustration showing a state of a rotating operation in a portable information processing terminal.
Fig. 15 is an illustration showing a state of a rotating operation in a portable information processing terminal.
Fig. 16 is an illustration showing a state of a rotating operation in a portable information processing terminal.

Fig. 17 is an illustration showing a state of scaling operation in a portable information processing terminal.

Fig. 18 is an illustration showing a state of a scaling operation in a portable information processing terminal.

Fig. 19 is an illustration showing a state of a scaling operation in a portable information processing terminal.

Fig. 20 is an illustration showing a state of a scaling operation in a portable information processing terminal.

Fig. 21 is an illustration showing a state of using a portable information processing terminal according to the present invention.

Fig. 22 is an external view showing another configuration of a portable information processing terminal according to the present invention.

Fig. 23 is an illustration showing a method of inputting positional information in a portable information processing terminal.

Fig. 24 is an illustration showing a method of inputting positional information in a portable information processing terminal.

Fig. 25 is an illustration showing a method of inputting positional information in a portable information processing terminal.

Fig. 26 is an illustration showing a method of inputting positional information in a portable information processing terminal.

Fig. 27 is an illustration showing a method of inputting vector information in a portable information processing terminal.

Fig. 28 is an illustration showing a method of inputting vector information in a portable information processing terminal.

Fig. 29 is an illustration showing a method of inputting vector information in a portable information processing terminal.

Fig. 30 is an illustration showing a method of inputting vector information in a portable information processing terminal.

Fig. 31 is an illustration showing a method of inputting vector information in a portable information processing terminal.

Fig. 32 is an illustration showing a method of inputting vector information in a portable information processing terminal.

Fig. 33 is an illustration showing a method of inputting vector information in a portable information processing terminal.

Fig. 34 is an illustration showing a method of inputting vector information in a portable information processing terminals.

Fig. 35 is an external view showing a configuration of a portable information processing terminal according to the present invention.

Fig. 36 is an external view showing a configuration of a portable information processing terminal according to the present invention.

Fig. 37 is an illustration showing a state of using a portable information processing terminal according to the present invention.

Fig. 38 is an illustration showing a method of detecting a direction of the operation surface relative to the display surface of a portable information processing terminal.

Fig. 39 is an illustration showing a method of detecting a direction of the operation surface relative to the display surface of a portable information processing terminal.

Fig. 40 is an illustration showing a state of converting an input value with respect to an input device of a portable information processing terminal.

Fig. 41 is an illustration showing a state of converting an input value with respect to an input device of a portable information processing terminal.

Fig. 42 is an illustration showing a state of converting an input value with respect to an input device of a portable information processing terminal.

Fig. 43 is an external view showing another configuration of a portable information processing terminal according to the present invention.

Fig. 44 is an illustration showing a state of converting an input value with respect to an input device of a portable information processing terminal.

Fig. 45 is an illustration showing a state of converting an input value with respect to an input device of a portable information processing terminal.

Fig. 46 is an illustration showing a state of converting an input value with respect to an input device of a portable information processing terminal.

Fig. 47 is an external view showing another configuration of a portable information processing terminal according to the present invention.

Fig. 48 is an illustration showing a method of detecting a direction of the operation surface relative to the display surface of a portable information processing terminal.

Fig. 49 is an illustration showing a state of using a portable information processing terminal.

Fig. 50 is an illustration showing a state of converting an input value with respect to an input device of a portable information processing terminal.

Fig. 51 is an illustration showing a state of using a portable information processing terminal.

Fig. 52 is an illustration showing a state of converting an input value with respect to an input device of a portable information processing terminal.

Fig. 53 is an illustration showing a state of using a portable information processing terminal according to the present invention.

Fig. 54 is an external view showing another configuration of a portable information processing terminal according to the present invention.

Fig. 55 is an illustration showing an inputting method in a portable information processing terminal.

Fig. 56 is an illustration showing an inputting method in a portable information processing terminal.

Fig. 57 is an illustration showing an inputting method in a portable information processing terminal.

Fig. 58 is an illustration showing an inputting method in a portable information processing terminal.

Fig. 59 is an illustration showing an inputting method in a portable information processing terminals.

Fig. 60 is an illustration showing an inputting method in a portable information processing terminal.

Fig. 61 is an illustration showing an inputting method in a portable information processing terminal.

Fig. 62 is an illustration showing an inputting method in a portable information processing terminal.

Fig. 63 is an illustration showing an inputting method in a portable information processing terminal.

Fig. 64 is an illustration showing an inputting method in a portable information processing terminal.

Fig. 65 is an external view showing another configuration of a portable information processing terminal.

Fig. 66 is a block diagram showing the configuration of a portable information processing terminal according to Supplementary Note A1 of the present invention.

Fig. 67 is a block diagram showing the configuration of a portable information processing terminal in which a program according to Supplementary Note A12 of the present invention is installed.

Fig. 68 is a flowchart showing an input acceptance method according to Supplementary Note 14 of the present invention.

Fig. 69 is a block diagram showing the configuration of a portable information processing terminal according to Supplementary Notes B1 and B8 of the present invention.

Fig. 70 is a block diagram showing a portable information processing terminal in which a program according to Supplementary Notes B9 and B11 of the present invention is installed.

Fig. 71 is a flowchart showing an input acceptance method according to Supplementary Note B12 of the present invention.

Fig. 72 is a flowchart showing an input acceptance method according to Supplementary Note B14 of the present invention.

Fig. 73 is a block diagram showing the configuration of a portable information processing terminal according to Supplementary Note C1 of the present invention.

Fig. 74 is a block diagram showing the configuration of a portable information processing terminal in which a program according to Supplementary Note C9 of the present invention is installed.

Fig. 75 is a flowchart showing an input acceptance method according to Supplementary Note C11 of the present invention.

Fig. 76 is a block diagram showing the configuration of a portable information processing terminal according to Supplementary Note D1 of the present invention.

Fig. 77 is a block diagram showing the configuration of a portable information processing terminal according to Supplementary Note D5 of the present invention.

Fig. 78 is a flowchart showing an input acceptance method according to Supplementary Note D11 of the present invention.

Fig. 79 is a flowchart showing an input acceptance method according to Supplementary Note D13 of the present invention.

## EXEMPLARY EMBODIMENTS

## FIRST EXEMPLARY EMBODIMENT

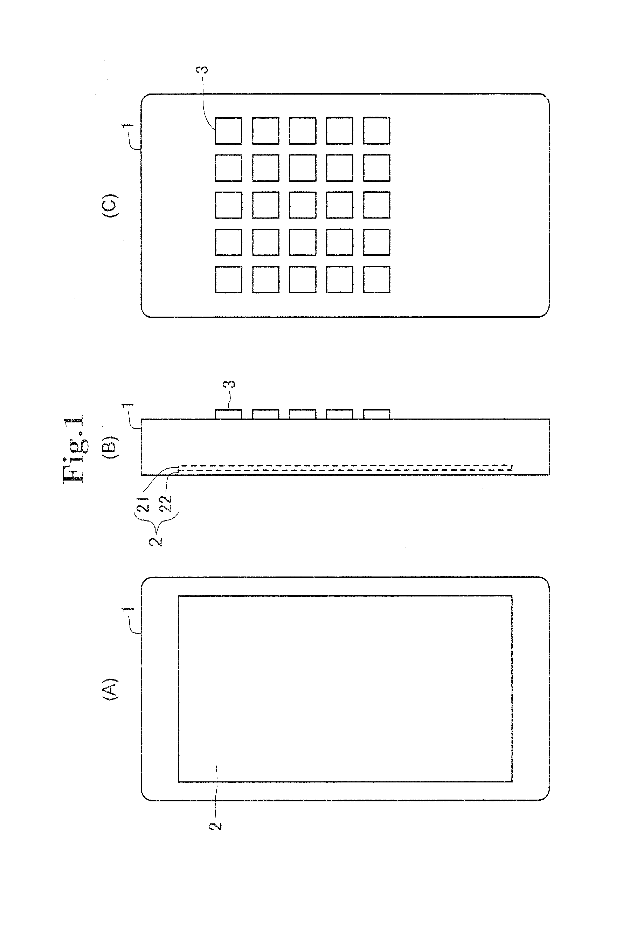

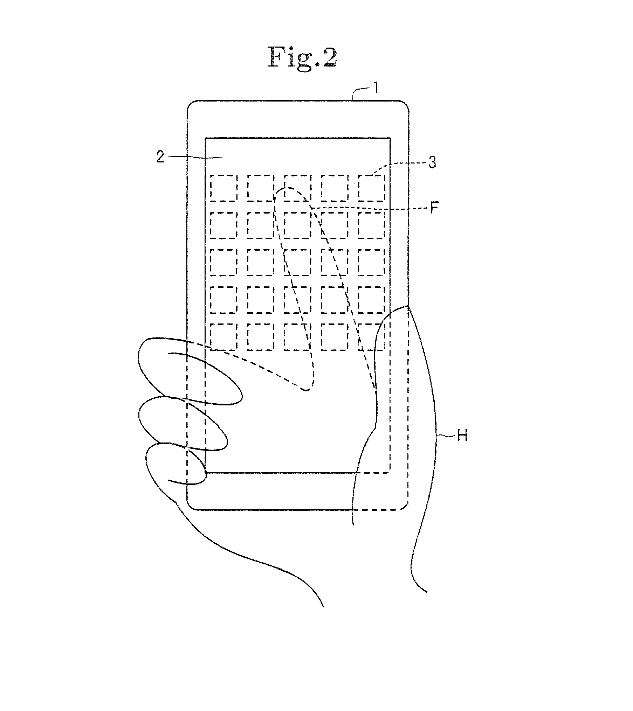

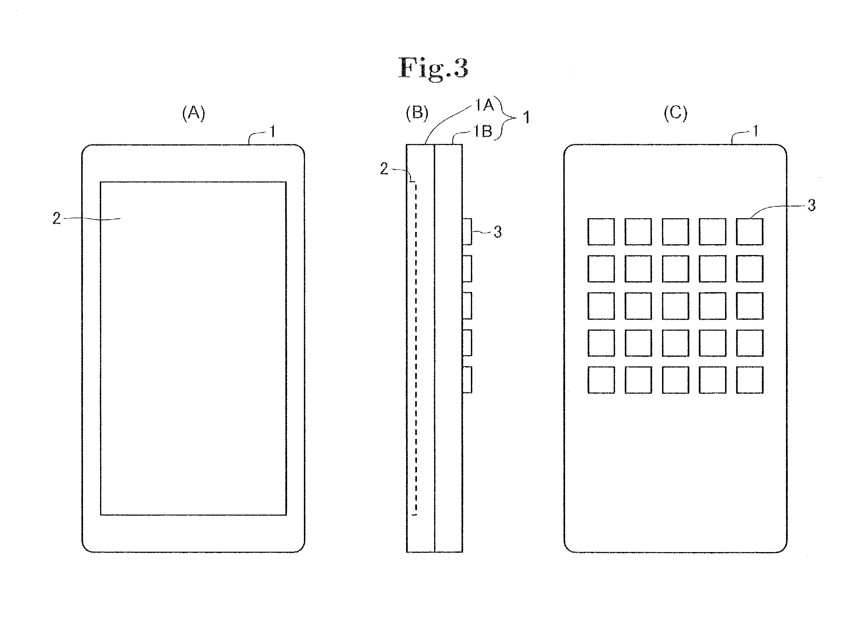

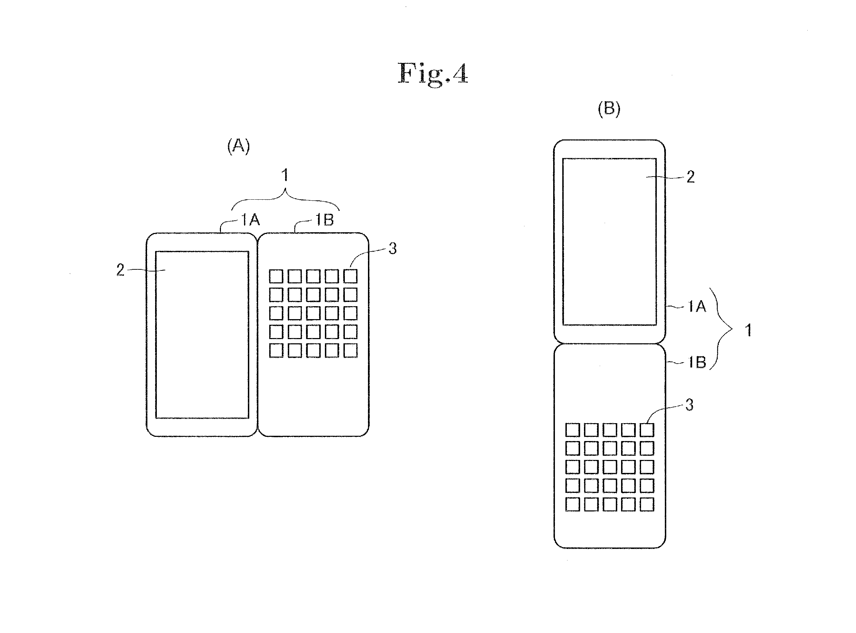

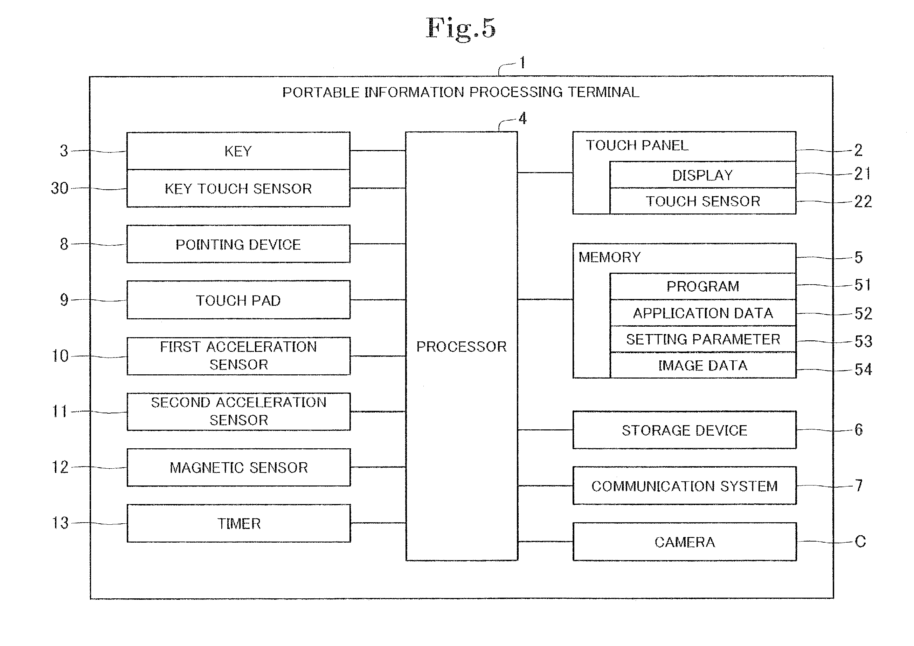

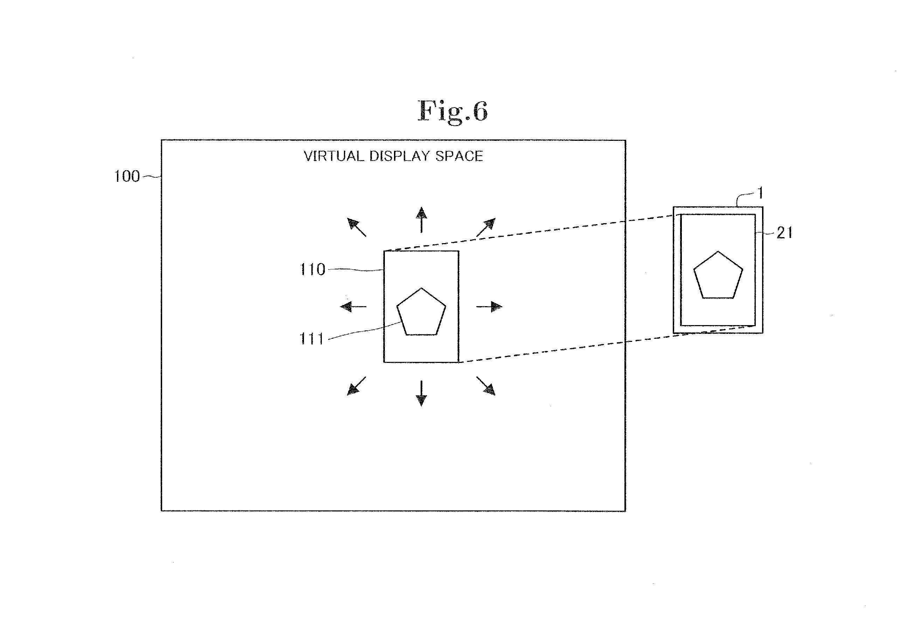

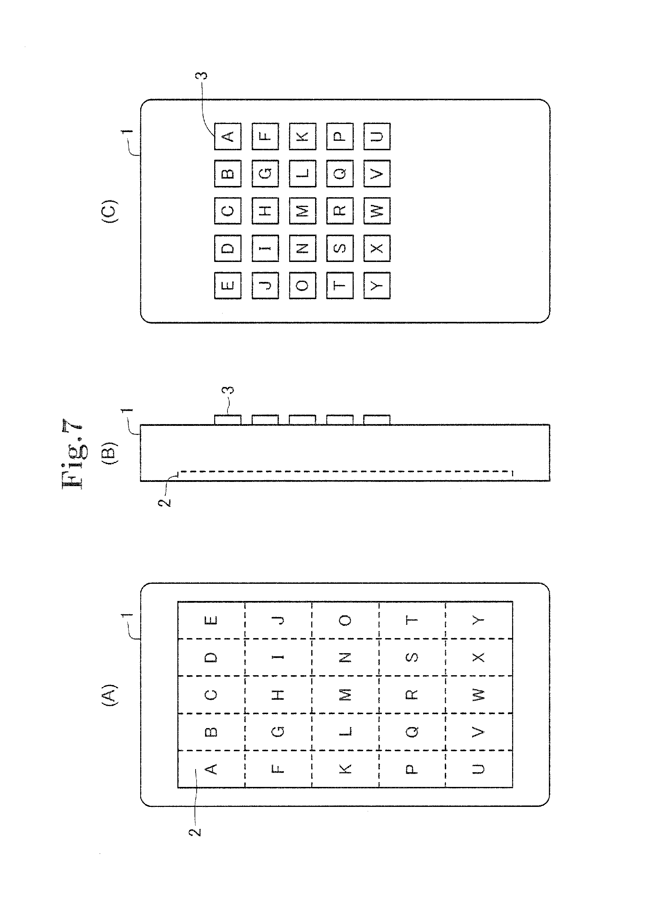

A first exemplary embodiment of the present invention will be described with reference to Figs. 1 to 20. Fig. 1 is an external view showing a configuration of a portable information processing terminal according to the present invention, and Fig. 2 is an illustration showing a state of using the portable information processing terminal. Figs. 3 and 4 are external views showing other configurations of the portable information processing terminal. Fig. 5 is a block diagram showing the configuration of the portable information processing terminals, and Fig. 6 is an illustration for explaining display control of information displayed on the portable information processing terminal. Figs. 7 to 20 are illustrations for explaining states of inputting information in the portable information processing terminal.

[Configuration]

Fig. 1 shows an example of a portable information processing terminal as a first exemplary embodiment of the present invention, in which Fig. 1(A) is a front view of a portable information processing terminal 1, Fig. 1(B) is a side view, and Fig. 1(C) is a rear view. Further, the configuration of the portable information processing terminal 1 is shown in the block diagram of Fig. 5.

As shown in Fig. 1, the portable information processing terminal 1 is formed of a substantially rectangular casing having a predetermined thickness. On the front side (predetermined surface) of the casing, a touch panel 2 (display device) is disposed. As shown in Figs. 1 and 5, the touch panel 2 includes a display 21, and a touch sensor 22 which is arranged outside the display 21 so as to be touched from the outside. It should be noted that the display 21 is a typical display device which displays predetermined information such as characters and graphics.

Further, on the rear surface, which is positioned opposite to the surface on which the touch panel 2 is disposed, of the casing of the portable information processing terminal 1, a plurality of keys (operation keys), which is an input device, are disposed. Specifically, the keys 3 are provided in an exposed manner on the outside of the casing, adapted to be able to be pressed towards the casing side. In the present embodiment, the keys 3 are arranged in 5 rows $\times$ 5 columns, that is, arranged in 5 rows in each of which 5 pieces of keys are aligned, and are protruded toward the outside of the casing. It should be noted that the arrangement of the keys 3 is not limited to 5 rows $\times$ 5 columns, and is not limited to the configuration that the keys are protruded toward the outside of the casing.

Further, each of the keys 3 has a function of detecting that the key is pressed to the deepest position (full press) (full-press detection function), and a function of detecting that the key is pressed to an intermediate level (half press) although not to the deepest position (half-press detection function), and a function of detecting that a finger, a stick, or the like contacts or comes close thereto (touch detection function). Hereinafter, by combining the half-press detection function and the touch detection function, a device controlling detection thereof is referred to as a key touch sensor 30. Of course, these functions may be provided independently and included at the same time.

It should be noted that although the full-press detection function and the half-press detection function are functions built in each key, the touch detection function may be provided not only in each key but also between keys. In this embodiment, for the sake of convenience, the case where it is possible to determine whether each key is touched, although the function is not built in each key, is also handed as the half-press detection function. Further, according to applied usages, even a key only having a full-press detection function may be used as a replacement of that having a half-press detection function, where an independent full-press operation (a time interval between one and another full-press operation performed before or after it has a predetermined value or longer) is handled as a half-press operation described above, and a plurality of sequential full-press operations (a time interval between full-press operations are shorter than a predetermined value) are handled as a full-press operation described above.

Further, the keys 3 may be configured as a software keyboard using a two-dimensional touch sensor. To be specific, a touch detection surface of the two-dimensional touch sensor is sectioned into small regions having a form similar to the key arrangement of a keyboard of hardware using switches (hardware keyboard). Then, when a touch on each of the small regions is detected, a signal, which is the same as a signal when a key of the corresponding hardware keyboard is pressed, is output. While this processing is performed in software processing by the processor 4, for example, it may be performed by another processor or a logic circuit.

Further, even in a software keyboard, by using a capacitance touch sensor capable of detecting a touch with little pressure for detecting half press, and also using a resistive touch sensor which detects pressure for detecting full press, the full-press detection function and the half-press detection function, described above, can be realized. Further, a tap (touching a touch sensor once) may be handled as half press, and a double tap (touching a touch sensor twice. Generally, upper limit is set for a time interval between touches) may be handled as full press.

It should be noted that software keyboard operation by the two-dimensional touch sensor and other two-dimensional inputting operation may be switched by switching operation as describe below.

Fig. 2 shows a state where an operator holds the portable information processing terminal 1, configured as described above, in his/her hand H and operates it. As shown in Fig. 2, when the operator holds it in a manner that the touch panel 2 is in front and the keys 3 are located on the rear surface, the hand H of the operator is positioned on the rear side of the portable information processing terminal 1, and a finger F (index finger) of the operator is positioned on the keys 3 on the rear side. Thereby, for the operator, visibility is not impaired by the hand H and the finger F because they do not cover the touch panel 2 including the display 21, and the operator is able to easily operate the keys 3 on the rear side by the finger F.

While Fig. 2 shows the case where the operator holds the portable information processing terminal 1 by one hand, in the case of holding a tablet information processing terminals in both hands, this also applies to both hands. As such, a similar effect can be achieved, and also flexibility in the inputting operation is improved. Further, by holding it firmly by one hand, flexibility in the inputting operation by the other hand increases.

While, in the above description, the case where the portable information processing terminal 1 is formed of one casing is shown as an example, the form of the portable information processing terminal 1 is not limited to the above-described form. For example, as shown in Fig. 3, the portable information processing terminal 1 may be formed of two casings including a display-side casing 1 A having the touch panel 2 on a surface and an input device-side casing 1B having a plurality of keys on a surface. The display-side casing 1A and the input device-side casing 1B are joined via a hinge (not shown). Fig. 3 shows a state where the display-side casing 1A and the input device-side casing 1B are folded back to back. As such, in the example of Fig. 3, both the touch panel 2 provided to the display-side casing 1A and the keys 3 provided to the input device-side casing 1B are located on the outside, and face opposite directions. Even with the portable information processing terminal 1 having such a configuration, the operator is able to hold it as shown in Fig. 2. It should be noted that while a terminal in which the touch panel 2 and the keys 3 face inside in a face-to-face manner in a folded state has been known, the portable information processing terminal 1 of the present invention differs from such a well-known terminal in that point.

Fig. 4 shows a state where the portable information processing terminal 1 formed of the two casings 1A and 1B, as shown in Fig. 3, is opened from a folded state. Fig. 4(A) shows the case where the portable information processing terminal 1 is laterally unfolded with a long side being the axis, and Fig. 4(B) shows the case where it is vertically unfolded with a short side being the axis, depending on the position of the hinge. Even in the case of using the portable information processing terminal 1 in an unfolded state as shown in Fig. 4, it is possible to input various kinds of directional information by performing a sequential touching operation on the keys, as described below.

It should be noted that while, in the above description, the case where the display device provided to the portable information processing terminal 1 is the touch panel 2 in which the display 21 having the touch sensor, the display device of the portable information processing terminal 1 according to the present invention may solely consist of the display 21.

Further, as shown in the block diagram of Fig. 5, the portable information processing terminal 1 includes a processor 4 (control device) which controls operation of the portable information processing terminal 1 itself, and a memory 5 and a storage device 6 which store information. The processor 4 has an interface function with the outside, in addition to processing of logical operation and numerical operation, and also has an input/output processing function. The processor 4 may include a plurality of processors. It should be noted that outputs of the keys 3 and outputs of the key touch sensor 30, which determines a touch to each of the keys 3, are input to the processor 4. Further, the processor 4 is connected with a timer 13.

Further, outputs of the touch sensor 22 of the touch panel 2 are input to the processor 4. Further, outputs of the processor 4 are output to the display 21 of the touch panel 2. However, as a variation, there is a case where only the display 21 is connected, rather than the touch panel 2 in which the touch sensor 22 is embedded as described above.

The processor 4 is also connected with the memory 5. The memory 5 stores various kinds of information such as programs 51 including an operating system and application programs executed by the processor 4, application data 52 used by the application programs, setting parameters 53 which are setting information related to execution of the programs, and image data 54 which is image information to be output to the display 21, each of which is input and output between the memory 5 and the processor 4.

The processor 4 is also connected with the storage device 6. As the contents in the memory 5 are basically eliminated when the power is off, information which should not be eliminated when the power is off is stored in the storage device 6, and is loaded to the memory 5 via the processor 4 when required. As the storage device 6, a flash memory may be also used in addition to a disk drive.

Further, the processor 4 is also connected with a communication system 7, and is connected with outside networks. Connecting methods include a wired connection and a wireless connection using electromagnetic waves or light. The portable information processing terminal 1 also includes a pointing device 8, a touch pad 9, a first acceleration sensor 10, a second acceleration sensor 11, a magnetic sensor 12, and the like which are connected with the processor 4. The configurations of these devices are not described herein.

The processor 4 detects an operating state input to the touch panel 2 or the keys 3, and performs processing according to the detected operating state. In particular, in the present embodiment, the processor 4 has a function of accepting an input of directional information representing a predetermined direction (input acceptance means), based on the operating state input to the keys 3. This function will be described in detail in the description of operation provided below. It should be noted that while the function for implementing the operation described below is realized by programs installed in the processor 4, it may be implemented by logic circuits.

[Operation]

Next, operation of the above-described portable information processing terminal 1, in particular, operation of the processor 4, will be described with reference to Figs. 6 to 20.

The processor 4 executes the program 51 while referring to the application data 52 and the setting parameters 53. As such, the processor 4 reads specified part of the image data 54, performs arithmetic processing, and outputs the result to the display 21 as display information. Then, the display 21 displays the display information input thereto.

Fig. 6 shows an exemplary state where the image data 54 is stored in the memory 5. In a physical address space of the memory 5, a logical virtual display space 100 is constructed. The size of the virtual display space 100 is generally larger than the space which can be displayed on the display 21. As image information to be displayed on the display 21, the virtual display space 100 records a character 111. The processor 4 cuts out a part to be displayed on the display 21 from the virtual display space 100, and outputs it to the display 21. The part displayed on the display 21 is called a view window 110, named after a window of a limited size for viewing a vast virtual space.

As shown in Fig. 6, the display 21 displays information of the view window 110 set on the virtual display space 100. When the view window 110 is slid with the size being fixed in the virtual display space 100, the image on the display 21 is also viewed as being slid, which corresponds to scrolling processing. Further, when the size of the view window 110 is changed, the size of the image on the display 21 is also changed, which corresponds to scaling processing. Further, when the view window 110 is rotated on the virtual display space 100, the image on the display 21 is also rotated, which corresponds to rotation processing. It should be noted the character 111 can be moved, rotated, or scaled on the virtual display space 100 while fixing the view window 110.

The processing described above is performed by the processor 4, a dedicated operational circuit (not shown) embedded therein, or the like. While it has been described that the virtual display space 100 is provided on the memory 5 in the above example, it may be on the storage device 6 or on an outside network via the communication system 7.

Next, description will be given on processing, by the processor 4 of the portable information processing terminal 1, to accept, from the touch panel 2 or the keys 3, a command to move/scroll the character 111 or the view window 110 in a predetermined direction, rotate it in a predetermined direction, or expand/reduce it. It should be noted that the processor 4 also accepts various commands such as a character input command and other operational commands, in addition to processing commands with respect to image data such as the character 111.

To the processor 4, a full-press signal or a half-press signal from the key 3, a touch signal from the key touch sensor 30 (if the key touch sensor 30 is used as a half-press detection function, the touch signal is also handled as a replacement of a half-press signal), or a touch signal from the touch sensor 22 of the touch panel 2 are output. These signals are read, when required, by the program 51 executed on the processor 4.

In the case of inputting characters through the portable information processing terminal 1, some regions are reserved on the surface of the touch panel 2 as shown in Fig. 7(A), and a character or a function of inputting a character is assigned to each of the regions (in this example, description will be exemplary given on the alphabets). Further, to each of the keys disposed on the rear side of the casing, each of the alphabets has been assigned as shown in Fig. 7 (B). Under such a setting, by touching a predetermined region of the touch panel 2 or fully pressing a predetermined key 3, a corresponding alphabet can be input.

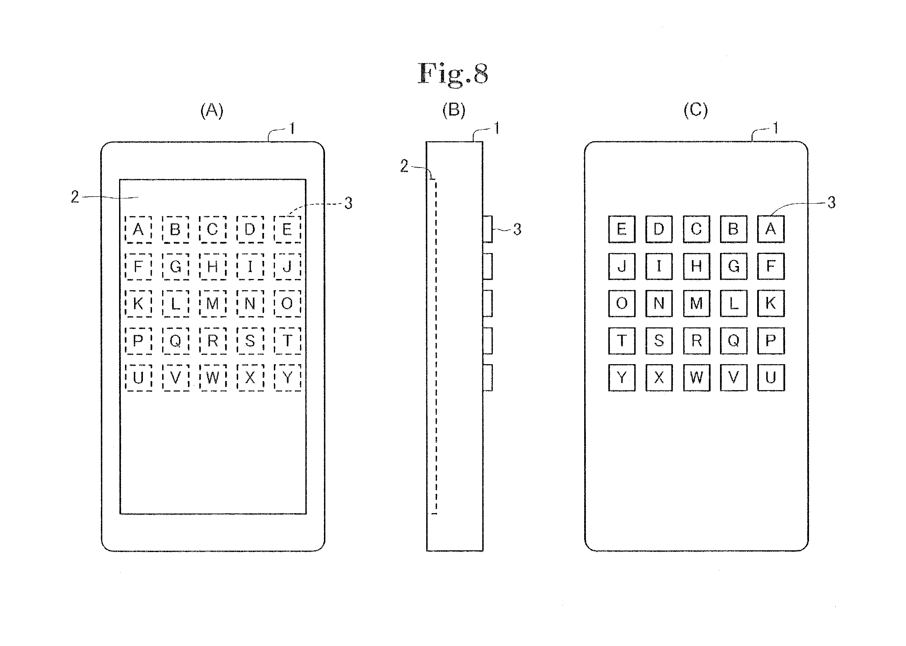

It should be noted that as shown in Fig. 8(A), in order to indicate the arrangement positions of the respective keys 3 disposed on the rear side, images showing the respective keys 3 may be displayed at the positions corresponding to the arrangement of the keys on the display 21 of the touch panel 2. Further, in order to input the common character or the common function, the input regions reserved on the screen of the touch panel 2 can be arranged in association with such images of the keys 3.

Further, in the portable information processing terminal 1 of the present embodiment, by performing a sequential touching operation on the keys 3 disposed on the rear side of the casing, it is possible to input vector information corresponding to the operation. It should be noted that a sequential touching operation means that when the finger F, for example, slides on the key touch sensor 30 provided to the key 3 or the touch sensor 22 provided to the touch panel 2 as if wiping the fog on a glass, the key touch sensor 30 or the touch sensor 22 detects the touched positions in a time series manner, thereby information of the direction and information of the distance corresponding to the movement of the touching object can be acquired as the direction and the magnitude of a vector, respectively. However, in the portable information processing terminal 1 of the present invention, it is not limited to acquisition of vector information including direction and distance by a sequential touching operation performed on the keys 3. Only information representing "direction" may be acquired.

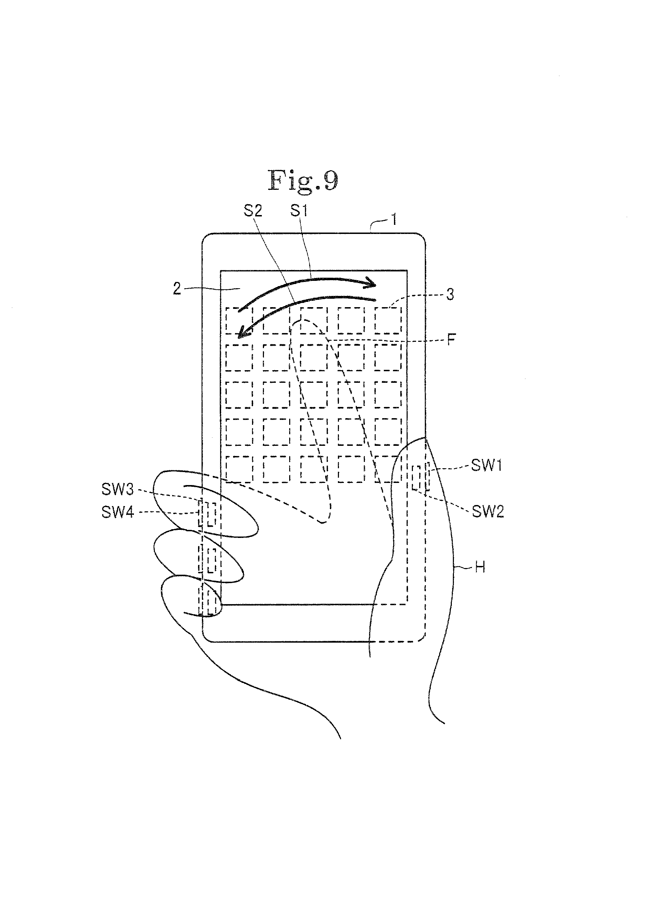

Fig. 9 shows a state where the index finger F moves from left to right or right to left on the keys 3 disposed on the rear side of the portable information processing terminal 1 being held as shown in Fig. 2. For example, when the key touch sensor 30 detects a touch in the order of a key B, a key C, and a key D (see Fig. 8), the processor 4 recognizes that it is a motion from left to right (arrow S1), while when the key touch sensor 30 detects a touch in the order of a key D, a key C, and a key B, the processor recognizes that it is a motion from right to left (arrow S2). Of course, it is possible to acquire two-dimensional vector information representing any direction and distance (in this example, corresponding to the number of touched keys 3) on a two-dimensional plane including an up and down direction and an oblique direction, in addition to a left and right direction.

While the present example shows the case where the keys 3 and the key touch sensor 30 are disposed on the rear side of the portable information processing terminal 1, this also applies to the case where the keys 3 and the key touch sensor 30s are disposed on the front side (display 21 side surface) as shown in Fig. 4, and to the touch sensor 22 disposed on the display 21.

In more detail, the key touch sensor 30 detects a touch event by a touching object at a predetermined time, and notifies the processor 4 of the event. As the arrangement form of the key touch sensors 30 has been known, positional information of a touch is recognized by the processor 4 as a positional vector based on a predetermined reference point. Further, the processor 4 recognizes a displacement vector in which a touch point is a start point and the next touch point is an end point. As such, by measuring the time interval between the touch events with use of the timer 13, it is possible to obtain a velocity vector indicating a moving velocity of the touching object from the displacement vector, and to obtain an acceleration vector from the temporal change of the velocity vector. Accordingly, in addition to the positional vector, the displacement vector, and the time interval between the touch events, the velocity vector and the acceleration vector can also be accepted as input information. These kinds of input information can also be used for selecting a function of the portable information processing terminal 1. This also applies to the touch sensor 22.

Further, with an application of a physical quantity linking to five senses of the operator, such as velocity, acceleration, and a force shown to have a close relation with the acceleration according to Newton' law, an effect of assisting an input operation of the operator can be achieved.

It should be noted that a sequential touching operation can be replaced with a sequential half-press or full-press operation performed in a time-series manner on a plurality of the keys 3. As such, with the touch detection function of the key touch sensor 30, when the finger F slides in a state of touching a plurality of the keys 3 so as to stroke the keys 3, vector information corresponding to the sliding operation can be detected. Further, even without the touch detection function of the key touch sensor 30, when the finger F slides (to sequentially perform) half-press or full-press operation on a plurality of the keys 3 arranged at known positions, vector information corresponding to such sliding (the sequence and the number of half-press operations or full-press operations) can be detected. As described above, in the portable information processing terminal 1 according to the present invention, vector information can be input by means of a sequential touching operation to a plurality of keys or a "sequential operation" such as a sequential half-press operation or a sequential full-press operation.

Further, if the keys 3 are of a software keyboard, a software keyboard operation and another two-dimensional coordinate input operation can be switched between each other.

In that case, if a switch SW 1, 2, 3, or 4 is provided on a surface of the casing near the position where the thumb, the index finger, the middle finger, the ring finger, or the little finger holding the casing locates as exemplary shown in Fig. 9, a switching operation can be performed by a small action of a finger, which provides high operability. The switch SW 1, 2, 3, or 4 is connected with the processor 4, and outputs an operation identification signal for identifying which operation is selected, to the processor 4. Based on the operation identification signal, the processor 4 performs processing of a software keyboard operation or processing of a two-dimensional coordinate input operation with respect to the input signal from the touch sensor which is the key 3. As the switch, a touch sensor or an optical sensor may be used, instead of a mechanical switch, as shown in Fig. 9 for example. This example shows an information processing terminal assumed to be held by one hand, in which the switch SW1 or 4 is provided on a side face of the casing, and the switch SW 2 or 3 is provided on the front face of the casing. On the other hand, in the case of a tablet information processing terminal, as the fingers holding it wrap around to the rear side, a switch should be provided on the rear side.

Consequently, it is possible to process a sequential touching operation by "another two-dimensional coordinate input operation" to allow it to be independent from an operation of inputting characters and the like of the keyboard. This corresponds to the relation between a touch pad and a keyboard in a personal computer. As such, an effect that software to be operated on a personal computer is able to be ported without any changes in the operability, can be achieved.

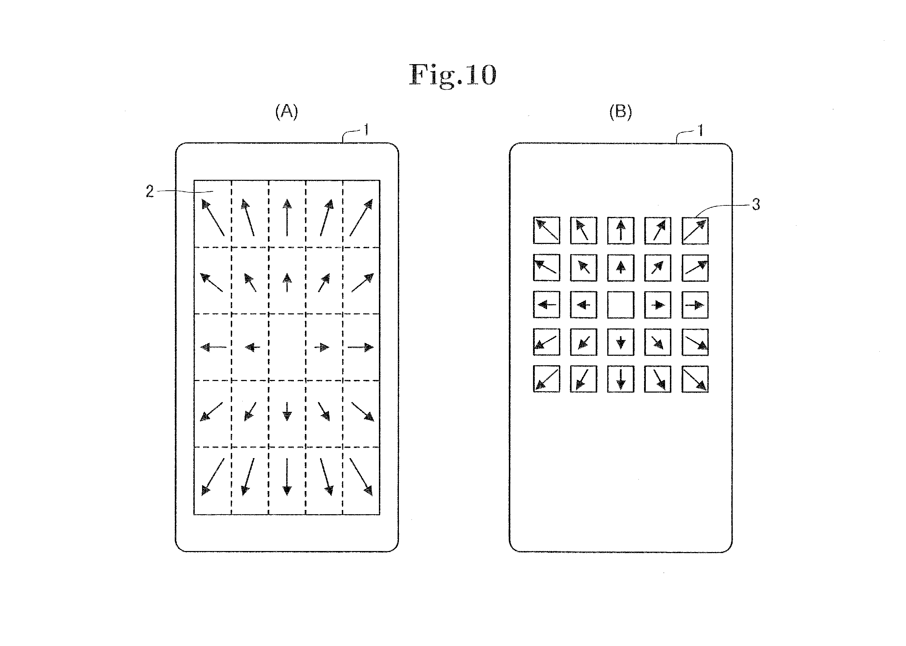

Next, an applied operation, based on the basic operation as described above, will be described. First, Fig. 10 shows an instruction method to displace/scroll a display image in the case where the keys 3 are disposed on the rear surface of the portable information processing terminal 1. When the input mode of the keys 3 is changed from a normal character input mode to a displacement/scrolling mode, for example, by a key operation, a setting of the application program, or the like, a displacement/scrolling instruction function (a function of performing display image displacement in a predetermined displacement direction and in a predetermined displacement quantity when pressed, or a function of performing a display screen scrolling in a predetermined scrolling direction and in a predetermined scrolling quantity) is assigned to each of the keys 3 as shown in Fig. 10(B). As such, a response to a full press or a half press (or a combination thereof) of a key is switched from an input of a character to an input of a displacement direction and a displacement quantity of the image or an input of a scrolling direction and a scrolling quantity of the screen. As such, vector information instructing displacement or scrolling can be input.

It should be noted that by preparing a plurality of keys which are set to have different displacement quantities and different scrolling quantities although the direction is the same, and adjusting the number of times of pressing the keys having a smaller displacement quantity or a smaller scrolling quantity, it is possible to perform slight displacement or adjust the scrolling quantity. As such, the magnitude of the vector instructing displacement or scrolling can be selected.

Further, as shown in Fig. 10(A), in order to assist an input operation, in the displacement/scrolling mode, the functional information (displacement direction and displacement quantity, or scrolling direction and scrolling quantity) of the respective keys 3 disposed on the rear surface is displayed on the locations correlated to the positions of the respective keys 3 on the display 21 of the touch panel 2. For example, as a kind of functional information, images of arrows, suggesting the direction or the quantity of displacement or scrolling, are displayed in an arrangement as if the respective keys 3 are seen through (mirror-image symmetry). It should be noted that the display method may include switching the displayed image into images of arrows, overlapping images of arrows on the original image having been displayed, or displaying images of arrows to be seen through. If a graphic display function is provided to the key top of the key 3 so as to allow the display to be switched between a character and an arrow as shown in fig. 10(B), the operability when the operator looks at the key 3 can be improved.

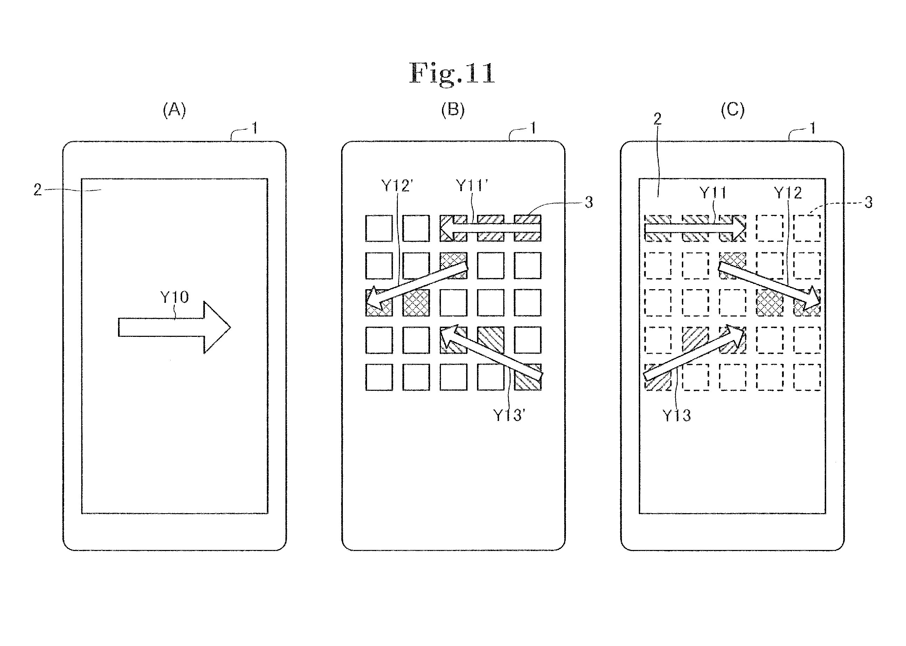

Next, Fig. 11 shows a method of instructing displacement or scrolling of a display image by means of a sequential touching operation, when the keys 3 are disposed on the rear surface of the portable information processing terminal 1. Based on vector information input through a sequential touching operation, the direction and the quantity of displacement or scrolling are instructed.

For example, when a sequential touching operation is performed on the touch sensor 22 on the front side as shown by an arrow Y10 of Fig. 11(A), an input of vector information including directional information of a horizontal direction, that is, a right direction, relative to the display surface of the touch panel 2 is accepted.

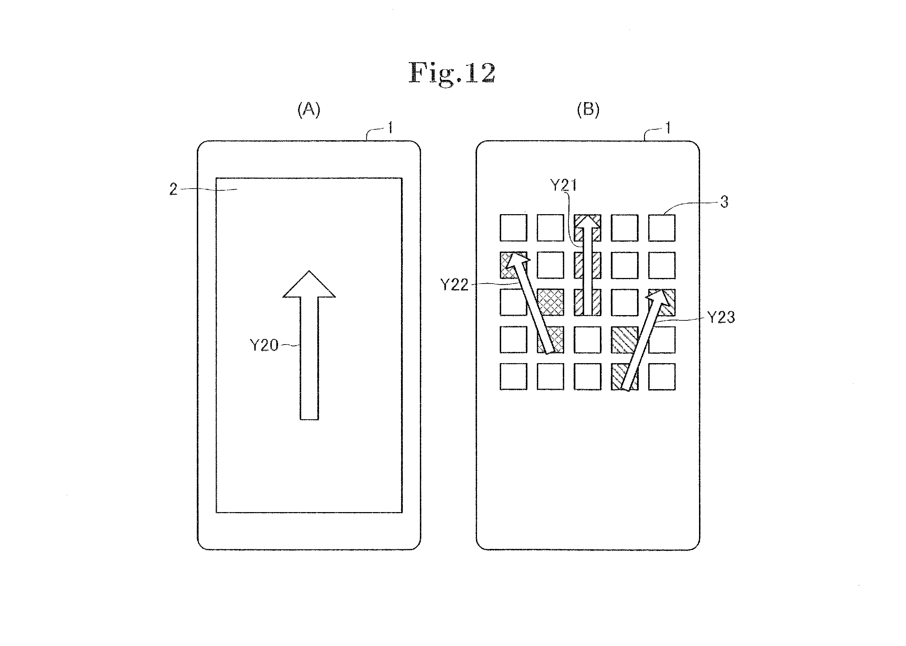

Further, when a sequential touching operation is performed on the touch sensor 22 on the front side as shown by an arrow Y20 of Fig. 12(A), an input of vector information including directional information of a vertical direction, that is, an upward direction, relative to the display screen of the touch panel 2 is accepted.

On the other hand, as shown in Fig. 11(B), with respect to the keys 3 on the rear side, when adjacent keys having a threshold distance (for example, 2 rows) or less in the vertical direction and having a threshold distance (for example, 3 columns) or more in the horizontal direction are pressed or touched within a predetermined time period (for example, within 1 second), for example, it is recognized that a command of horizontal displacement or lateral scrolling is input. Further, according to the number of keys having been pressed or touched, the quantity of horizontal displacement or lateral scrolling is determine. Accordingly, as shown by arrows Y11', Y12', and Y13' of Fig. 11(B), when a sequential touching operation is performed on several keys sequentially in a left direction, it is recognized that vector information of a left direction is input with respect to the keys 3, according to the sequence of the operated keys 3.

On the contrary, when viewed from the front side, that is, from the touch panel 2 side, the sequence of the keys 3, on which the sequential touching operation has been performed, is in a right direction relative to the display surface of the touch panel 2, that is, in mirror-image symmetry, as shown by arrows Y12, Y12, and Y13 of Fig. 11(C). In this way, when an input of a command of horizontal displacement or lateral scrolling in a horizontally right direction is recognized, processing of horizontal displacement or lateral scrolling in a right direction is performed.

Similarly, when adjacent keys having a threshold distance (for example, 2 columns) or less in the horizontal direction and having a threshold distance (for example, 3 rows) or more in the vertical direction are pressed or touched within a predetermined time period (for example, within 1 second), for example, it is recognized that a command of vertical displacement or vertical scrolling is input. Further, according to the number of keys having been pressed or touched, the quantity of vertical displacement or vertical scrolling is determined. Accordingly, as shown by arrows Y21, Y22, and Y23 of Fig. 12(B), when a sequential touching operation is performed on several keys sequentially in an upward direction, it is recognized that vector information of an upward direction is input with respect to the keys 3, according to the sequence of the operated keys 3.

While the unit of the quantity (distance unit) of displacement or scrolling is indicated by the number of keys (interval between keys) in the above example, it is possible to use a smaller distance unit by improving the resolution of the key touch sensor 30.

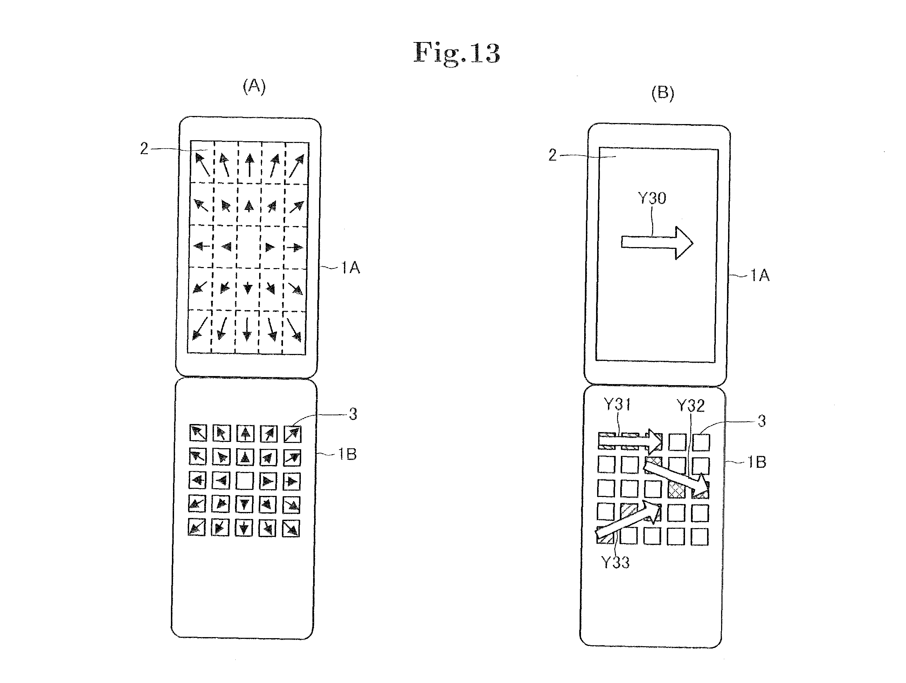

Fig. 13 shows an exemplary operation in the case where the portable information processing terminal 1 is formed of two casings 1A and 1B, and when the casings 1A and 1B are unfolded, the display 21 and the keys 3 are located on the almost same surface (facing the almost same direction), as shown in Fig. 4. Specifically, Fig. 13(A) shows an example in which a displacement/scrolling instruction function (function of performing display image displacement in a predetermined displacement direction and displacement quantity when pressed, or function of performing a display screen scrolling in a predetermined scrolling direction and scrolling quantity) is assigned to each of the keys 3. Further, Fig, 13(B) shows the case where when a sequential touching operation is performed on several keys 3 sequentially, vector information of a horizontal direction is input with respect to the keys 3, according to the sequence of the keys 3 on which the sequential touching operation has been performed, which is similar to the case of Fig. 11 described above. It should be noted that different from the above-described case where the keys 3 are provided on the rear side relative to the display 21, the direction on the display 21 and the direction on the keys 3 are not in mirror-image symmetry, as shown by an arrow Y30 and arrows Y31, Y32, and Y33 of Fig. 13(B).

As described above, in the portable information processing terminal 1, it is possible to input vector information of two orthogonal directions such as a horizontal right and left direction and a vertical up and down direction. However, by separating an input mode of a displacement/scrolling instruction and an input mode of a rotating instruction described below, if the sequence of keys 3 on which a sequential touching operation has been performed is in an oblique direction, it is also possible to input vector information of an oblique direction corresponding to such a direction.

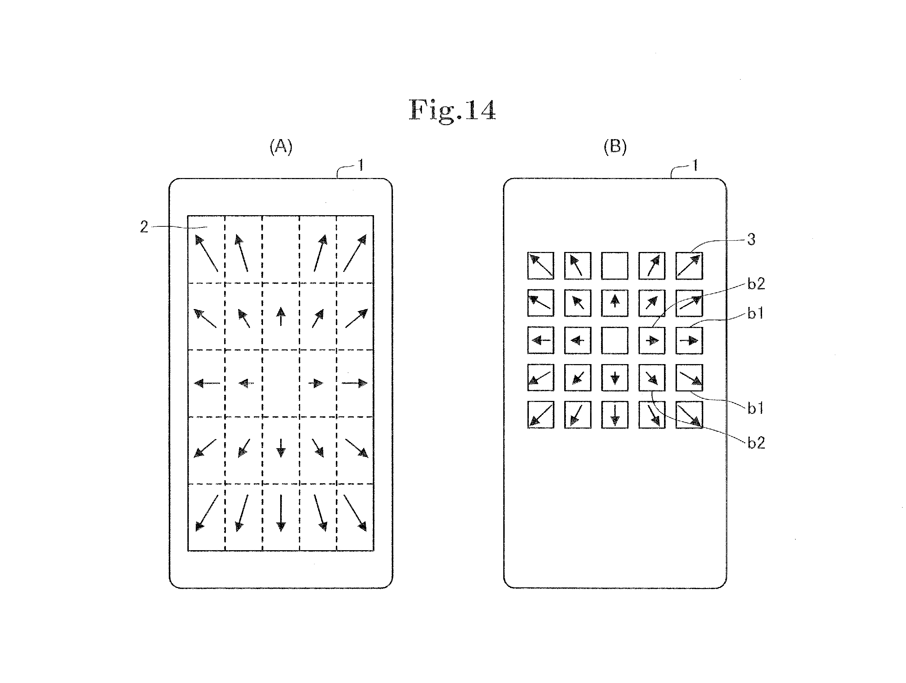

Next, Fig. 14 shows a method of instructing a rotation of a display image in the case where the keys 3 are provided on the rear surface of the portable information processing terminal 1. When the input mode of the keys 3 is changed from a normal character input mode to a rotating mode by a key operation, a setting of the application program, or the like, a rotating instruction function (function of rotating a display image or a display screen in a predetermined rotational direction and a rotational angle when pressed) is assigned to each of the keys 3 as shown in Fig. 14(B). As such, a response to a full press or a half press (or a combination thereof) of a key is switched from a character input to an input of a rotational direction and a rotational angle of an image or a screen.

An instruction of a rotation includes an "absolute angle instruction" in which reference directions have been set to the display and an image or a screen and an angle between the reference directions is instructed, and a "relative angle instruction" in which a current direction, which is an accumulation of past rotating history, is used as a reference and addition or subtraction of a rotational angle is instructed. Either of them can be selected.

When selecting, while it is possible to switch the function setting of the keys 3, it is also possible that in the arrangement of the keys 3 shown in Fig. 14(B), functions are allocated to the respective keys in such a manner that the keys located on the outer periphery (see reference sign b1) are used for a relative angle instruction and the keys located on the inner periphery (see reference sign b2) are used for an absolute angle instruction, for example.

In a relative angle instruction, by preparing a plurality of keys which are set to have different rotational angles although the rotational direction is the same, and adjusting the number of presses of the keys having a smaller rotational angle, it is possible to adjust a slight rotational angle. As such, the rotational angle can be selected.

Further, in a rotation mode to assist an input operation, the functional information (rotational direction and rotational angle) of the keys disposed on the rear surface is displayed at locations related to the positions of the respective keys 3 on the display 21 of the touch panel 2, as shown in Fig. 14(A). For example, as a kind of functional information, images of arrows suggesting the rotational direction or the rotational angle are displayed in an arrangement as if the respective keys 3 are seen through (mirror-image symmetry). It should be noted that the display method includes switching the displayed image into images of arrows, overlapping images of arrows on the original image having been displayed, or displaying images of arrows to be seen through. If a graphic display function is provided to the key top of the key 3 so as to allow the display to be switched between a character and an arrow as shown in fig. 14(B), the operability when the operator looks at the keys 3 can be improved.

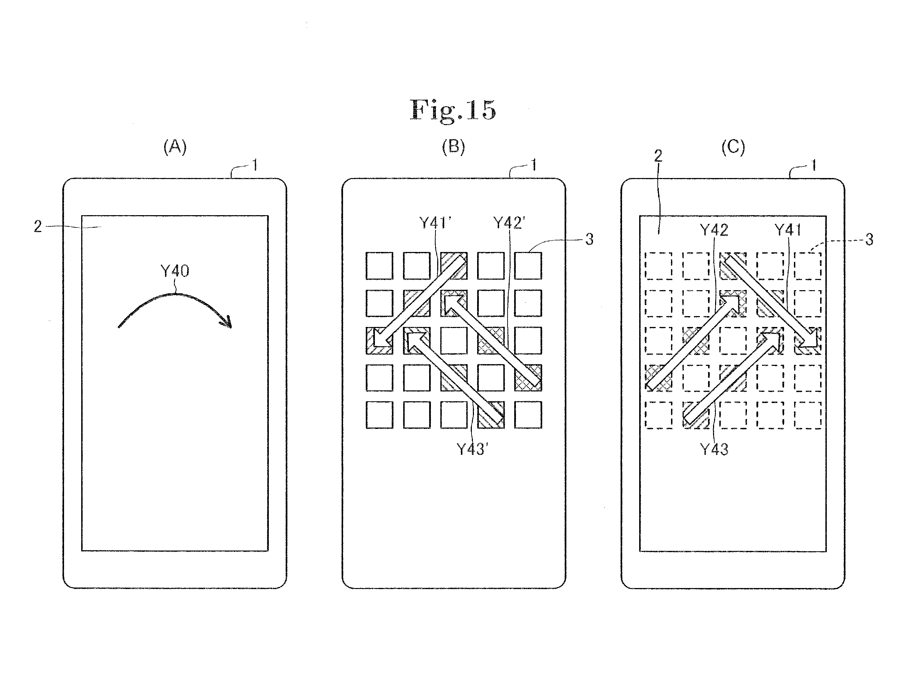

Next, Fig. 15 shows an instruction method to rotate a display image by means of a sequential touching operation, when the keys 3 are provided on the rear surface of the portable information processing terminal 1. Based on the vector information input through the sequential touching operation, the rotational direction and the rotational angle are instructed. For example, when a sequential touching operation is performed in an arc on the touch sensor 22 on the front side as shown by an arrow Y40 of Fig. 15(A), an input of rotational information in a clockwise direction, relative to the display surface of the touch panel 2, is accepted.

On the other hand, as shown in Fig. 15(B), with respect to the keys 3 on the rear side, when adjacent keys having a threshold distance (for example, 3 rows) or more in the vertical direction and having a threshold distance (for example, 3 columns) or more in the horizontal direction are pressed or touched within a predetermined time period (for example, within 1 second), for example, it is recognized that a rotation command is input, and rotation processing is performed. Accordingly, as shown by arrows Y41', Y42', and Y43' of Fig. 15(B), when a sequential touching operation is performed on several keys sequentially in an obliquely left-downward direction or an obliquely left-upward direction, it is recognized that vector information of an obliquely left-downward direction or an obliquely left-upward direction is input to the keys 3, according to the sequence of the operated keys 3. According to the number of keys having been pressed or touched, the magnitude of the vector is determined.

On the contrary, when viewed from the front side, that is, the touch panel 2 side, the sequence of the keys 3, on which the sequential touching operation has been performed, is in an obliquely right-downward direction or an obliquely right-upward direction relative to the display surface of the touch panel 2, as shown by arrows Y41, Y42, and Y43 of Fig. 15(C). In this way, when it is recognized that vector information of an obliquely right-upward direction or an obliquely right-downward direction is input, it is recognized that a rotation command of a clockwise direction is input, so that rotation processing is performed. The rotational angle is determined according to the magnitude of the vector.

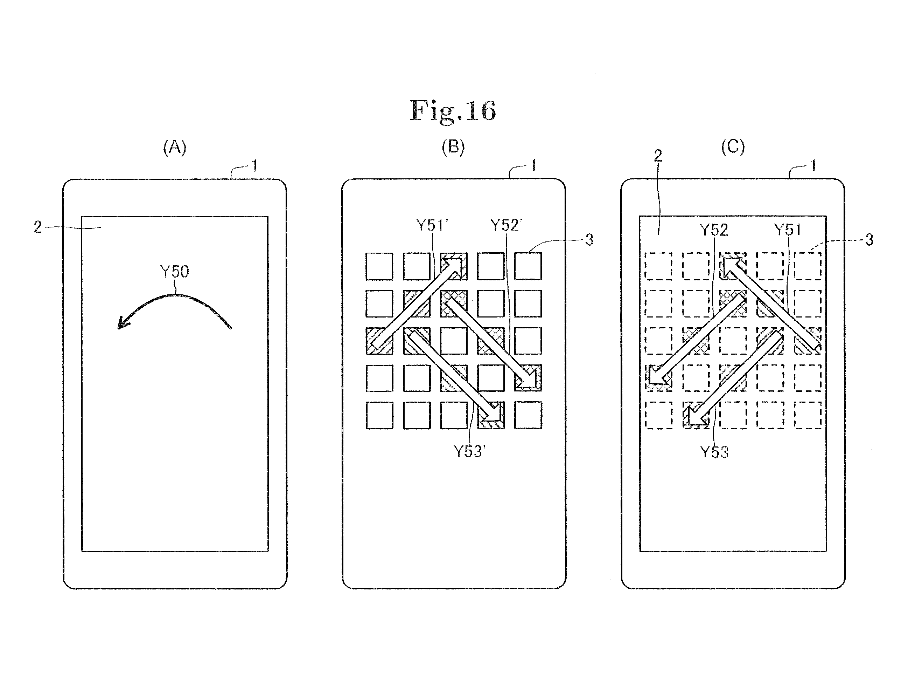

Opposite to the above-described case, a rotation command of a counter-clockwise direction is input in a similar manner. For example, when a sequential touching operation is performed in an arc on the touch sensor 22 on the front side as shown by an arrow Y50 of Fig. 16(A), an input of rotational information of a counter-clockwise direction, relative to the display surface of the touch panel 2, is accepted.

On the other hand, as shown in Fig. 16(B), with respect to the keys 3 on the rear side, when adjacent keys having a threshold distance (for example, 3 rows) or more in the vertical direction and having a threshold distance (for example, 3 columns) or more in the horizontal direction are pressed or touched within a predetermined time period (for example, within 1 second), for example, it is recognized that a rotation command is input, and rotation processing is performed. Accordingly, as shown by arrows Y51', Y52', and Y53' of Fig. 16(B), when a sequential touching operation is performed on several keys sequentially in an obliquely right-upward direction or an obliquely right-downward direction, it is recognized that vector information of an obliquely right-upward direction or an obliquely right-downward direction is input to the keys 3, according to the sequence of the operated keys 3. According to the number of keys having been pressed or touched, the magnitude of the vector is determined.

On the contrary, when viewed from the front side, that is, from the touch panel 2 side, the sequence of the keys 3, on which the sequential touching operation has been performed, is in an obliquely left-downward direction or an obliquely left-upward direction relative to the display surface of the touch panel 2, as shown by arrows Y51, Y52, and Y53 of Fig. 16(C). In this way, when it is recognized that vector information of an obliquely left-upward direction or an obliquely left-downward direction is input, it is recognized that a rotation command of a counter-clockwise direction is input, so that rotation processing is performed. The rotational angle is determined according to the magnitude of the vector.

As described above, the rotational direction may be defined according to the directional information of the vector information such that if the touching sequence to the keys seen through from the display surface is in a direction from left to right, it is a right-handed rotation while if the touching sequence is in a direction from right to left, it is a left-handed rotation. Further, the rotational angle is given by the magnitude information of the vector information, that is, the distance of the sequential touching operation.

However, settings of the rotational direction and the rotational angle with respect to the operation described above are given as an example, and the present invention is not limited to such settings. Further, the distance unit is not limited to the number of keys (interval between keys).

In particular, in the above description, a threshold is set to an operation distance in a horizontal direction or a vertical direction so as to distinguish a displacement or scrolling instruction from a rotation instruction in a sequential touching operation. As such, an operator is able to input those instructions while distinguishing them without switching the mode. On the contrary, if an input of a displacement or scrolling instruction and an input of a rotation instruction are separated, by eliminating an input condition involving a threshold, a displacement or scrolling instruction in an oblique direction can be made.

On the other hand, it is possible to input a plurality of pieces of vector information, and by using a combination thereof, to select an instruction to be processed based on the vector information. For example, it is possible to instruct a rotation by inputting two kinds of vector information sequentially so as to form a trajectory of "V", "<", ">", "^" and the like. To detect a boundary (delimiter) for a plurality of pieces of vector information, a directional change in the sequential touching operation may be used.

It should be noted that if the touch panel 2 and the keys 3 are in the same direction, they are the same except that they are not in mirror-image symmetry.

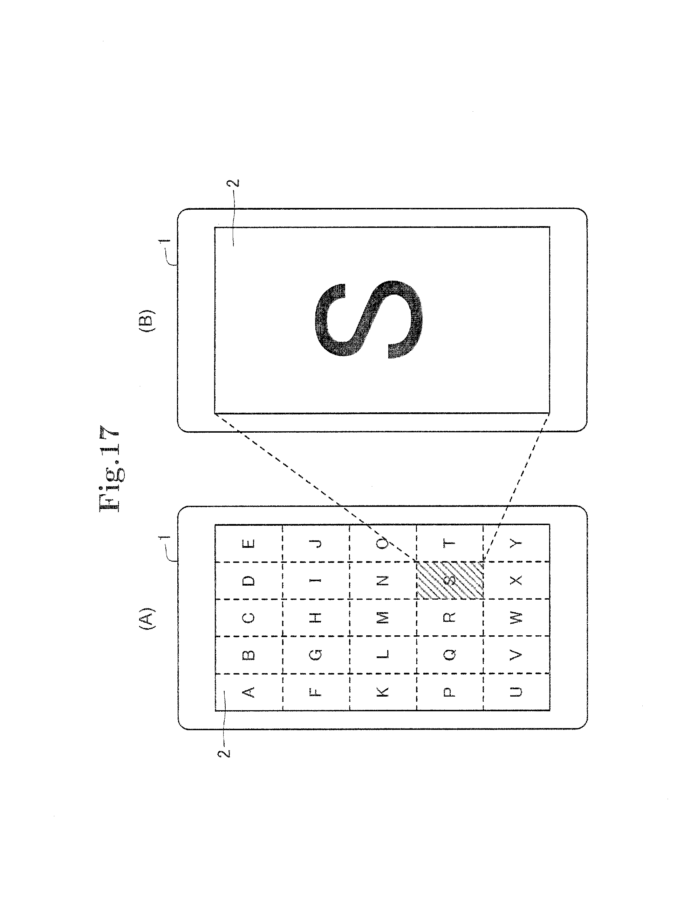

Next, Figs. 17 to 20 show a method of instructing scaling of a display image by the keys 3.

The input mode of the keys 3 is changed from a normal character input mode to a scaling mode, for example, by means of a key operation, a setting of the application program, or the like.

First, a method of scaling a display image according to a predetermined ratio will be described. Here, the display surface of the display 21 is sectioned into display blocks which correspond to the respective keys 3 on a one-to-one basis. However, the boundaries between the display blocks are not necessarily indicated clearly.

In a first scaling method using the display blocks, when a particular key 3 is fully pressed, a display block corresponding to the position of the key is selected, as shown in Fig. 17(A). Then, by performing a sequential touching operation (not shown) on some keys 3, expansion or reduction is selected. Regarding the range of the image, the selected display block and a predetermined display range, that is, the entire display surface for example, are associated, and the ratio of expansion or reduction is given as a ratio of the selected display block to the predetermined display range. As an example, Fig. 17(B) shows the case where a selected display block ("character S") is expanded up to the maximum range capable of being displayed on the display 21.

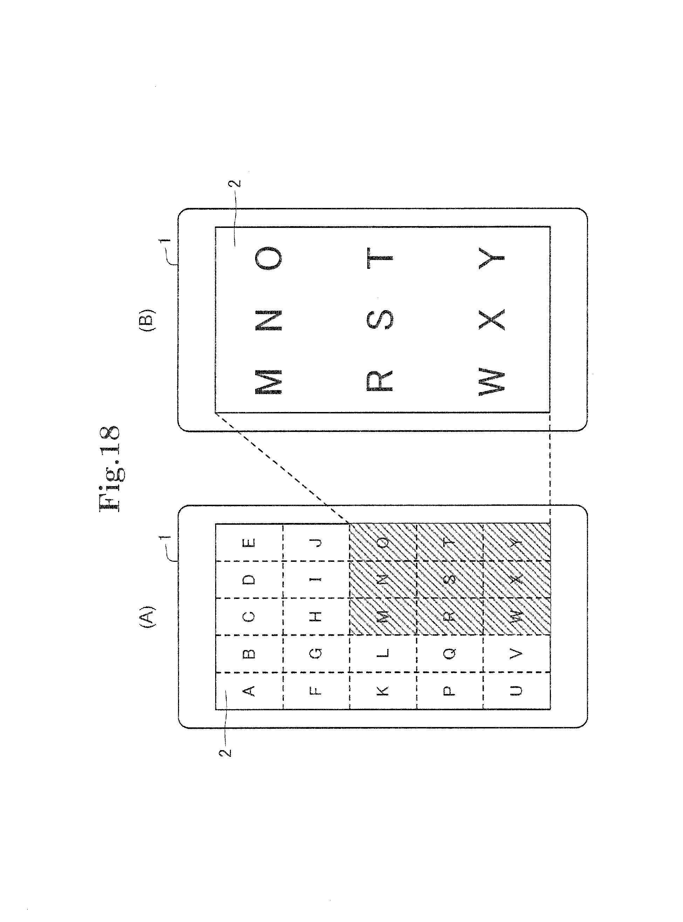

In a second method of scaling using the display blocks, when a particular key 3 is fully pressed, a display block corresponding to the key is selected. Then, by performing a sequential touching operation (not shown) on some keys 3, expansion or reduction is selected. However, the second method is different from the first method in that regarding the image range, a group of display blocks consisting of a plurality of display blocks including the selected display block (in this example, 9 blocks including S) is associated with a predetermined display range (in this example, the entire display surface) as shown in Fig. 18(A), and the ratio of expansion or reduction is given as a ratio of the group of display blocks to the predetermined display range.

Next, a method of selecting expansion or reduction and inputting the ratio thereof, by means of vector information including the direction and the magnitude obtained through a sequential touching operation, will be shown.

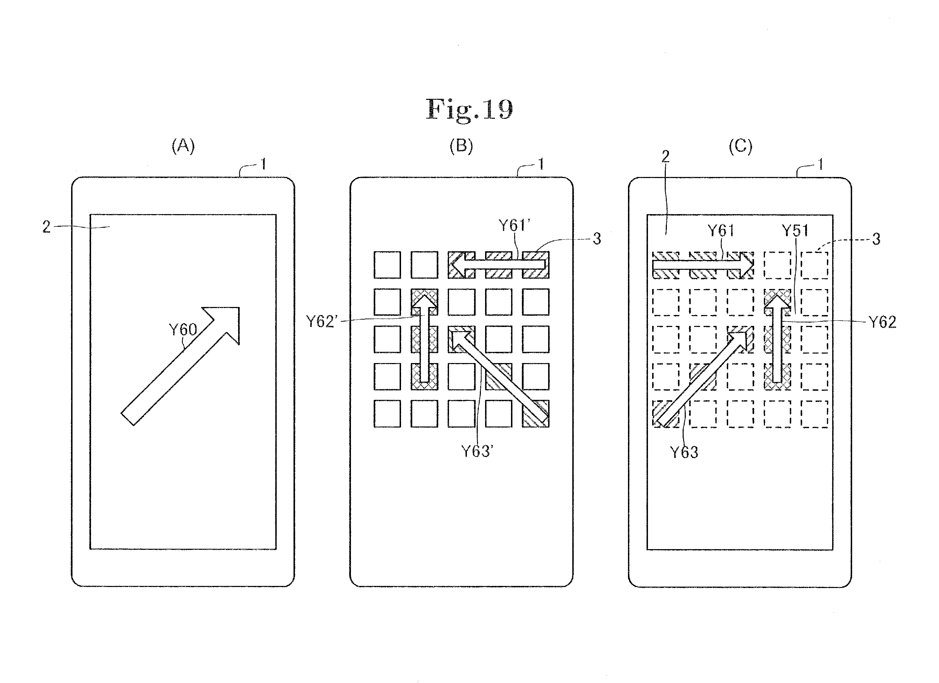

Fig. 19 shows a method of instructing expansion of a display image by means of a sequential touching operation in the case where the keys 3 are disposed on the rear surface of the portable information processing terminal 1. Based on the vector information input in the sequential touching operation, expansion is instructed.

For example, as shown by an arrow Y60 of Fig. 19(A), when a sequential touching operation in an obliquely right upward direction is performed on the touch sensor 22 of the front side, an input of vector information in a right upward direction relative to the display surface of the touch panel 2 is accepted.

Further, as shown in Fig. 19(B), to a plurality of keys 3 on the rear side, if adjacent keys which are adjacent in a left direction or upward direction are pressed or touched within a predetermined time period (e.g., within 1 second), for example, it is recognized that an expansion instruction is input.

As such, as shown by arrows Y61', Y62', and Y63' of Fig. 19(B), when some keys 3 are operated sequentially in a left direction, an upward direction, or an obliquely left-upward direction, it is recognized that directional information of a vector of a left direction, an upward direction, or an obliquely left-upward direction is input, according to the sequence of the operated keys 3. Further, the magnitude information of the vector is input according to the number of keys pressed or touched. In this case, if viewed from the front side, that is, the touch panel 2 side, as shown by arrows Y61, Y62, and Y63 of Fig. 19(C), the sequence of the keys 3, on which the sequential touching operation has been performed, is in a right direction, an upward direction, or an obliquely right-upward direction along the display surface of the touch panel 2, that is, in mirror-image symmetry, which sensuously conforms to the arrow Y60 direction shown in Fig. 19(A).

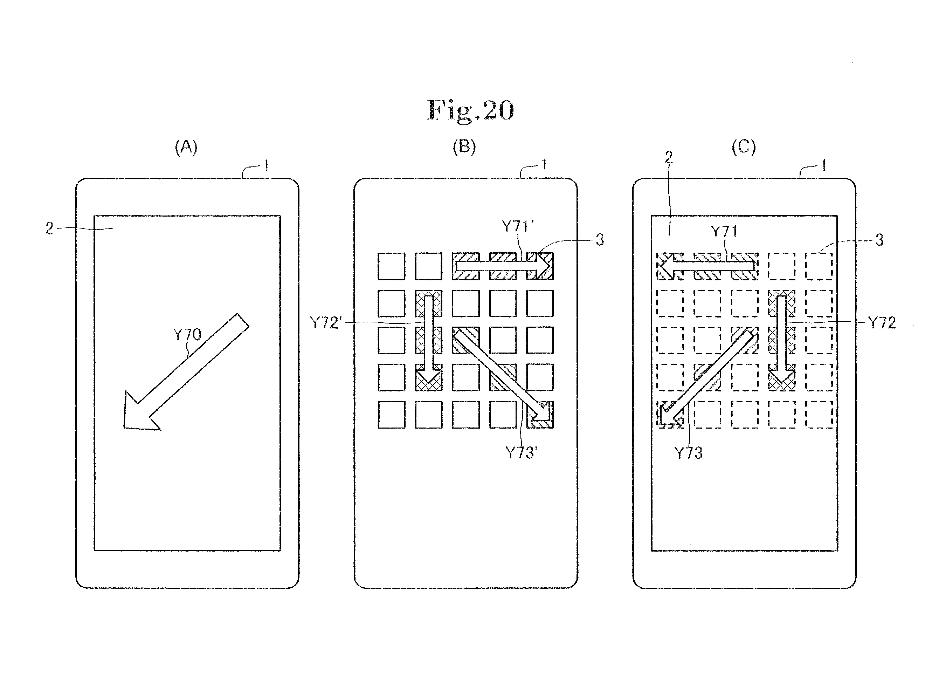

On the other hand, when a reduction command is input, the processing is opposite to the above description. For example, as shown by an arrow Y70 of Fig. 20(A), when a sequential touching operation is performed in an obliquely left-downward direction on the touch sensor 22 on the front side, an input of vector information of an obliquely left-downward direction relative to the display surface of the touch panel 2 is accepted.

Further, as shown in Fig. 20(B), to a plurality of keys 3 on the rear side, if adjacent keys which are adjacent in a right direction or a downward direction are pressed or touched within a predetermined time period (e.g., within 1 second), for example, it is recognized that a reduction command is input.

As such, as shown by arrows Y71', Y72', and Y73' of Fig. 20(B), when some keys 3 are operated sequentially in a right direction, a downward direction, or an obliquely right-downward direction, it is recognized that directional information of a vector of a right direction, a downward direction, or an obliquely right-downward direction is input, according to the sequence of the operated keys 3. Further, the magnitude information of the vector is input according to the number of keys pressed or touched. In this case, if viewed from the front side, that is, the touch panel 2 side, as shown by arrows Y71, Y72, and Y73 of Fig. 20(C), the sequence of the keys 3, on which the sequential touching operation has been performed, is in a left direction, a downward direction, or an obliquely left-downward direction along the display surface of the touch panel 2, that is, in mirror-image symmetry, which sensuously conforms to the arrow Y70 direction shown in Fig. 20(A).

By inputting the ratio of expansion or reduction according to these procedures, and applying it to a predetermined image or a display range, that is, the entire display screen, a display block, or a group of display blocks, for example, it is possible to provide a scaling instruction of any ratio.

It should be noted that more effective scaling can be performed by combining with a displacement of a predetermined display range to another region according to the input vector information, as described with reference to Figs. 10 to 13.

Further, if the touch panel 2 and the keys 3 are in the same direction, they are the same except that they are not in mirror-image symmetry.

As described above, even in the case where the size of a portable information processing terminal is reduced, the size of an input device is increased, and keys are arranged on the rear side of a display surface in order to realize a larger display, the keys on the rear surface can maintain input operability which is similar to that of a touch panel. As it is possible to solve an inconvenience that a display is covered with a hand or fingers when the touch panel is used, operability can be improved while maintaining visibility. Further, it is possible to operate a portable information processing terminal while holding it by one hand, so that operability can be further improved. Moreover, power consumption can be reduced because a touch sensor of a touch panel is not used.

SECOND EXEMPLARY EMBODIMENT

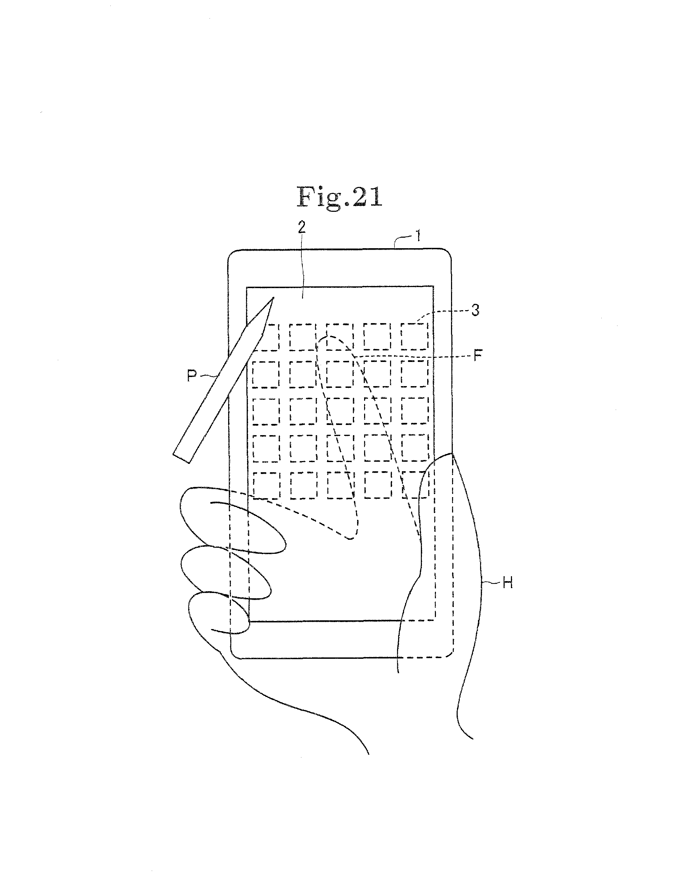

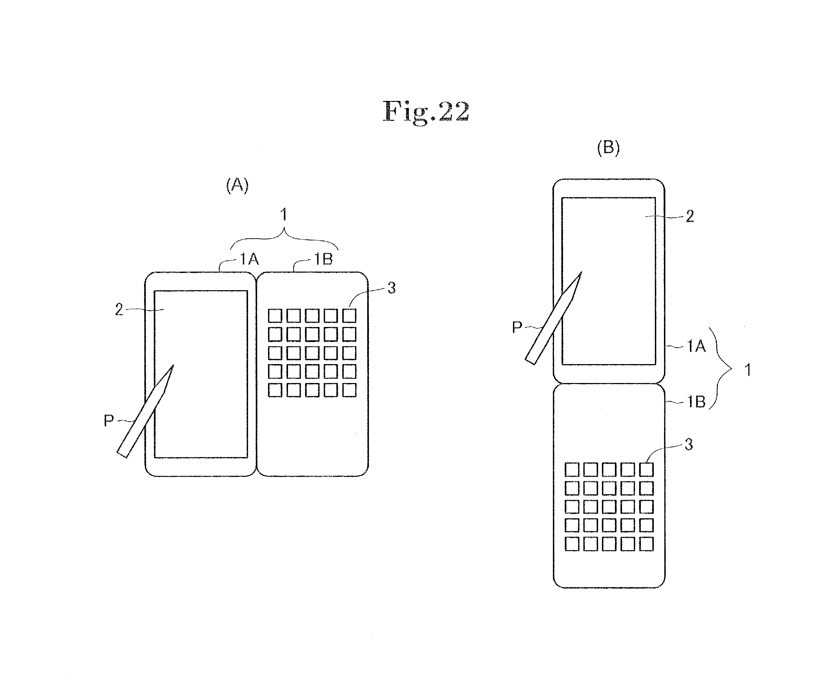

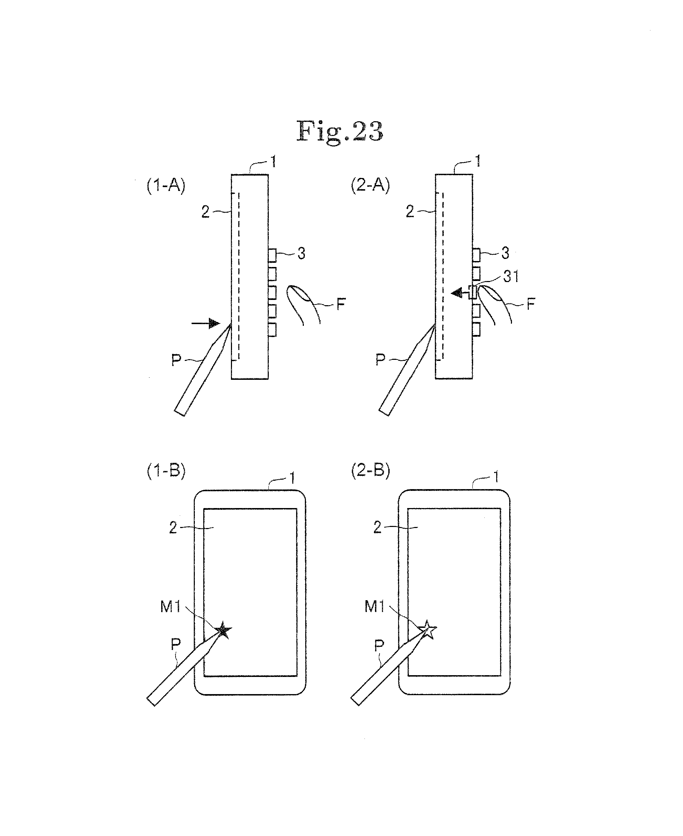

A second exemplary embodiment of the present invention will be described with reference to Figs. 21 to 34. Figs. 21 and 22 are illustrations showing a state of using a portable information processing terminal according to the present embodiment. Figs. 23 to 34 are illustrations for explaining a state of inputting information in the portable information processing terminal.

[Configuration]

The portable information processing terminal I according to the present invention has an almost similar configuration to that described in the first exemplary embodiment, and also has the following functions. It should be noted that the portable information processing terminal 1 of the present invention may have, or may not have, the functions of the above-described first exemplary embodiment and the functions of other exemplary embodiments described below.

Fig. 21 shows a state where an operator holds the portable information processing terminal 1, configured as described above, in his/her hand H and operates it. As shown in Fig. 21, when the operator holds it in a manner that the touch panel 2 is in front and the keys 3 are located on the rear surface, the hand H of the operator is positioned on the rear side of the portable information processing terminal 1, and a finger F (index finger) of the operator is positioned on the keys 3 on the rear side. Thereby, for the operator, it is possible to prevent the visibility from being impaired by the hand H and the finger F covering the touch panel 2 including the display 21. And the operator is able to easily operate the keys 3 on the rear side by the finger F.

Further, to the touch panel 2 of the portable information processing terminal 1, the operator H is able to perform inputting by a touching operation using a stylus pen P or a finger. For example, when a predetermined position on the touch panel 2 is touched with the stylus pen P, the portable information processing terminal 1 detects the positional information. Further, when the stylus pen P is displaced in a sliding manner while touching the touch panel 2, the portable information processing terminal 1 detects vector information of the displacement direction.

While Fig. 21 shows the case where the operator holds the portable information processing terminal I by one hand, in the case of holding a tablet information processing terminal in both hands (not operating the touch panel 2), this applies to both hands. In that case, a similar effect can be achieved, and further, flexibility in an inputting operation is improved so that right and left hands can be assigned different operations each other, for example. Further, by holding it firmly by one hand, the flexibility in the inputting operation by the other hand increases.

While, in the above description, the case where the portable information processing terminal 1 is formed of one casing has been shown as an example, the form of the portable information processing terminal 1 is not limited to the above-described form. For example, as shown in Fig. 22, the portable information processing terminal. 1 may be formed of two casings including a display-side casing 1A having the touch panel 2 on a surface and an input device-side casing 1B having a plurality of keys on a surface, which are joined via a hinge (not shown). Fig. 22(A) shows the case where the portable information processing terminal 1 is laterally unfolded with a long side being the axis, and Fig. 22(B) shows the case where it is vertically unfolded with a short side being the axis, depending on the position of the hinge. Further, as shown in Fig. 21, the portable information processing terminal 1 may be used in a state where the display-side casing 1A and the input device-side casing 1B are folded back to back.

The processor 4 installed in the portable information processing terminal 1 detects an operating state input to the touch panel 2 or the keys 3, and performs processing according to the detected operating state. In particular, in the present embodiment, the processor 4 has a function of accepting a predetermined input (input acceptance means) according to a combination of a touching operation state input to the touch panel 2 and an operation state input to the keys. This function will be described in detail in the description of operation provided below. It should be noted that while the function for implementing the operation described below is realized by programs installed in the processor 4, it may be also implemented by logic circuits.

[Operation]

Next, the operation of the portable information processing terminal 1 described above, in particular, the operation of the processor 4, will be described with reference to Figs. 23 to 34.

The processor 4 executes the program 51 while referring to the application data 52 and the setting parameters 53 to thereby read specified part of the image data 54, perform arithmetic processing, and output the result to the display 21 as display information. Then, the display 21 displays the display information input thereto.

Then, as described with reference to Fig. 6, the processor 4 records, in the logical virtual display space 100 constructed in a physical address space of the memory 5, the character 111 as image information which should be displayed on the display 21, and outputs the view window 110 which is a part that the display 21 should be displays, from the virtual display space 100 to the display 21. In the virtual display space 100, the processor 4 may slide the view window 110 and the character 111, for example, to perform scrolling processing, perform scaling processing by changing the size, and perform rotation processing.

Here, description will be given on processing, performed by the processor 4 of the portable information processing terminal 1, to accept, from the touch panel 2 and the keys 3, an instruction to displace the above-described character 111 or the like in a predetermined direction, to scroll the entire screen, to rotate in a predetermined direction, and to expand or reduce. It should be noted that the processor 4 accepts not only a processing instruction with respect to image data such as the character 111, but also various instructions including a character of letter input instruction and other operational instructions.

First, a method of inputting a given point (position: coordinate) on the touch panel 2 using the touch panel 2 and the keys 3, in the portable information processing terminal 1, will be described. This method is also applied to an instruction to select a character displayed at the input position.

Fig. 23 is an illustration for explaining a method of inputting a point (coordinate) on the touch panel 2 in the case where the touch panel 2 and the keys 3 are provided on the opposite surfaces of the casing of the portable information processing terminal 1 each other.

First, as shown in Fig. 23(1-A) and Fig. 23 (1-B), when an arbitrary point on the touch sensor 22 of the touch panel 2 is specified with the stylus pen P or a finger (temporary position input), a provisionally determined icon M1 is displayed on the specified position on the display 21. Then, as shown in Fig. 23(2-A) and Fig. 23(2-B), when a predetermined key 31 on the rear side is half-pressed while keeping the specified state of the point M1 with the stylus pen P, a position input of the point where the provisionally determined icon M1 is displayed (temporary position input), is fixed. As such, the provisionally determined icon M1 (filled star) is changed to a determined icon M1 (outlined star), and information specifying the position of such a point is accepted as input positional information.

As described above, when inputting an arbitrary point using the touch panel 2, as the point specified on the touch panel 2 is fixed by half-pressing the key 31, even if a position has erroneously input with the stylus pen P, the position can be input repeatedly until it is fixed, whereby the operability can be improved. It should be noted that a point input on the touch panel 2 may be fixed by full-pressing the key 31.

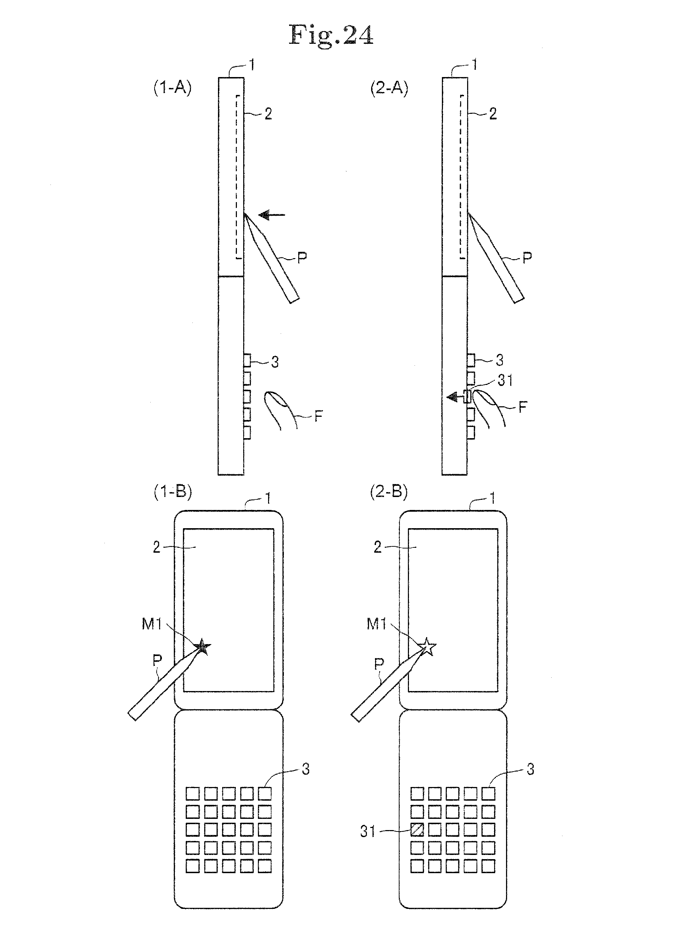

Fig. 24 shows the case where the portable information processing terminal 1 is of a folding type and the touch panel 2 and the keys 3 are arranged on the same surface when unfolded. Similar to the above, even in the portable information processing terminal 1 of such a configuration, when inputting any point with use of the touch panel 2, a point M1 specified on the touch panel 2 is fixed when the key 31 is half-pressed or full-pressed.

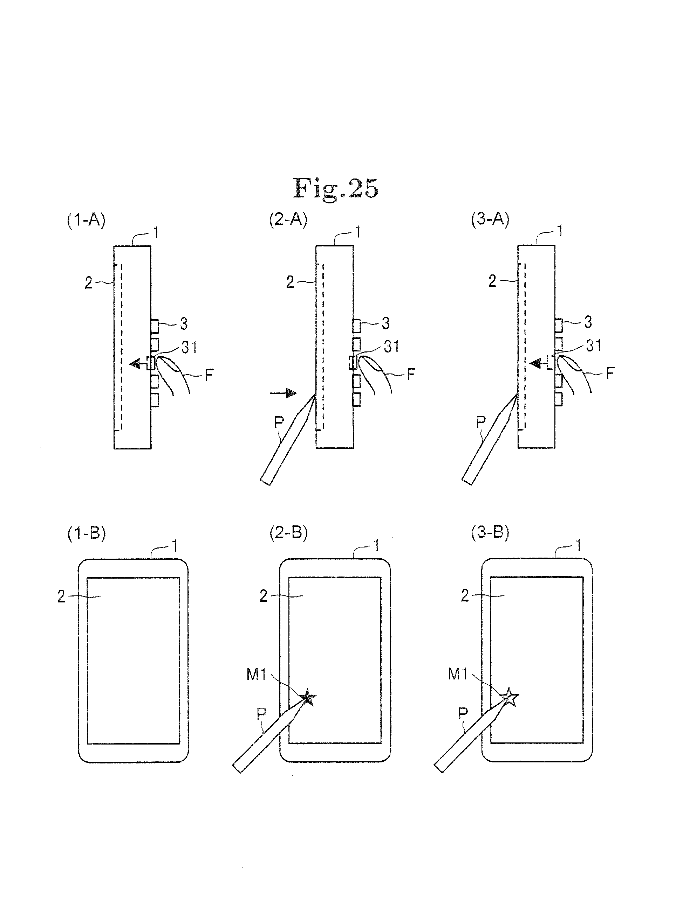

Next, Fig. 25 is an illustration for explaining another method of inputting a point (coordinate) on the touch panel 2 in the case where the touch panel 2 and the keys 3 are provided on the opposite surfaces of the casing of the portable information processing terminal 1.

First, as shown in Fig. 25(1-A) and Fig. 25(1-B), when a predetermined key 31 on the rear side is half-pressed, the touch sensor 22 of the touch panel 2 is activated. Then, while keeping the half-pressed state of the key 31 when an arbitrary point on the touch sensor 22 of the touch panel 2 is specified with the stylus pen P or a finger (temporary position input) as shown in Fig. 25(2-A) and Fig. 25(2-B), a provisionally determined icon M1 is displayed on the specified position on the display 21.

Next, as shown in Fig. 25(3-A) and Fig. 25(3-B), when the predetermined key 31 on the rear side is full-pressed while keeping the specified state of the point M1 with the stylus pen P, a position input of the point, where the provisionally determine icon M1 is displayed (temporary position input), is fixed. As such, the provisionally determined icon M1 (filled star) is changed to a determined icon M1 (outlined star), and information specifying the position of such a point is accepted as input positional information.

As described above, as the touch sensor 22 is activated by half-pressing the key 31, it is possible to reduce power consumption until that time. Further, when inputting a point using the touch sensor 22, as the point specified on the touch panel 2 is fixed when the keys 31 is full-pressed, even if a position has been erroneously input with the stylus pen P, the position can be input repeatedly until it is fixed, whereby the operability can be improved.

Further, by selecting the key 31 from the keys 3, it is possible to switch input information associated with the positional information of the key 31 (e.g., menu), or expand the display region associated with the positional information of the key 31 to thereby assist the input with the stylus pen P.

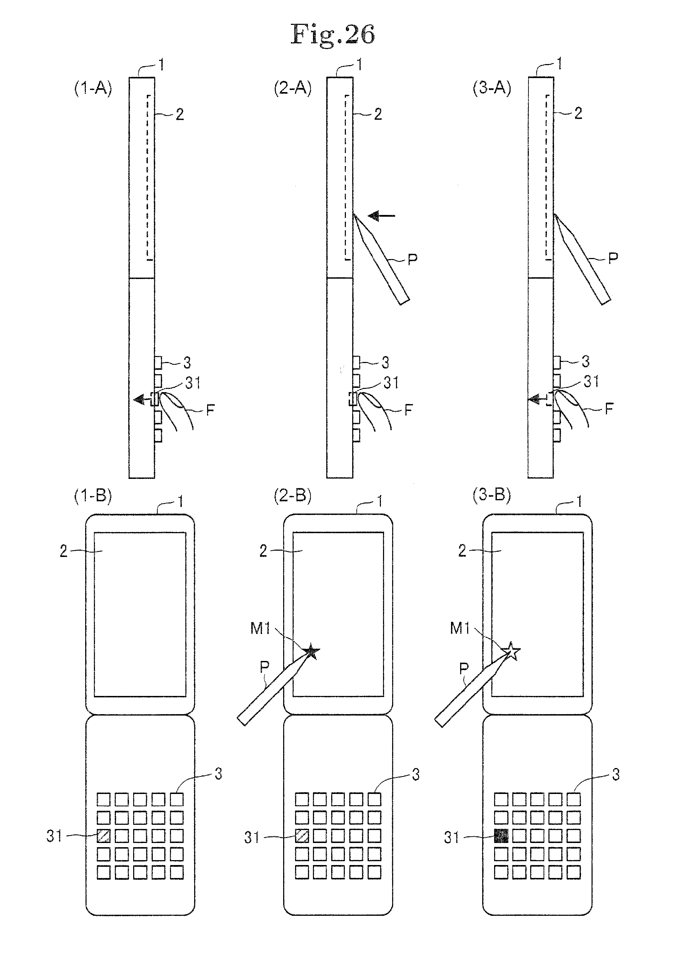

Fig. 26 shows the case where the portable information processing terminal 1 is of a folding type and the touch panel 2 and the keys 3 are arranged on the same surface when unfolded. Similar to the above, even in the portable information processing terminal 1 of such a configuration, the touch sensor 22 of the touch panel 2 is activated by half-pressing the predetermined key 31, and then, when inputting any point with use of the touch panel 2, a point M1 specified on the touch panel 2 is fixed when the key 31 is full-pressed.

Next, description will be given on a method of inputting arbitrary two points on the touch panel 2 utilizing the operation of inputting one point on the touch panel 2 as described above, thereby to input vector information including a direction linking such two points and a distance thereof.

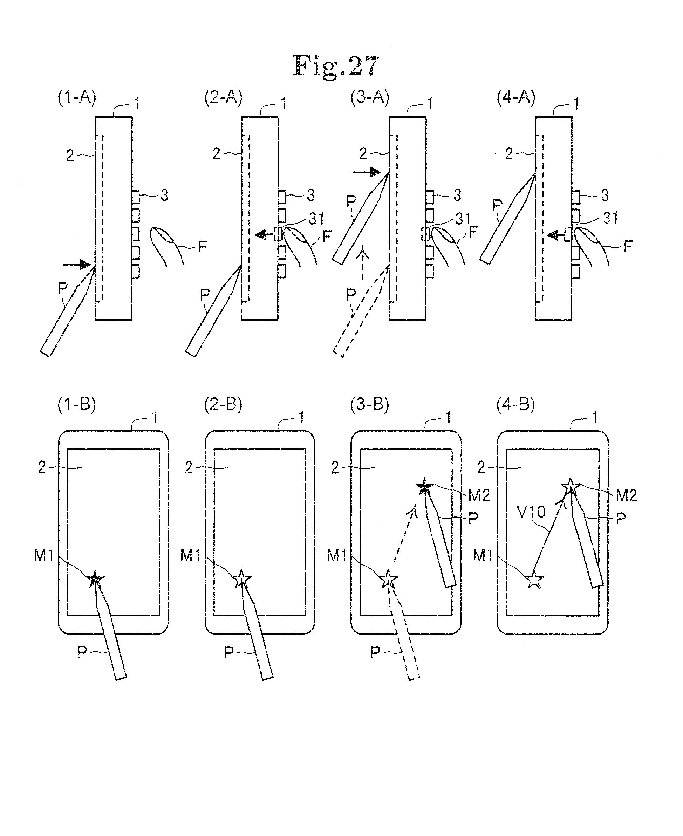

Fig. 27 shows a first method of inputting vector information on the touch panel 2 in the case where the touch panel 2 and the keys 3 are provided on the opposite surfaces of the casing of the portable information processing terminal 1.

First, as shown in Fig. 27(1-A) and Fig. 27(1-B), when an arbitrary point on the touch sensor 22 of the touch panel 2 is specified with the stylus pen P or a finger (first temporary position input), a first provisionally determined icon M1 is displayed on the specified position on the display 21. Then, as shown in Fig. 27(2-A) and Fig. 27(2-B), when half-pressing a predetermined key 31 on the rear side while keeping the specified state of the point M1 with the stylus pen P, a position input of the point, where the first provisionally determined icon M1 is displayed (first temporary position input), is fixed. As such, the provisionally determined icon M1 (filled star) is changed to a determined icon M1 (outlined star), and information specifying the position of the first point M1 is accepted as first positional information. It should be noted that when the half-pressing of the key 31 on the rear side is canceled, the input acceptance of the first point M1 is released, whereby the state returns to the initial state.

Next, while keeping the half-pressed state of the particular key 31 on the rear side, a second arbitrary point on the touch sensor 22 is specified with the stylus pen P or a finger (second temporary position input). For example, as shown by the dotted lines in Fig. 27(3-A) and Fig. 27(3-B), the position on the touch panel 2 touched with the stylus pen P is moved. Thereby, a second provisionally determined icon M2 is displayed at the specified position on the display 21.

Then, as shown in Fig. 27(4-A) and Fig. 27(4-B), when full-pressing the half-pressed key 31 on the rear side while keeping the specified state of the point M2 with the stylus pen P, a position input of the point, where the second provisionally determined icon M1 is displayed (second temporary position input), is fixed. As such, the second provisionally determined icon M2 (filled star) is changed to a second determined icon M2 (outlined star), and information specifying the position of the second point M2 is accepted as second positional information.

Thereby, as shown in Fig. 27(4-A) and Fig. 27(4-B), an input of vector information V10, in which the first point M1 accepted as the first positional information is the start point and the second point M2 accepted as the second positional information is the end point, is completed, and is accepted by the processor 4.

As described above, an input of the first point M1 on the touch sensor 22 is fixed by half-pressing a particular key 31, and the state is changed to a state of waiting for an input of a second point. Then, the second point is fixed by full-pressing the half-pressed key 31. As such, even if the first point and the second point are erroneously input, the positions can be input repeatedly until they are fixed, whereby the operability can be improved. For example, even after the predetermined key 31 is half-pressed and the first point M1 is fixed, if the pressing of the key 31 is released before full-pressing the key 1 to fix the second point M2, the processor 4 operates to invalidate the position input of the first point M1 and the second point M2.

While, in the above-description, the first point M1 and the second point M2 are fixed by pressing the same key 31, they may be fixed by pressing (half-pressing or full-pressing) different keys 3, respectively.

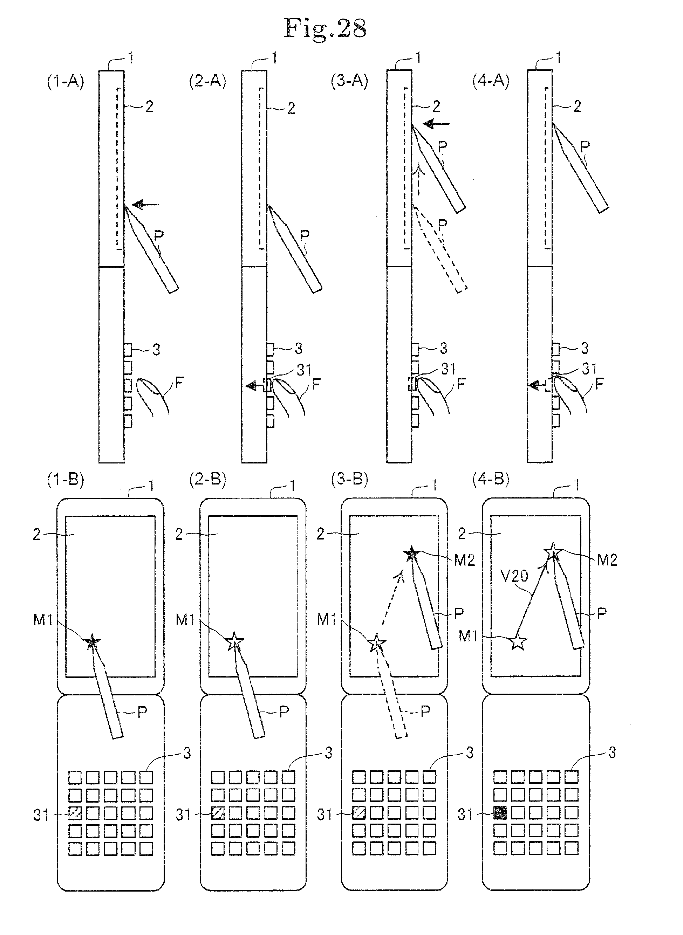

Fig. 28 shows the case where the portable information processing terminal 1 is of a folding type and the touch panel 2 and the keys 3 are arranged on the same surface when unfolded. Similar to the above, even in the portable information processing terminal I of such a configuration, first, the first point M1 is specified and a predetermined key 31 is half-pressed to fix the first point M1, and then the second point M2 is specified and the key 31 is full-pressed to fix the second point M2. Thereby, it is possible to input vector information V20 in which the first point M1 serves as the start point and the second point M2 serves as the end point.

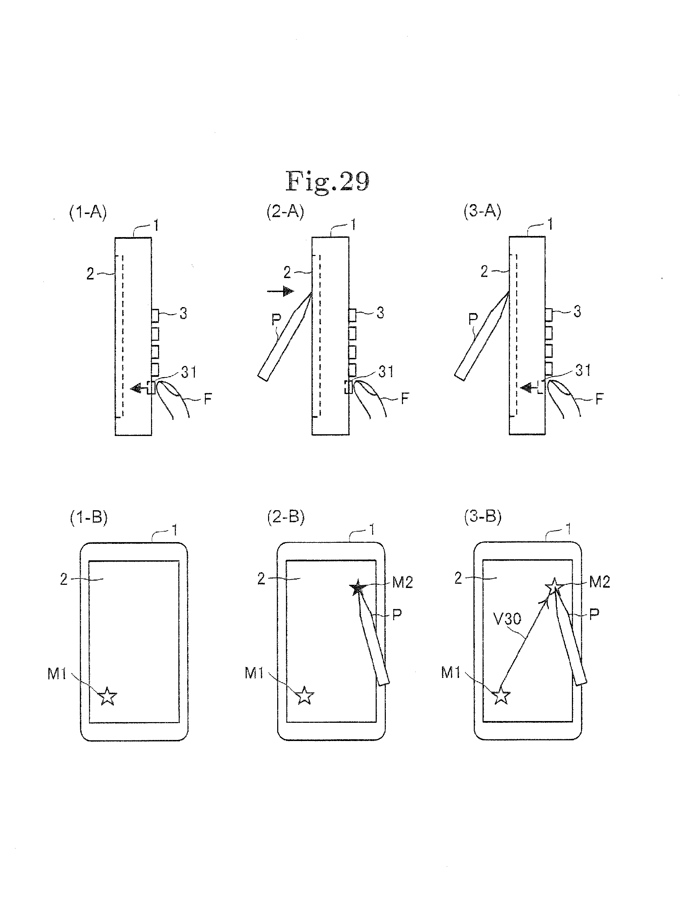

Next, Fig. 29 shows a second method of inputting vector information on the touch panel 2 in the case where the touch panel 2 and the keys 3 are provided on the opposite surfaces of the casing of the portable information processing terminal 1.

First, as shown in Fig. 29(1-A) and Fig. 29(1-B), when an arbitrary key 31 on the rear side is half-pressed, the touch sensor 22 of the touch panel 2 is activated. At the same time, a reference icon M1 is displayed as a first point at the position corresponding to the half-pressed key 31 on the display 21 of the touch panel 2, and the position of the reference icon M 1 is fixed as a first point M1. Then, an input of a second point is waited. It should be noted that if the half-pressing of the key 31 on the rear side is canceled, the fixing of the first point M1 is released, and the state returns to the initial state.

It should be noted that each of the keys 3 on the rear side are associated with the respective regions, formed by dividing the display surface of the touch panel 2 into a plurality of regions, corresponding to the positions of the keys 3. This means that if the keys 3 are arranged in a matrix on the rear side of the touch panel 2, the display surface of the touch panel 2 are divided and set to be a matrix having the same numbers as that of the arrangement of the keys 3. Then, when a key 3 positioned at a lower right, in a state of facing the surface on which the key 3 is formed, is half-pressed, a point within the corresponding lower left region on the touch panel 2, which is the opposite surface thereof, is fixed as a first point M1.

Then, an arbitrary point on the touch sensor 22 of the touch panel 2 is specified with the stylus pen P or a finger as shown in Fig. 29(2-A) and Fig. 29(2-B), while keeping the half-pressed state of the key 31 on the rear side as described above (second temporary position input). This means that a second point M2 is specified. The second point M2 is the end point of vector information to be input, where the first point M1, which is the reference icon M1, is the start point of the vector information. Thereby, a provisionally determined icon M2 is displayed on the display 21.

Further, as shown in Fig. 29(3-A) and Fig. 29(3-B), when full-pressing the half-pressed key 31 on the rear side while keeping the specified state of the second point M2 with the stylus pen P, the second point M2 is fixed. As such, the provisionally determined icon M2 (filled star) is changed to a determined icon M2 (outlined star), and information specifying the position of the point M2 is accepted as second positional information. Thereby, an input of vector information V30 is completed, in which the first point M1 fixed by half-pressing the key 31 on the rear side is the start point and the second point M2 input by being touched on the touch panel 2 and fixed by full-pressing the key 31 is the end point. And the vector information V30 is accepted by the processor 4.

Even if the first point and the second point are erroneously input, as they can be input repeatedly until they are fixed, the operability can be improved. Additionally as the touch sensor 22 is activated by half-pressing the key 31 on the rear side, the power consumption until the activation can be saved.

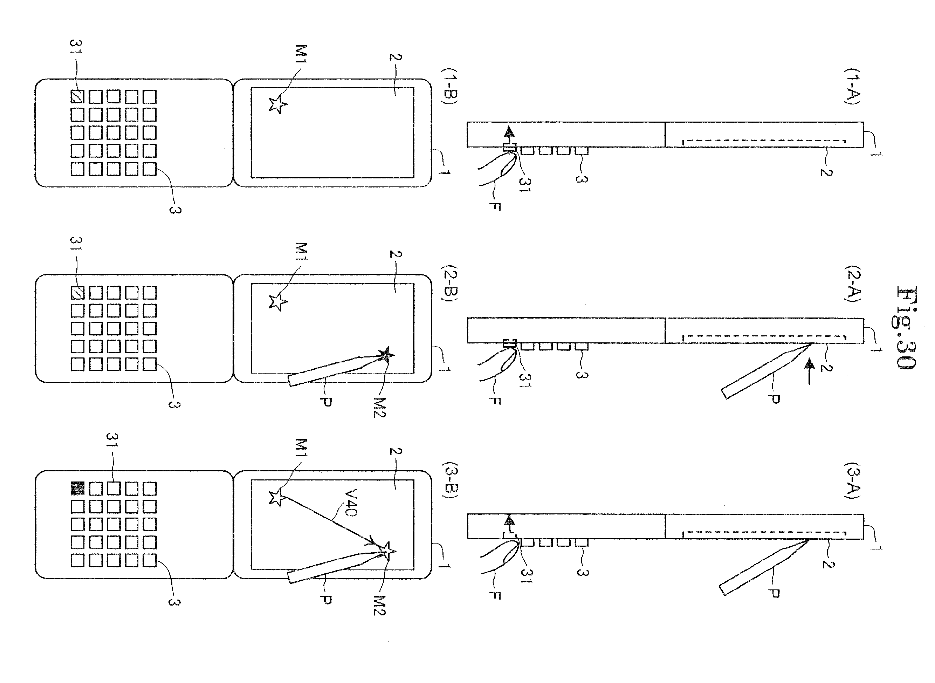

Fig. 30 shows the case where the portable information processing terminal 1 is of a folding type and the touch panel 2 and the keys 3 are arranged on the same surface when unfolded. Similar to the above, even in the portable information processing terminal 1 of such a configuration, first, the position on the touch panel 2 corresponding to the position of the half-pressed key 31, among the arranged keys 3, is fixed as the first point M1, and then the second point M2 is specified, and the half-pressed key 31 is full-pressed to fix the second point M2. Thereby, it is possible to input the vector information V40 in which the first point M1 is the start point and the second point M2 is the end point.

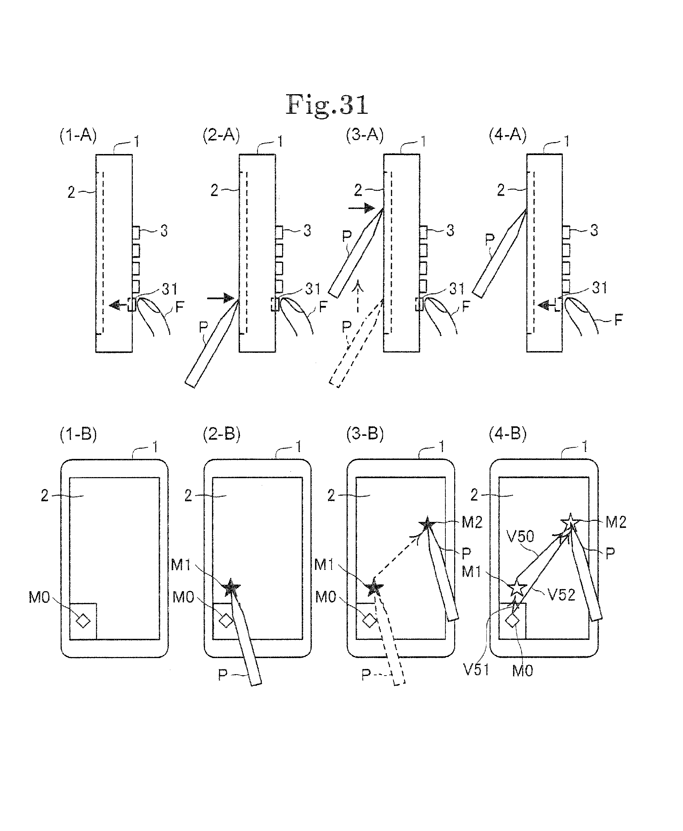

Next, Fig. 31 shows a third method of inputting vector information on the touch panel 2 in the case where the touch panel 2 and the keys 3 are provided on the opposite faces of the casing of the portable information processing terminal 1. While this method is similar to the second method (method shown in Figs. 29 and 30), this method differs from the second method in that two points are input in a state where a key 31 is half-pressed.

First, as shown in Fig. 31(1-A) and Fig. 31(1-B), when an arbitrary key 31 on the rear side is half-pressed, the touch sensor 22 of the touch panel 2 is activated. At the same time, a reference icon M0 is displayed at a position corresponding to the half-pressed key 31 on the display 21 of the touch panel 2, and an input of a first point is waited. It should be noted that if the half-pressing of the key 31 is canceled, the state returns to the initial state.

Then, when a first point on the touch sensor 22 of the touch panel 2 is specified with the stylus pen P or a finger (first temporary position input) as shown in Fig. 31(2-A) and Fig. 31(2-B) while keeping the half-pressed state of the key 31 on the rear side as described above, a first provisionally determined icon M1 is displayed on the display 21, and an input of a second point is waited. Even in this case, if the half-pressing of the key 31 is terminated, the state returns to the initial state.

When a second point is specified with the stylus pen P or a finger on the touch sensor 22 of the touch panel (second temporary position input) as shown in Fig. 31(3-A) and Fig. 31(3-B) while keeping the half-pressed state of the key 31 on the rear side, a second provisionally determined icon M2 is displayed on the display 21. Here, when the half-pressed key 31 on the rear side is full-pressed as shown in Fig. 31(4-A) and Fig. 31(4-B), the first point and the second point are fixed, the provisionally determined icons M1 and M2 (e.g., filled stars) are changed to fixed icons M1 and M2 (e.g., outlined stars), whereby vector information is input.

For example, as vector information to be input, a vector 51 from the reference icon M0 to the fixed icon M1 which is the first point, a vector V52 from the reference icon M0 to the fixed icon M2 which is the second point, and a difference vector V50 between the vector V51 and the vector V52 (vector information in which the first point M1 is the start point and the second point M2 is the end point), may be input.

The input state of the respective points described above can return to the initial state when the half-pressed state is released, and so the operability can be improved. Further, as the touch sensor 22 is activated by half-pressing the key 31, the power consumption until the activation can be saved.

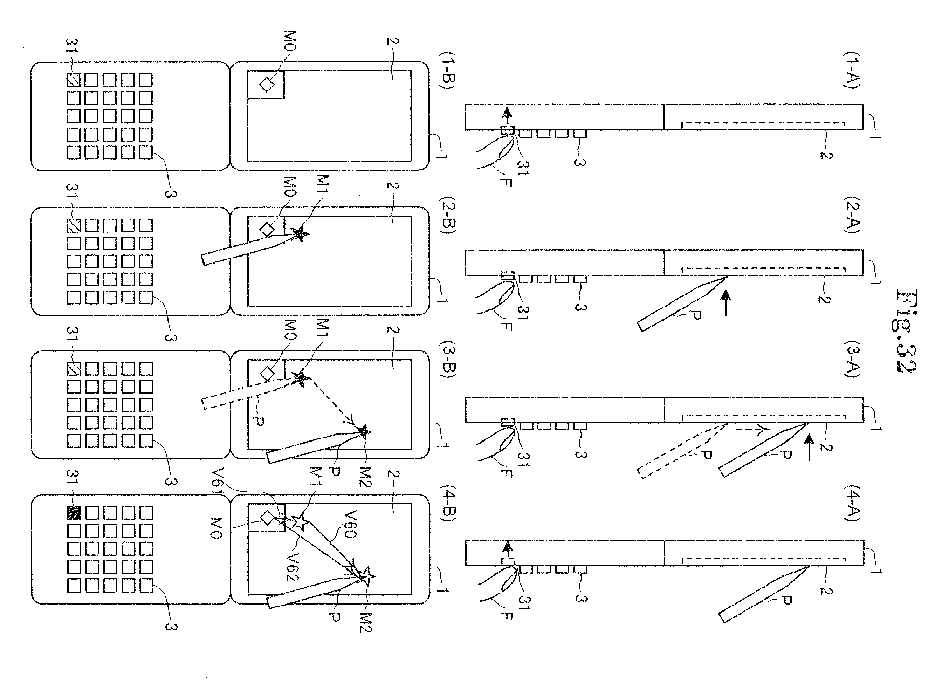

Fig. 32 shows the case where the portable information processing terminal 1 is of a folding type and the touch panel 2 and the keys 3 are arranged on the same surface when unfolded. Even in the portable information processing terminal 1 of such a configuration, by operating it in a manner similar to that described above, it is possible to input the position of the reference icon M0 and the first point M1 and the second point M2, respectively, and to input the respective pieces of vector information V61, V62, and V60 linking them.

If there is no need to display icons because the operator does not need to visually check inputting of the respective points as icons for example, it is possible not to display part or all of the above-described icons.

Further, if only the half-pressing function and the full-pressing function are required and two-dimensional positional correspondence with the display surface is not required, the key 31 may be arranged on a side surface (other than the front surface and the rear surface) of the portable information processing terminal 1.

The processor 4 is able to use the vector information, input as described above, as various kinds of commands. For example, the processor 4 is able to command to select a particular region in the touch panel 2. Based on single vector information input, a rectangle region in which the start point and the end point form a diagonal line, or a circular region in which the start point is the center and the end point is a point on the circumference thereof, may be selected. Further, it is possible to select a closed region by sequentially inputting three or more pieces of vector information, setting the end point of a vector and the start point of another vector to be input next to be the same, and setting the start point of the first vector and the end point of the last vector to be the same. It should be noted that the method of selecting a region is not limited to those described above.

Further, as described with reference to Figs. 27 to 32, by inputting the vector information V10, V20, V30, V40, V50, or V60, the character and the view window displayed on the display 21 can be displaced or scrolled by (the direction and the magnitude of) the input vector information. Specifically, in the case shown in Figs. 27 to 32, the character displayed at the first point M1 or the display screen itself is displaced or scrolled by the direction and the magnitude of the input vector.

Further, it is possible to use the vector information, input as described above, as a command to rotate the character or the like displayed on the display 21. For example, in the case where the vector information V10, V20, V30, or V40 is input by means of the first method or the second method described with reference to Figs. 27 to 30, a rotation is instructed by correlating the left and right directions of the input vector with a left-handed rotation and a right-handed rotation, respectively, and correlating the magnitude of the vector with a rotational angle. Specifically, as shown in Fig. 27, when the vector information V10 is input in a right upward direction, the displayed screen or a previously selected character is rotated by the angle having been set related to the vector quantity in a right-handed rotation.

Further, in the case where vector information V50 to 52 or V60 to 62 is input by means of the third method described with reference to Figs. 31 and 32, first, the left and right directions of the vector information V50 or V60 linking the first point M1 and the second point M2 are correlated with a left-handed rotation and a right-handed rotation, respectively. Then, a rotation is instructed by correlating the angle, defined by the vector V51 or V61 from the reference icon M0 to the first point M1 and the vector V52 or V62 from the reference icon M0 to the second point M2, with the rotational angle. In that case, if the reference icon M0 is viewed as the center of rotation, the rotation is easily recognized visually.

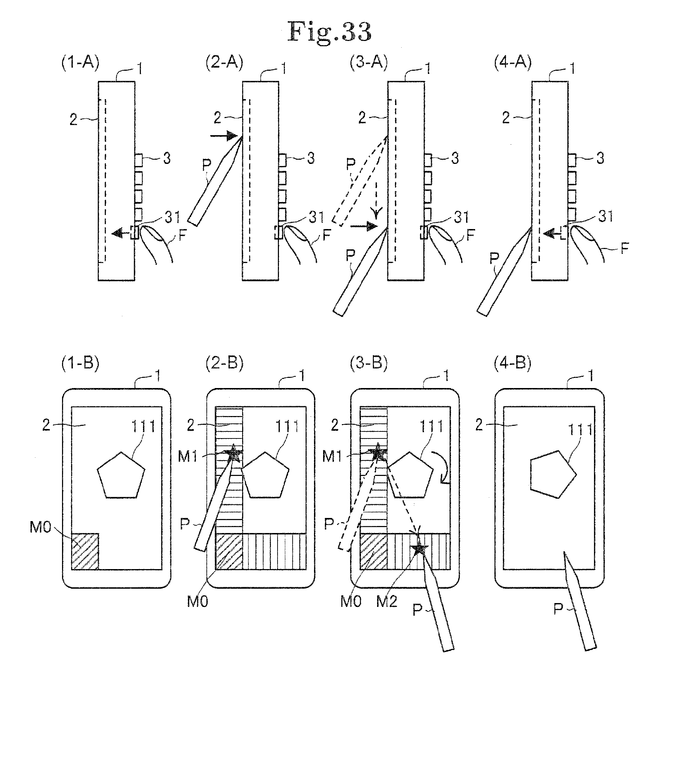

Here, another specific example of a rotation command will be described with reference to Fig. 33.

Fig. 33 shows a rotation instruction method using the touch panel 2 in the case where the touch panel 2 and the keys 3 are provided on the opposite surfaces of the casing of the portable information processing terminal 1.

First, as shown in Fig. 33(1-A) and Fig. 33(1-B), when an arbitrary key 31 on the rear side is half-pressed, the touch sensor 22 of the touch panel 2 is activated. At the same time, the reference area M0 is displayed at the position corresponding to the half-pressed key 31 on the display 21 of the touch panel 2, and an input of a first point is waited.

Then, while keeping the half-pressed state of the key 31 on the rear side, a first point is specified on any of the upper, lower, left, and right regions relative to the reference area M0 on the touch sensor 22 of the touch panel 2 with the stylus pen P or a finger as shown in Fig. 33(2-A) and Fig. 33(2-B). Here, a first point is specified on the "upper" region relative to the reference area M0, as an example. Thereby, a first provisionally determined icon M1 is displayed on the specified position.

Further, while keeping the half-pressed state of the key 31 on the rear side, a second point is specified on a region which is any of the upper, lower, left, and right regions relative to the reference area M0 and is not the region where the first point M1 is specified, on the touch sensor 22, as shown in Fig. 33(3-A) and Fig. 33(3-B). Here, a second point is specified on the "right" region as an example. Thereby, a second provisionally determined icon M2 is displayed on the specified position. It should be noted that while the half-pressed state of the key 31 is maintained up to this point, if it is canceled, the state returns to the initial state.

Then, if there is no problem in specifying the first point M1 and the second point M2, the operator full-presses the key 31 which is in the half-pressed state. Then, a rotation instruction with respect to the character 111 is fixed in such a manner that the direction of the first provisionally determined icon M1, viewed from the reference area M0, is turned to the direction of the second provisionally determined icon, thereby the character 111 is rotated.

In this method, although it is impossible to specify a small angle, as there is no need to pay attention to a subtle angle input (point designation) on the touch sensor 22 regarding a rotation command by 90 degrees which is frequently used, the operability is improved.

It should be noted that if the first point and the second point are set in regions other than those described above, they may be recognized as an instruction of scrolling or scaling. Further, in addition to up, down, left, and right directions, if an oblique direction between them is also included as a region which can be specified, the rotational angle can be set by 45 degrees. Further, as the first point and the second point can be repeatedly input, if they are erroneously input, until they are fixed, the operability can be improved. And further, as the touch sensor 22 is activated by half-pressing the key 31, the power consumption until the activation can be saved.

Further, it is possible to change the color or brightness of the horizontal hatched region instead of displaying the first provisionally determined icon M1, and of the vertical hatched region instead of displaying the second provisionally determined icon M2.

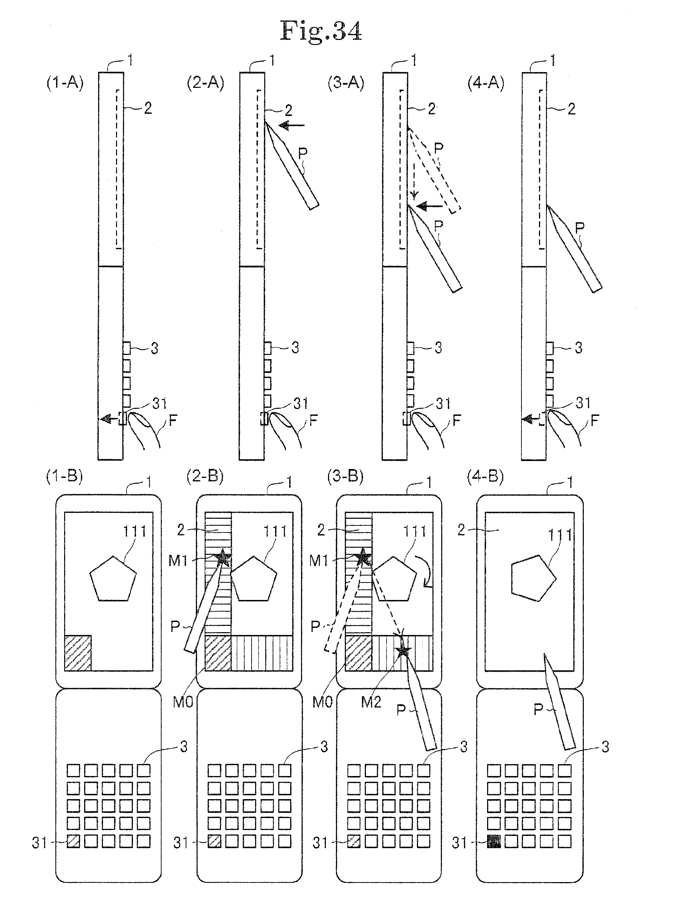

Fig. 34 shows the case where the portable information processing terminal 1 is of a folding type and the touch panel 2 and the keys 3 are arranged on the same surface when unfolded. Even in the portable information processing terminal 1 of such a configuration, by operating it in a manner similar to that described above, it is possible to rotationally operate the displayed image.

Further, it is possible to use the vector information, input as described above, as a command to expand or reduce an image displayed on the display 21.

For example, by inputting a vector having the start point, which is on the boundary of a selected region or a selected character, and the end point, of which position specifies the position of the boundary after transformation, based on the above described method, it is possible to specify expansion or reduction of the region or the character in a manner similar to extension or contraction of an elastic body such as rubber. As such, expansion or reduction can be performed by changing the aspect ratio of the selected region. Of course, expansion or reduction can be performed with a fixed aspect ratio.

Further, in the case of inputting vector information by means of the third method described with reference to Fig. 31, first, the center of a display block (reference icon M0), specified on the touch panel 2 corresponding to the position of the half-pressed key 31 on the rear side, is fixed. Then, with a vector V51 up to the specified first point M1 being used as the reference, the ratio of the vector V51 to a vector V52 up to the specified second point M2, is used as an expansion ratio or a reduction ratio to thereby instruct expansion or reduction of the displayed region such as a character or a view window. It should be noted that this also applies to the case where the touch panel 1 and the keys 3 are arranged on the same surface, as described with reference to Fig. 32.

As described above, according to the present embodiment, at first when inputting an arbitrary point with use of the touch panel, as the point specified on the touch panel is fixed by an operation such as half-pressing, even if the point has been erroneously input on the touch panel, the point can be input repeatedly until it is fixed. Further, by inputting two points on the touch panel by means of the above-described method, vector information can be input. Accordingly, with use of the touch panel and the operation keys by combining them, various kinds of operations can be performed, and the operability can be improved. Further, operation of the touch panel is reduced, whereby power consumption can be reduced.

THIRD EXEMPLARY EMBODIMENT

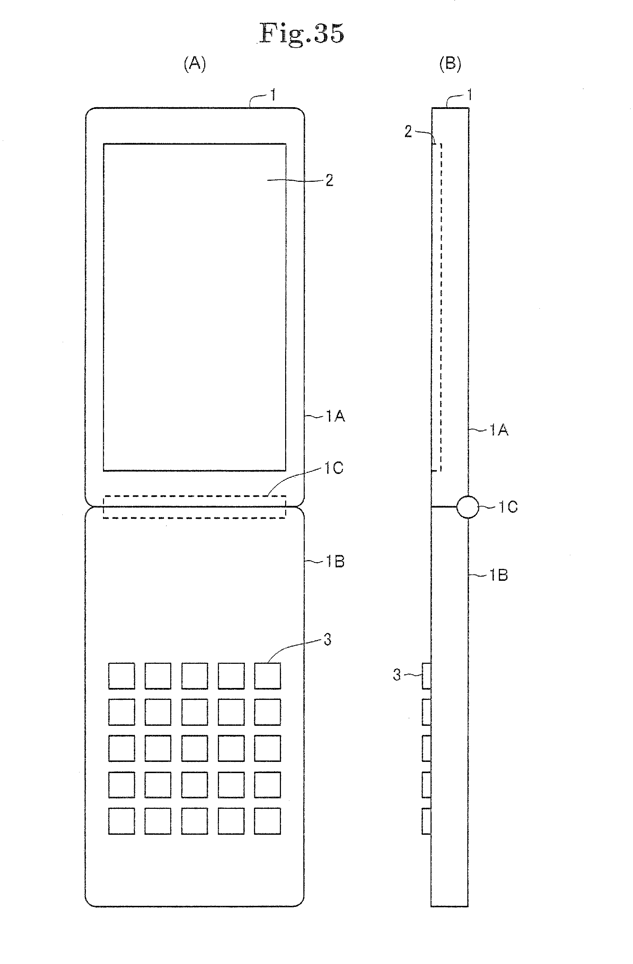

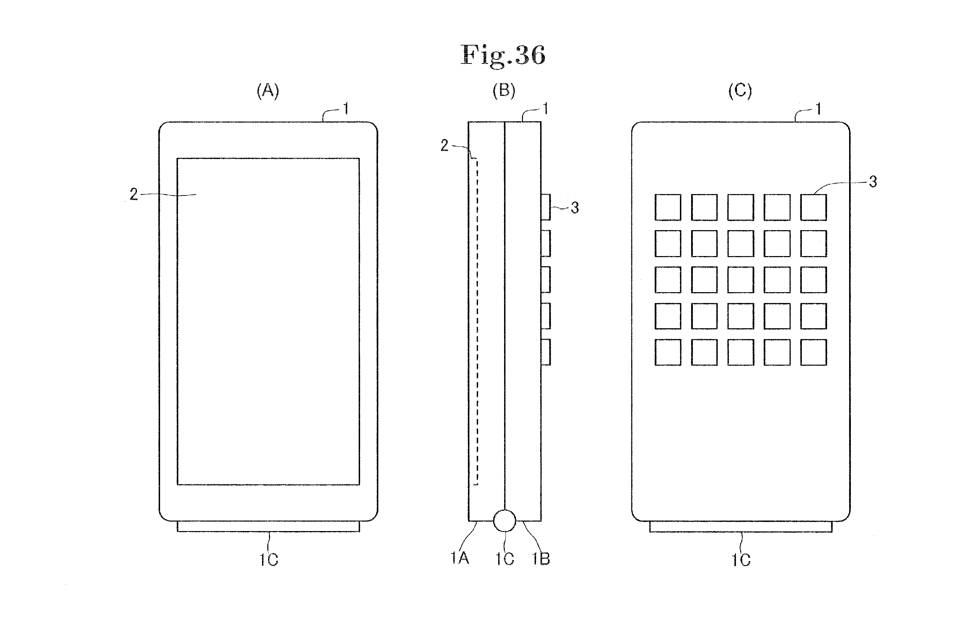

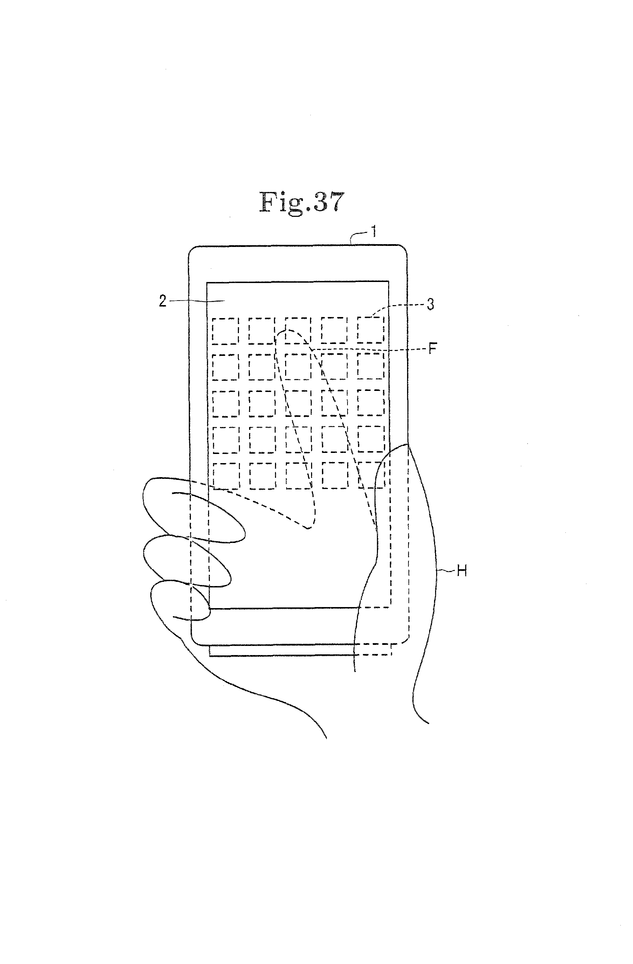

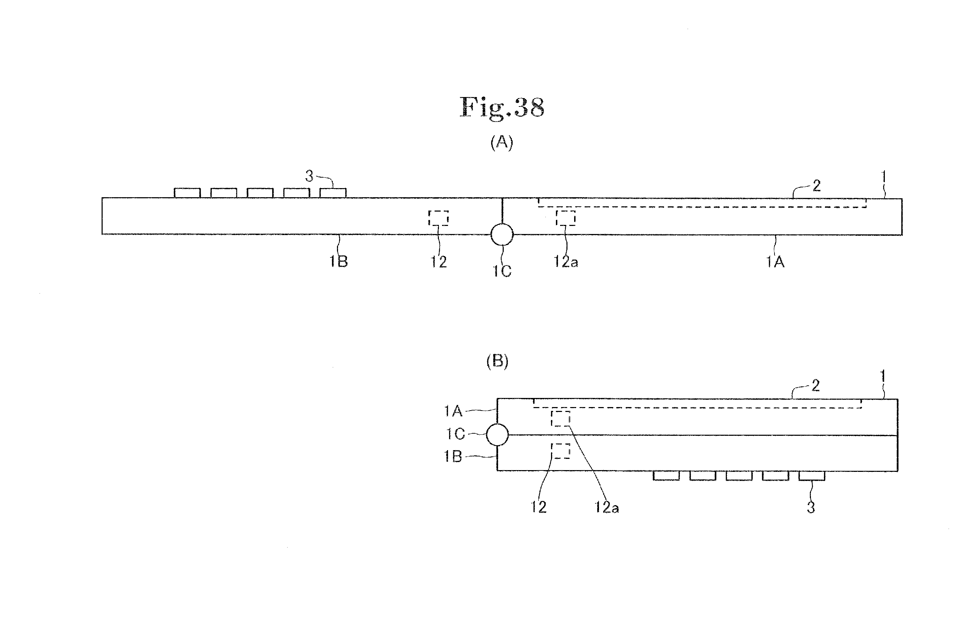

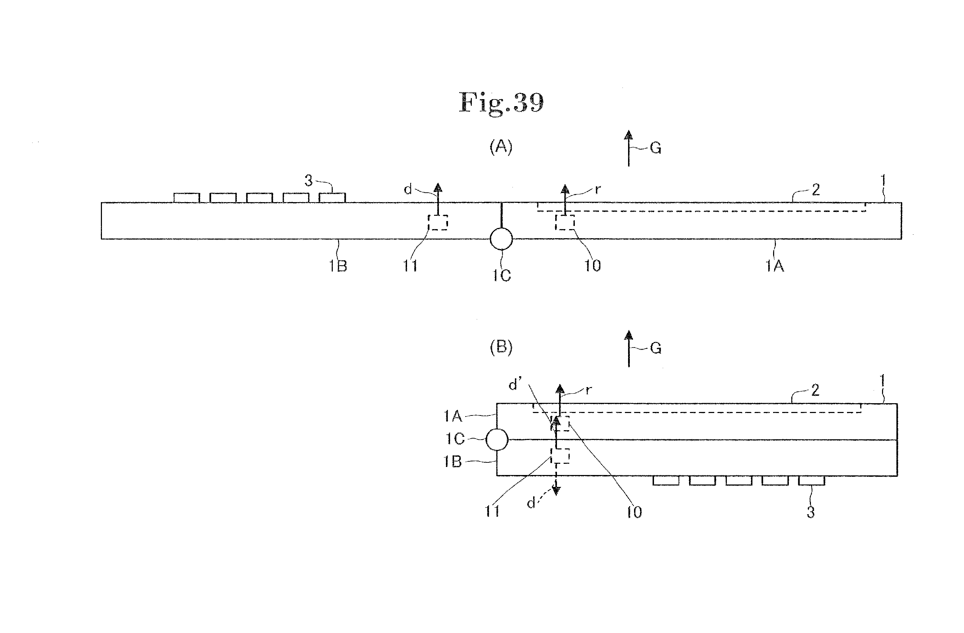

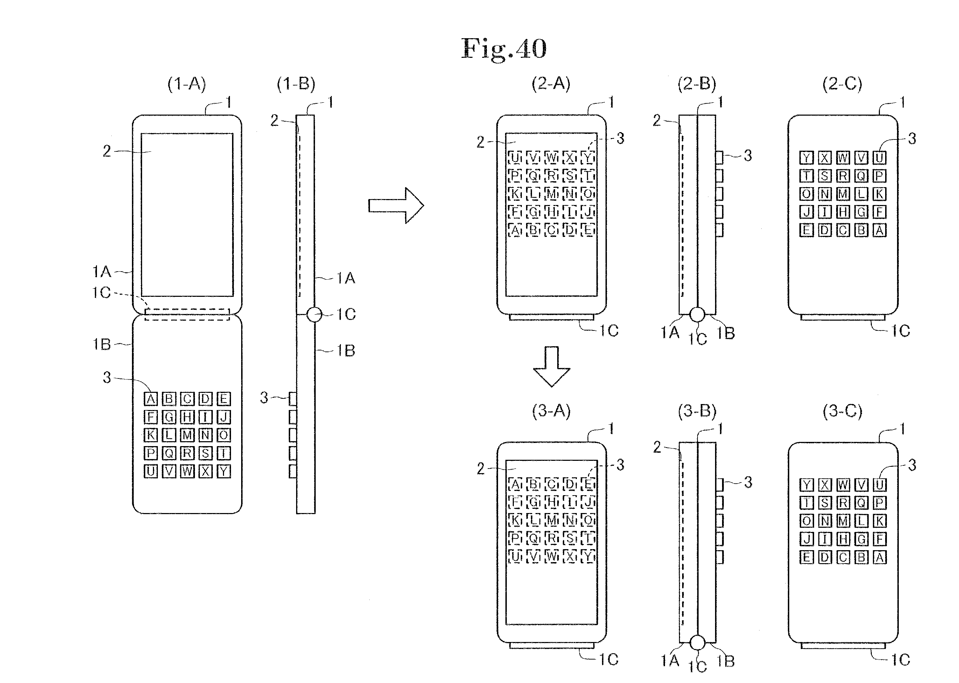

A third exemplary embodiment of the present invention will be described with reference to Figs. 35 to 42. Figs. 35 and 36 are external views showing the configuration of a portable information processing terminal according to the present invention. Fig. 37 is an illustration showing a state of using the portable information processing terminal. Figs. 38 and 39 are illustrations showing a method of detecting the direction of the operation surface relative to the display surface of the portable information processing terminal. Figs. 40 to 42 are illustrations showing a state of converting an input value to an input device in the portable information processing terminal.

[Configuration]

The portable information processing terminal 1 according to the present invention has an almost similar configuration to that described in the first and second exemplary embodiments, and also has the following functions. It should be noted that the portable information processing terminal 1 of the present invention may have, or may not have, the functions of the above-described first and second exemplary embodiments and the functions of other exemplary embodiments described below.

Here, an example of the external configuration of the portable information processing terminal 1, according to the present embodiment, will be described with reference to Figs. 35 and 36. As shown in Fig. 35, the portable information processing terminal 1 is configured such that two substantially rectangle casings 1A and 1B, having a predetermined thickness, are connected rotatably on a short side via a hinge 1C. Specifically, as shown in Figs. 35(A) and 35(B), the portable information processing terminal 1 includes a display-side casing I A (display device-side casing) having a touch panel 2 with a display 21 which is a display device on a surface, an input device-side casing 1B (operation device-side casing) having a plurality of keys 3 which are operation devices on a surface, and the hinge 1C. The two casings I A and 1B are arranged such that in a state where the two casings 1A and 1B are turned and opened with the hinge 1C as the axis of the turn, that is, in a state of being unfolded as shown in Fig. 35, the touch panel 2 and the keys 3 face almost the same direction.

The hinge 1 C is provided on the side opposite to the side where the touch panel 2 and the keys 3 are provided, that is, on the rear side. As such, as shown in Fig. 36, the portable information processing terminal 1 of the present invention may have a state where the display-side casing 1A and the input device-side casing 1B are folded back-to-back. As such, the touch panel 2 provided to the display-side casing I A and the keys 3 provided to input device-side casing 1B are positioned on the outside and face the opposite directions.

While the above-described examples describe the case where the display device provided to the portable information processing terminal 1 is the touch panel 2 in which the touch sensor 22 is attached to the display 21, the display device of the portable information processing terminal 1 according to the present invention may include only the display 21.

Further, the keys 3 are provided in an exposed manner on the outside of the casing, adapted to be able to be pressed towards the casing inside. In the present embodiment, the keys 3 are arranged in 5 rows x 5 columns, that is, the keys are arranged in 5 rows in each of which 5 pieces of keys are aligned. It should be noted that the arrangements of the keys 3 are not limited to 5 rows x 5 columns.

Further, as operation devices, the portable information processing terminal 1 includes input devices such as a touch pad 9 and a pointing device 8 in addition to, or instead of, the keys 3.

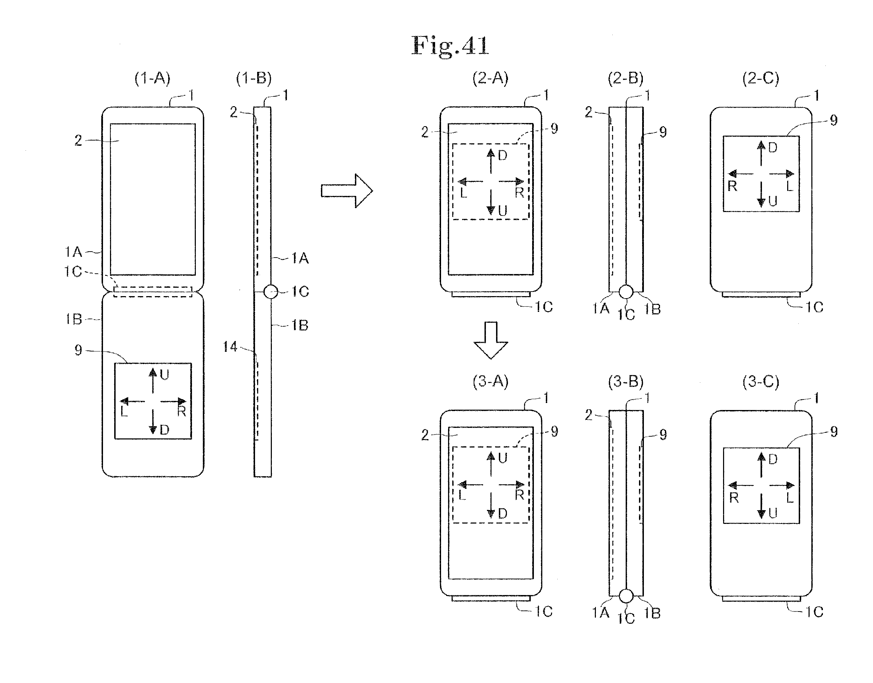

The touch pad 9 is provided on the operation surface of the input device-side casing 1B, as shown in Fig. 41(1-A) described below, for example. With a touching operation by a finger of the operator or a stylus pen, the touch pad 9 accepts an input of vector information including two-dimensional coordinate information and information of a predetermined direction (for example, up(U), down (D), right(R), and left (L)) along the operation surface. It should be noted that while Fig. 41 only shows the touch pad 9 as an input device provided to the portable information processing terminal 1, other operation devices such as the keys 3 may be provided together.

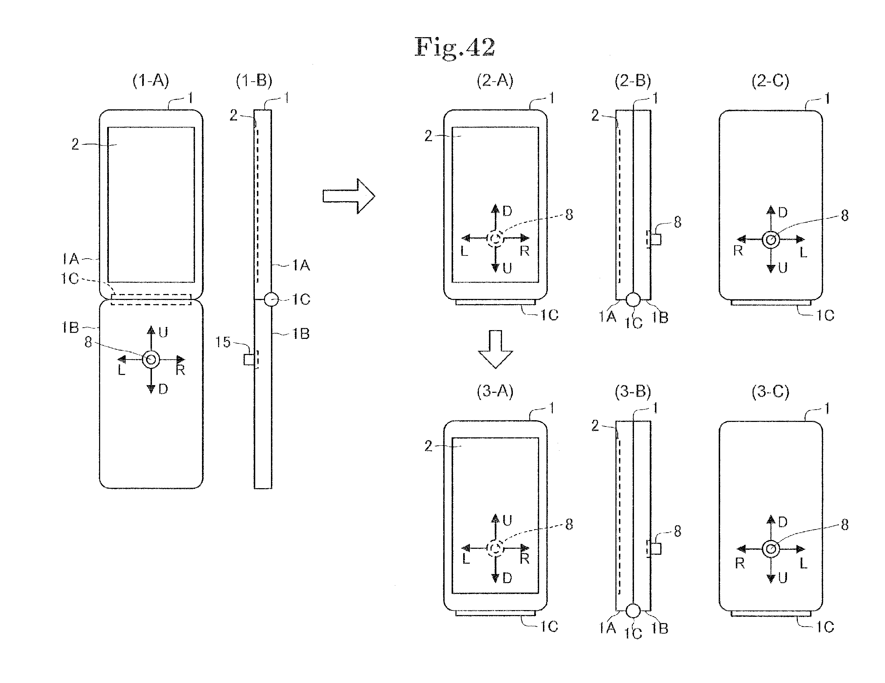

Further, the pointing device 8 is provided on the operation surface of the input device-side casing 1B as shown in Fig. 42(1-A), for example. With a press-down operation in each direction by a finger of the operator, the pointing device 8 accepts an input of vector information including information of a predetermined direction (for example, up(U), down (D), right(R), and left (L)) along the operation surface. It should be noted that while Fig. 42 only shows the pointing device 8 as an input device provided to the portable information processing terminal 1, other operation devices such as the keys 3 may be provided together.

Fig. 37 shows a state where an operator holds the portable information processing terminal 1, having the configuration described above, in his/her hand H and operates it. As shown in Fig. 37, when the operator holds it in a manner that the touch panel 2 is in front and the keys 3 are located on the rear surface, the hand H of the operator is positioned on the rear side of the portable information processing terminal 1, and a finger F (index finger) of the operator is positioned on the keys 3 on the rear side. Thereby, for the operator, it is possible to prevent the visibility from being impaired by the hand H and the finger F covering the display 21, and the operator is able to easily operate the keys 3 on the rear side by the finger F.

While Fig. 37 shows the case where the operator holds the portable information processing terminal 1 by one hand, in the case of holding a tablet information processing terminal in both hands, this applies to both hands. In that case, a similar effect can be achieved, and further, flexibility in the inputting operation is improved so that different operations can be set in right and left hands, for example. Further, by holding it firmly by one hand, the flexibility in inputting operation by the other hand increases.

While the above description exemplary shows the case where the portable information processing terminal 1 is formed of two substantially rectangle casings 1A and 1B which are connected rotatably with the hinge 1C on a short side, the form of the portable information processing terminal 1 is not limited to the above-described form. Portable information processing terminals having other configurations will be described in other exemplary embodiments.

Further, the portable information processing terminal 1 includes a magnetic sensor 12 and a first acceleration sensor 10 and a second acceleration sensor 11 as direction detection means for detecting the direction of the display surface of the touch panel 2 provided on the display-side casing 1A and the direction of the surface on which the keys 3 are arranged, that is, the operation surface.

The magnetic sensor 12 is provided inside the input device-side casing 1B as shown in Fig. 38, for example. Further, a magnet 12a, generating a magnetic field to be detected by the magnetic sensor 12, is provided inside the display-side casing 1A. The positions of the magnet 12a and the magnetic sensor 12 are, when the display-side casing 1A and the input device-side casing 1B are opened by being unfolded via the hinge 1C as shown in Fig. 38(A), located at positions which are in symmetric over the hinge 1C, while when the display-side casing 1A and the input device-side casing 1B are in a folded state as shown in Fig. 38(B), they are located at almost the same position corresponding to each other in each casing.

Thereby, when the display-side casing 1A and the input device-side casing 1B are opened by being unfolded via the hinge 1C as shown in Fig. 38(A), as the magnet 12a and the magnetic sensor 12 are apart from each other, the magnetic field detected by the magnetic sensor 12 is weak. On the other hand, when they are in a folded state as shown in Fig. 38(B), as the magnet 12a and the magnetic sensor 12 are close to each other, the magnetic field to be detected by the magnetic sensor 12 is strong. A strong or weak signal of such a magnetic field is transmitted from the magnetic sensor 12 to the processor 4 as a transformation detection signal of the casing 1A and 1B, whereby the processor 4 is able to identify whether the casings 1A and 1B are unfolded or folded.

When the processor 4 determines that the casings 1A and 1B are unfolded according to an output from the magnetic sensor 12, the processor 4 determines that the display surface of the touch panel 2 and the operation surface of the keys 3 are in the almost same surface and face the almost same direction. On the other hand, when determining that the casings 1A and 1B are folded, the processor 4 can determine that the display surface of the touch panel 2 and the operation surface of the key 3 are located on the opposite surfaces and face almost opposite directions.

Further, the portable information processing terminal 1 may include the acceleration sensors 10 and 11 inside the display-side casing 1A and the input device-side casing 1B respectively as shown in Fig. 39, as direction detection means for detecting the directions of the casings 1A and 1B. The positions of the acceleration sensors 10 and 11 are, when the display-side casing 1A and the input device-side casing 1B are opened by being unfolded via the hinge 1C as shown in Fig. 39(A), located at positions which are in symmetric over the hinge 1C, while when the display-side casing 1A and the input device-side casing 1B are in a folded state as shown in Fig. 39(B), they are located at almost the same position corresponding to each other in each casing.

In the state shown in Fig. 39, acceleration due to universal gravitation with the earth, that is, acceleration of gravity G, is applied to the portable information processing terminal 1. When the display-side casing 1A and the input device-side casing 1B are unfolded via the hinge 1C as shown in Fig. 39(A), the acceleration of gravity G is detected as a vector r by the acceleration sensor 10, and is detected as a vector d by the acceleration sensor 11, and the both are in the same direction. On the other hand, when the display-side casing 1A and the input device-side casing 1B are in a folded state as shown in Fig. 39(B), although the acceleration sensor 10 detects the acceleration of gravity G as the vector r which is the same as the case described above, the acceleration sensor 11 detects it as a vector d' which is acceleration in an opposite direction to that of the vector d. These vector signals are transmitted as deformed transformation signals on the casings from the acceleration sensor 10 and the acceleration sensor 11 to the processor 4.

The processor 4 determines an output of the acceleration sensor 11 on the basis of the output of the acceleration sensor 10, for example, to thereby recognize whether the casings 1A and 1B are unfolded or folded. It should be noted that if outputs of the two acceleration sensors 10 and 11 are changed similarly, it is recognized that only the directions are changed, while the forms are unchanged.

Here, in order to determine whether or not outputs of the two acceleration sensors 10 and 11 are changed in a similar manner, a detection time difference $\Delta t$ between the two acceleration sensors should be smaller than a value obtained by dividing the acceleration measurement deviation D, which is allowable in the determination, by the expected maximum acceleration change, that is, a maximum acceleration change quantity v per unit time.

$$\Delta t < D/v \cdots (1)$$

It should be noted that the detection accuracy can be improved by performing acceleration detection a number of times continuously and calculating an average value. Besides using the acceleration of gravity, a similar effect can be achieved by applying acceleration by holding it by hand and shaking it even in a gravity-free state.

When the processor 4 determines that the casings 1A and 1 B are unfolded according to the outputs from the acceleration sensors 10 and 11, the processor 4 can determine that the display surface of the touch panel 2 and the operation surface of the keys 3 are in the almost same plane and face the almost same direction. On the other hand, when determining that the casings 1A and 1B are folded, the processor 4 can determine that the display surface of the touch panel 2 and the operation surface of the keys 3 are located on the opposite surfaces and face almost opposite directions. It should be noted that the method of determining the relative directions of the display surface and the operation surface by the processor 4 can be used in the configuration where the casings 1A and 1B are separated in other exemplary embodiments described below. However, the configuration and the method of determining the relative directions of the display surface and the operation surface of the portable information processing terminal 1 are not limited to those described above, and may be implemented by means of other configurations and methods.

Then, the processor 4 detects an input value having been input when each of the keys 3 is operated, and performs processing according to the detected input value. In particular, in the present embodiment, the processor 4 has a function of converting an input value corresponding to the operated state of each of the keys 3, the pointing device 8, or the touch pad 9, into an input value corresponding to another key or an input value corresponding to another operated state and accepting it, in accordance with the direction of the operation surface relative to the direction of the display surface which is detected as described above (input acceptance means). Further, in the present embodiment, the processor 4 has a function of displaying information (operation key arrangement information, input directional information) corresponding to an input value, converted and accepted, on the display 21 of the touch panel 2. This will be described in detail in the description of operation provided below. It should be noted that while the functions for realizing the operation described below are implemented by programs installed in the processor 4, they may also be implemented by logical circuits.

[Operation]

Next, operation of the portable information processing terminal 1, particularly, operation of the processor 4 will be described with reference to Figs. 40 to 42. Fig. 40 shows an operation when the keys 3 are provided to the input device-side casing 1B of the portable information processing terminal 1, Fig. 41 shows an operation when the touch pad 9 is provided, and Fig. 42 show an operation when the pointing device 8 is provided.

First, with reference to Fig. 40, operation of the portable information processing terminal 1 having the keys 3 arranged in a matrix will be described. The processor 4 first recognizes whether the casings 1A and 1B are unfolded or folded, according to a detected value from the magnetic sensor 12 or the acceleration sensors 10 and 11.

Then, as shown in Figs. 40(1-A) and 40(1-B), when the display-side casing 1A and the input device-side casing 1B are in an unfolded state, the processor 4 determines that the display surface of the touch panel 2 and the operation surface of the keys 3 are in an almost the same direction and in almost the same surface. In that case, the processor 4 accepts an input value preassigned to each of the keys 3, as an input value when each of the keys 3 is operated.

On the other hand, as shown in Figs. 40(2-A), 40(2-B), and 40(2-C), when the display-side casing 1A and the input device-side casing 1B are in a folded state, the processor 4 determines that the operation surface of the keys 3 is located on the surface opposite to the display surface of the touch panel 2. In that case, the processor 4 displays the arrangement of the keys 3, located on the surface opposite to the display surface of the touch panel 2, on the display surface of the touch panel 2 as if they are seen through. At this time, for the operator located on the side of the touch panel 2, the actual arrangement of the keys 3 is in a state where "A", "B", ... are arranged from the left in the last row, as shown in Fig. 40(2-A). On the other hand, the processor 4 displays the arrangement of the keys 3 by modifying them such that the arrangement of the keys 3 becomes upside down relative to the actual arrangement, as shown in Figs. 40 (3-A), 40(3-B), and 40(3-C), on the display 21 of the touch panel 2 as if they are seen through.

Further, the processor 4 modifies the input value, which is accepted when the keys 3 are actually operated, according to the modified arrangement of the keys 3. This means that the correspondence relations between the keys 3 themselves and the key codes (or key functions) assigned to the respective keys 3 are modified so as to be the same as the modified arrangement of the keys 3 when displayed on the touch panel 2 as described above. Thereby, when a key 3 is operated, as an input value corresponding to the key 3, an input value having been corresponding to another key 3, which is assigned to the key 3 based on the above modification, is accepted. For example, when the key "U" is pressed, it is accepted as an input of value "A", and when the key "V" is pressed, it is accepted as an input of value "B".

Consequently, the key arrangement in recognition based on the sense of the operator looking at the display surface and the arrangement of the key codes to be accepted by the key operation, can be matched. It should be noted that the processor 4 may not display the arrangement of the keys 3, which are located on the opposite surface to the touch panel 2, as if it is seen through from the display surface of the touch panel 2, but perform modification such that an input value, to be accepted when the keys 3 are operated, has a value based on an arrangement which is upside down relative to the arrangement of the keys 3, as described above.

Next, with reference to Fig. 41, operation of the portable information processing terminal 1 having the touch pad 9 as an input device will be described. First, the processor 4 recognizes whether the casings 1A and 1B are unfolded or folded, in accordance with a detection value from the magnetic sensor 12 or the acceleration sensors 10 and 11 as described above.

Then, as shown in Figs. 41(1-A) and 41(1-B), when the display-side casing 1A and the input device-side casing 1B are in an unfolded state, it is determined that the display surface of the touch panel 2 and the operation surface of the touch pad 9 are in almost the same direction and on almost the same surface. In that case, as an input value which is directional information input by a touching input operation on the touch pad 9, the processor 4 accepts an input value of a direction preset in the touch pad 9. This means that as shown in Fig. 41(1-A), when the operator operates in an upward direction with respect to the touch pad 9, the processor 4 accepts an input value of an upward (U) direction, while when the operator operates in a right direction, the processor 4 accepts an input value of a right (R) direction.

On the other hand, as shown in Figs. 41(2-A), 41(2-B), and 41(2-C), when the display-side casing 1A and the input device-side casing 1B are in a folded state, the processor 4 determines that the operation surface of the touch pad 9 is located on the surface opposite to the display surface of the touch panel 2. In that case, the processor 4 displays the direction, which is input to the touch pad 9 located on the opposite surface of the touch panel 2, as if it is seen through from the display surface of the touch panel 2. At this moment, in the case of an operation in an upward direction for the operator located on the side of the touch panel 2, the actual input direction to the touch pad 9 is an input in a downward (D) direction, as shown in Fig. 41(2-A). Meanwhile, the processor 4 displays, on the touch panel 2, an input direction modified to be mirror-image symmetry, in which the input direction to the touch pad 9 is upside down relative to the actual input direction, as if it is seen through, as shown in Figs. 41(3-A), 41(3-B), and 41(3-C).

Further, the processor 4 modifies an input value representing an input direction, to be accepted when the touch pad 9 is actually operated, to be the same as the display of the modified input direction. Thereby, when the touch pad 9 is operated, as an input value to the touch pad 9, the processor 4 accepts an input value in which the up and down direction is reversed. For example, in the case of performing an operation which actually provides an input value in a downward (D) direction with reference to the touch pad 9, it is accepted as an input value of an upward (U) direction, while in the case of performing an operation which actually provides an input value of an upward (U) direction, it is accepted as an input value in a downward (D) direction. Thereby, the operation by the operator and the input value match with each other.

It should be noted that the processor 4 may not display the input direction to the touch pad 9, which is located on the opposite surface to the touch panel 2, as if it is seen through from the display surface of the touch panel 2, but perform modification such that an input value of an input direction, which is accepted when the touch pad 9 is operated, becomes upside down, as describe above.

Next, with reference to Fig. 42, operation of the portable information processing terminal I having the pointing device 8 as an input device will be described. First, the processor 4 recognizes whether the casings 1A and 1B are unfolded or folded, in accordance with a detected value from the magnetic sensor 12 or the acceleration sensors 10 and 11 as described above.

Then, as shown in Figs. 42(1-A) and 42(1-B), when the display-side casing 1A and the input device-side casing 1B are in an unfolded state, it is determined that the display surface of the touch panel 2 and the operation surface of the pointing device 8 are in almost the same direction and on almost the same surface. In that case, as an input value which is directional information input by an input operation on the pointing device 8, the processor 4 accepts an input value of a direction preset in the pointing device 8. This means that as shown in Fig. 42(1-A), when the operator operates in an upward direction with respect to the pointing device 8, the processor 4 accepts an input value of an upward (U) direction, while when the operator operates in a right direction, the processor 4 accepts an input value of a right (R) direction.

On the other hand, as shown in Figs. 42(2-A), 42(2-B), and 42(2-C), when the display-side casing 1A and the input device-side casing 1B are in a folded state, the processor 4 determines that the operation surface of the pointing device 8 is located on the surface opposite to the display surface of the touch panel 2. In that case, the processor 4 displays the direction, which is input to the pointing device 8 located on the opposite surface of the touch panel 2, as if it is seen through from the display surface of the touch panel 2. At this moment, in the case of an operation in an upward direction for the operator located on the side of the touch panel 2, the actual input direction to the pointing device 8 is an input in a downward (D) direction as shown in Fig. 42(2-A). Meanwhile, the processor 4 displays, on the touch panel 2, an input direction modified to be mirror-image symmetry, in which the input direction to the pointing device 8 is upside down relative to the actual input direction, as if it is seen through, as shown in Figs. 42(3-A), 42(3-B), and 42(3-C).

Further, the processor 4 modifies an input value representing an input direction, to be accepted when the pointing device 8 is actually operated, to be the same as the display of the modified input direction. Thereby, when the pointing device 8 is operated, as an input value to the pointing device 8, the processor 4 accepts an input value in which the up and down direction is reversed. For example, in the case of performing an operation which actually provides an input value of a downward (D) direction with reference to the pointing device 8, it is accepted as an input value of an upward (U) direction, while in the case of performing an operation which actually provides an input value of an upward (U) direction, it is accepted as an input value in a downward (D) direction. Thereby, the operation by the operator and the input value match with each other.

It should be noted that the processor 4 may not display the input direction to the pointing device 8, which is located on the opposite surface to the touch panel 2, as if it is seen through from the display surface of the touch panel 2, but perform modification such that an input value of an input direction, which is accepted when the pointing device 8 is operated, becomes upside down, as describe above.

As described above, in the portable information processing terminal 1 of the present embodiment, regarding an input value of the key 3, the pointing device 8, or the touch pad 9, an image of the input value corresponding to the operating state when the up and down direction is reversed is displayed on the display 21 of the touch panel 2 according to the relative directions of the respective casings 1A and 1B, and when being operated actually, it is modified to an input value when the up and down direction is reversed, and accepted. Accordingly, for the operator, as the arrangement of the keys 3 and an input direction to the pointing device 8 and the touch pad 9 when looking at them facing the display 21, are unified, it is possible to avoid confusion which may be caused at the time of input operation, whereby the operability is improved.

It should be noted that regarding the key images, the size and the shape thereof may be different from those of the corresponding real keys, and the intervals between the key images may be different from those of the corresponding real keys, if the operator is able to recognize the arrangement of the key images.

Further, instead of displaying an image representing the direction of an input value, it is also possible to displace the displayed character or scroll the display screen to the corresponding direction.

Of course, the image display can be omitted if the operator does not need to visually check the arrangement of the keys or the direction of the input value, for example.

FOURTH EXEMPLARY EMBODIMENT

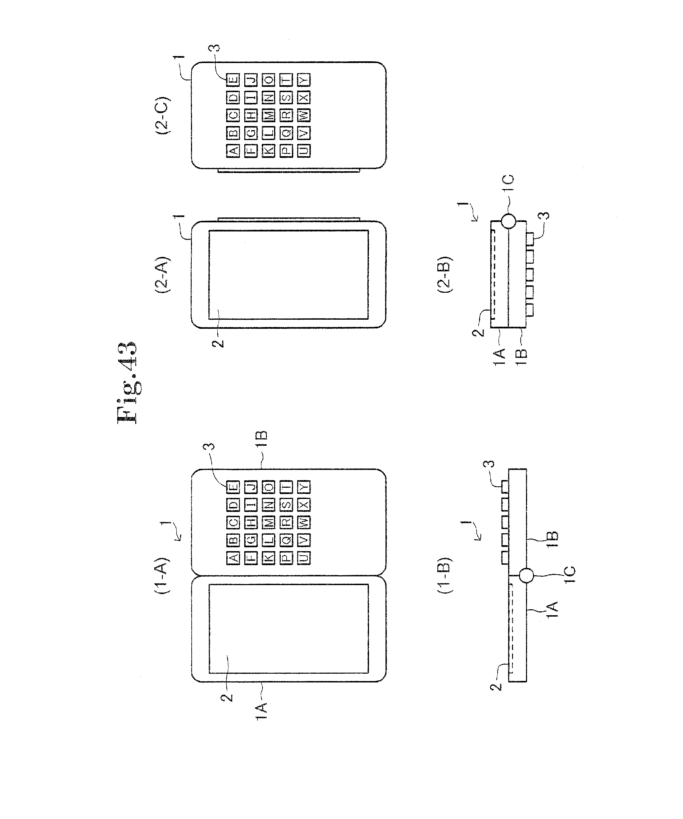

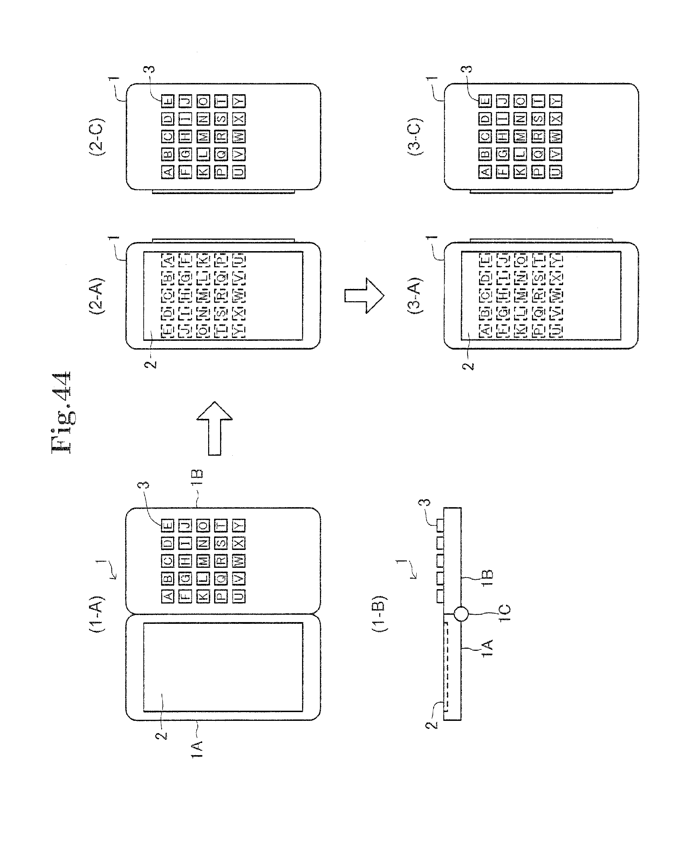

A fourth exemplary embodiment of the present invention will be described with reference to Figs. 43 to 46. Fig. 43 is an external view showing the configuration of a portable information processing terminal according to the present invention, and Figs. 44 to 46 are illustrations showing a state of converting an input value input to an input device of the portable information processing terminal.

[Configuration]

As shown in Fig. 43, a portable information processing terminal I of the present embodiment includes substantially rectangle display-side casing 1A and input device-side casing 1B having a predetermined thickness, similar to the above-described third exemplary embodiment. In particular, the casings 1A and 1B are joined rotatably on a long side via a hinge 1C in the present embodiment.

To be specific, in the portable information processing terminal 1, in a state where the two casings 1A and 1B are turned and opened with the hinge 1C as the axis of the turn, that is, in a state of being unfolded as shown in Figs. 43(1-A) and 43(1-B), the touch panel 2 and the keys 3 are arranged to be in the almost same direction. Meanwhile, in a state where the casings 1A and 1B are folded as shown in Figs. 43(2-A), 43(2-B), and 43(2-C), the display-side casing 1A and the input device-side casing 1B can be folded back-to-back. As such, the display 21 provided to the display-side casing 1A and the keys 3 provided to the input device-side casing 1B are positioned outside and face the opposite directions.

Further, the processor 4 of the portable information processing terminal 1 has the configuration similar to that described in the third exemplary embodiment. As such, the processor 4 has a function of converting an input value corresponding to the operated state of each of the keys 3, the pointing device 8, or the touch pad 9 into an input value corresponding to another key or an input value corresponding to another operated state and accepting it (input acceptance means), in accordance with the direction of the operation surface relative to the direction of the display surface (input acceptance means), and a function of displaying information corresponding to an input value (operation key arrangement information, input directional information), which will be converted and accepted, on the display surface. This will be described in detail in the description of operation provided below.

[Operation]

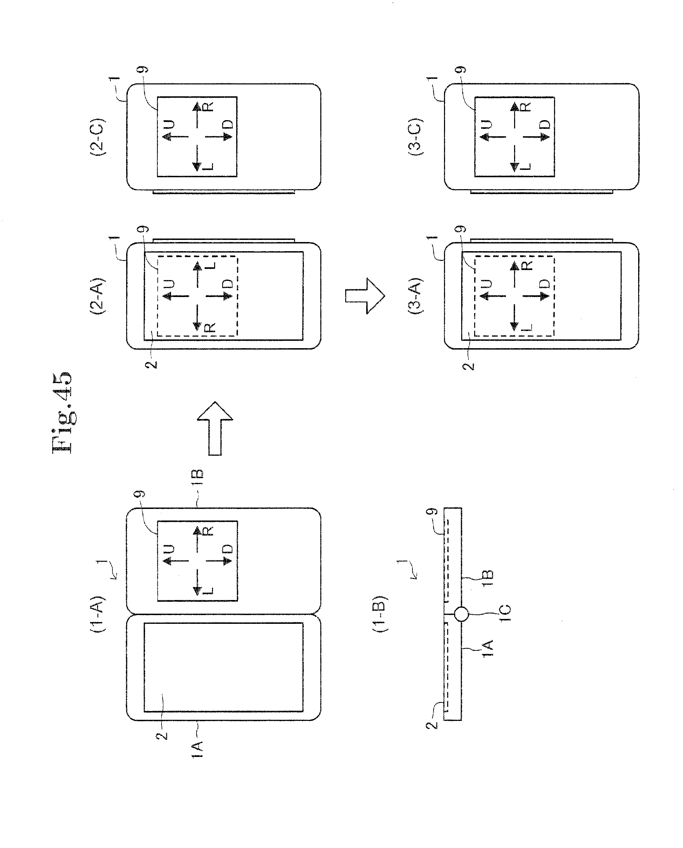

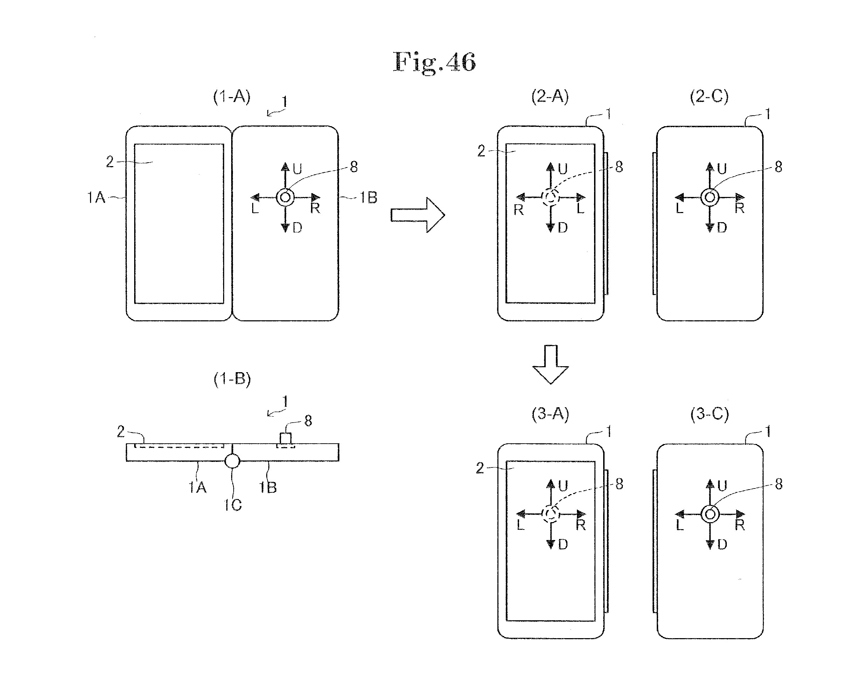

Next, operation of the portable information processing terminal 1, particularly, operation of the processor 4, will be described with reference to Figs. 44 to 46. Fig. 44 shows an operation when the keys 3 are provided to the input device-side casing 1B of the portable information processing terminal 1, Fig. 45 shows an operation when the touch pad 9 is provided, and Fig. 46 shows an operation when the pointing device 8 is provided.

First, with reference to Fig. 44, operation of the portable information processing terminal 1 having the keys 3 arranged in a matrix will be described. The processor 4 first recognizes whether the casings 1A and 1B are unfolded or folded, according to a detected value from the magnetic sensor 12 or the acceleration sensors 10 and 11.

Then, as shown in Figs. 44(1-A) and 44(1-B), when the display-side casing 1A and the input device-side casing 1B are in an unfolded state, the processor 4 determines that the display surface of the touch panel 2 and the operation surface of the keys 3 are in an almost the same direction and in almost the same surface. In that case, the processor 4 accepts an input value preassigned to each of the keys 3, as an input value when each of the keys 3 is operated.

On the other hand, as shown in Figs. 44(2-A) and 44(2-C), when the display-side casing 1A and the input device-side casing 1B are in a folded state, the processor 4 determines that the operation surface of the keys 3 is located on the surface opposite to the display surface of the touch panel 2. In that case, the processor 4 displays the arrangement of the keys 3, located on the surface opposite to the display surface of the touch panel 2, on the display surface of the touch panel 2 as if they are seen through. At this moment, for the operator located on the side of the touch panel 2, the actual arrangement of the keys 3 is in a state where "A", "B", ... are arranged from the right in the first row, as shown in Fig. 44(2-A). On the other hand, the processor 4 displays the arrangement of the keys 3 by modifying them such that the arrangement of the keys 3 are reversed in left and right relative to the actual arrangement, as shown in Figs. 44(3-A) and 44(3-C), on the display 21 of the touch panel 2 as if they are seen through.

Further, the processor 4 modifies the input value, which is accepted when the keys 3 are actually operated, according to the modified arrangement of the keys 3. This means that the correspondence relations between the keys 3 themselves and the key codes (or key functions) assigned to the respective keys 3 are modified so as to be the same as the modified arrangement of the keys 3 when displayed on the touch panel 2 as described above. Thereby, when a key 3 is operated, as an input value corresponding to the key 3, an input value having been corresponding to another key 3, which is assigned to the key 3 based on the above modification, is accepted. For example, when the key "E" is pressed, an input value "A" is accepted, and when the key "D" is pressed, an input value "B" is accepted.

It should be noted that the processor 4 may not display the arrangement of the keys 3, which are located on the opposite surface to the touch panel 2, as if it is seen through from the display surface of the touch panel 2, but perform modification such that an input value, to be accepted when the keys 3 are operated, has a value based on an arrangement which is reversed in left and right relative to the arrangement of the keys 3, as described above.

Next, with reference to Fig. 45, operation of the portable information processing terminal 1 having the touch pad 9 as an input device will be described. First, the processor 4 recognizes whether the casings 1A and 1B are unfolded or folded, in accordance with a detected value from the magnetic sensor 12 or the acceleration sensors 10 and 11 as described above.

Then, as shown in Figs. 45(1-A) and 45(1-B), when the display-side casing 1A and the input device-side casing 1B are in an unfolded state, it is determined that the display surface of the touch panel 2 and the operation surface of the touch pad 9 are in almost the same direction and on almost the same plane. In that case, as an input value which is directional information input by a touching input operation on the touch pad 9, the processor 4 accepts an input value of a direction having been set in the touch pad 9. This means that as shown in Fig. 45(1-A), when the operator operates in an upward direction with respect to the touch pad 9, the processor 4 accepts an input value of an upward (U) direction, while when the operator operates in a right direction, the processor 4 accepts an input value of a right (R) direction.

On the other hand, as shown in Figs. 45(2-A) and 45(2-C), when the display-side casing 1A and the input device-side casing 1B are in a folded state, the processor 4 determines that the operation surface of the touch pad 9 is located on the surface opposite to the display surface of the touch panel 2. In that case, the processor 4 displays the direction, which is input to the touch pad 9 located on the opposite surface of the touch panel 2, as if it is seen through from the display surface of the touch panel 2. At this moment, for the operator located on the side of the touch panel, the actual operational direction to the touch pad 9 and the input value are opposite in right and left, as shown in Fig. 45 (2-A). On the other hand, the processor 4 displays, on the touch panel 2, an input direction modified to be in mirror-image symmetry, in which the input direction to the touch pad 9 is opposite in right and left relative to the actual input direction, as if it is seen through, as shown in Figs. 45(3-A) and 45(3-C).

Further, the processor 4 modifies an input value representing an input direction, to be accepted when the touch pad 9 is actually operated, to be the same as the display of the modified input direction, and accepts it. Thereby, when the touch pad 9 is operated, as an input value to the touch pad 9, the processor 4 accepts an input value in which the left and right direction is reversed. For example, in the case of performing an operation which actually provides an input value of a left (L) direction with reference to the touch pad 9, it is accepted as an input value of a right (R) direction, while in the case of performing an operation which actually provides an input value of a right (R) direction, it is accepted as an input value of a left (L) direction.

It should be noted that the processor 4 may not display the input direction to the touch pad 9, which is located on the opposite surface to the touch panel 2, as if it is seen through from the display surface of the touch panel 2, but perform modification such that an input value of an input direction, which is accepted when the touch pad 9 is operated, becomes opposite in right and left, as described above.

Next, with reference to Fig. 46, operation of the portable information processing terminal 1 having the pointing device 8 as an input device will be described. First, the processor 4 recognizes whether the casings 1A and 1B are unfolded or folded, in accordance with a detected value from the magnetic sensor 12 or the acceleration sensors 10 and 11 as described above.

Then, as shown in Figs. 46(1-A) and 46(1-B), when the display-side casing 1A and the input device-side casting 1B are in an unfolded state, it is determined that the display surface of the touch panel 2 and the operating surface of the pointing device 8 are in almost the same direction and on almost the same surface. In that case, as an input value which is directional information input by an input operation on the pointing device 8, the processor 4 accepts an input value of a direction preset in the pointing device 8. This means that as shown in Fig. 46(1-A), when the operator operates in an upward direction with respect to the pointing device 8, the processor 4 accepts an input value of an upper (U) direction, while when the operator operates in a right direction, the processor 4 accepts an input value of a right (R) direction.

On the other hand, as shown in Figs. 46(2-A) and 46(2-C), when the display-side casing 1A and the input device-side casing 1B are in a folded state, the processor 4 determines that the operation surface of the pointing device 8 is located on the surface opposite to the display surface of the touch panel 2. In that case, the processor 4 displays the direction, which is input to the pointing device 8 located on the opposite surface of the touch panel 2, as if it is seen through from the display surface of the touch panel 2. At this moment, the actual operational direction to the pointing device 8 and the input value are opposite in right and left, as shown in Fig. 46(2-A). On the other hand, the processor 4 displays, on the touch panel 2, an input direction modified to be in mirror-image symmetry, in which the input direction to the pointing device 8 is opposite in right and left relative to the actual input direction as if it is seen through, as shown in Figs. 46(3-A) and 46(3-C).

Further, the processor 4 modifies an input value representing an input direction, to be accepted when the pointing device 8 is actually operated, to be the same as the display of the modified input direction, and accepts it. Thereby, when the pointing device 8 is operated, as an input value to the pointing device 8, the processor 4 accepts an input value in which the left and right direction is reversed. For example, in the case of performing an operation which actually provides an input value of a left (L) direction with reference to the pointing device 8, it is accepted as an input value of a right (R) direction, while in the case of performing an operation which actually provides an input value of a right (R) direction, it is accepted as an input value of a left (L) direction.

It should be noted that the processor 4 may not display an input direction to the pointing device 8, which is located on the opposite surface to the touch panel 2, as if it is seen through from the display surface of the touch panel 2, but perform modification such that an input value of an input direction, which is accepted when the pointing device 8 is operated, becomes reversed in right and left, as described above.

As described above, in the portable information processing terminal 1 of the present embodiment, regarding an input value of the key 3, the pointing device 8, or the touch pad 9, an image of an input value corresponding to the operating state, when the left and right direction is reversed, is displayed on the display 21 of the touch panel 2 according to the relative directions of the respective casings 1A and 1B, and when being operated actually, it is modified to an input value when the left and right direction is reversed, and accepted. Accordingly, for the operator, as the arrangement of the keys 3 and an input direction to the pointing device 8 and the touch pad 9, when looking at them facing the display 21, are unified, it is possible to avoid confusion which may be caused at the time of input operation, whereby the operability is improved.

It should be noted that regarding the key images, the size and the shape thereof may be different from those of the corresponding real keys, and the intervals between the key images may be different from those of the corresponding real keys, if the operator is able to recognize the arrangement of the key images.

Further, instead of displaying an image representing the direction of an input value, it is also possible to displace the displayed character or scroll the display screen to the corresponding direction.

Of course, the image display can be omitted if the operator does not need to visually check the arrangement of the keys or the direction of the input value, for example.

FIFTH EXEMPLARY EMBODIMENT

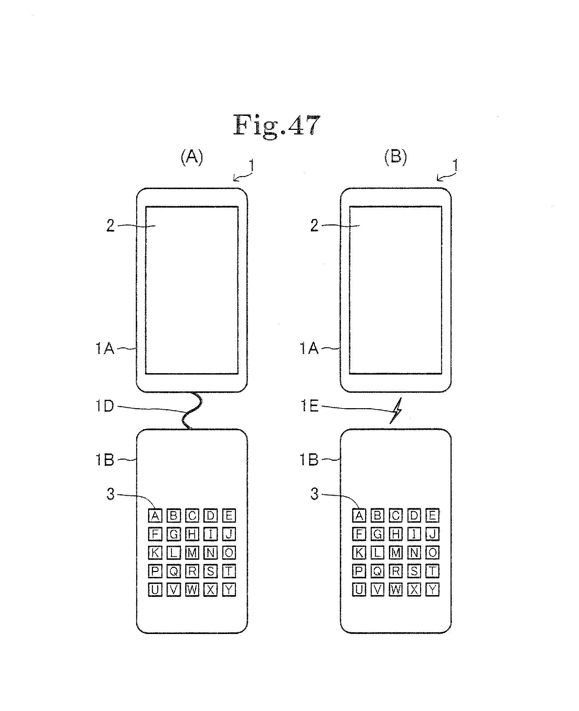

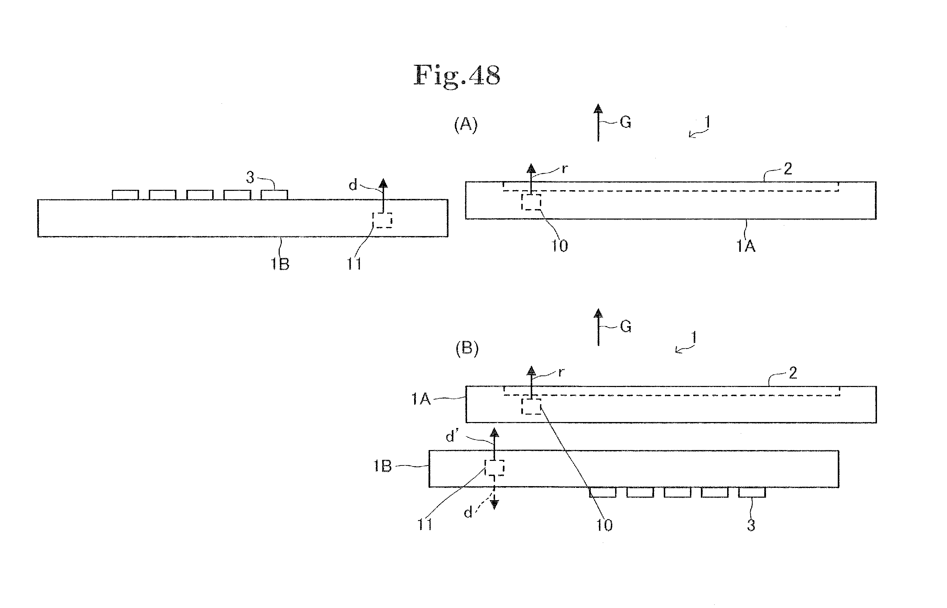

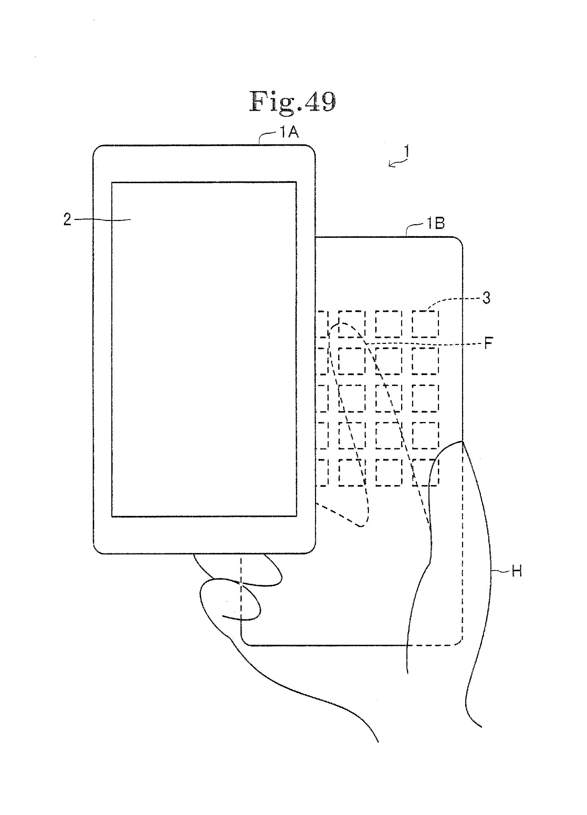

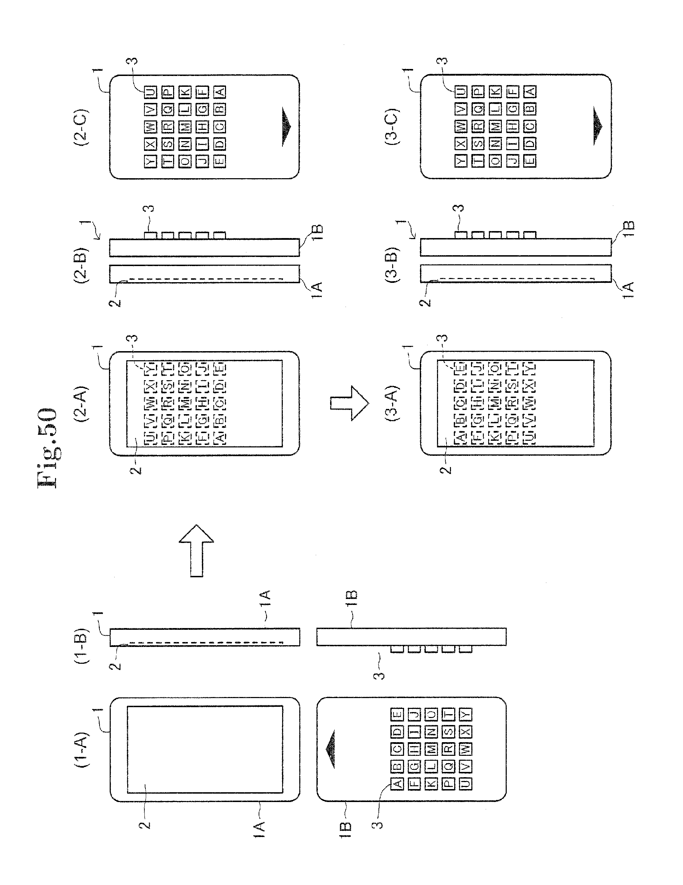

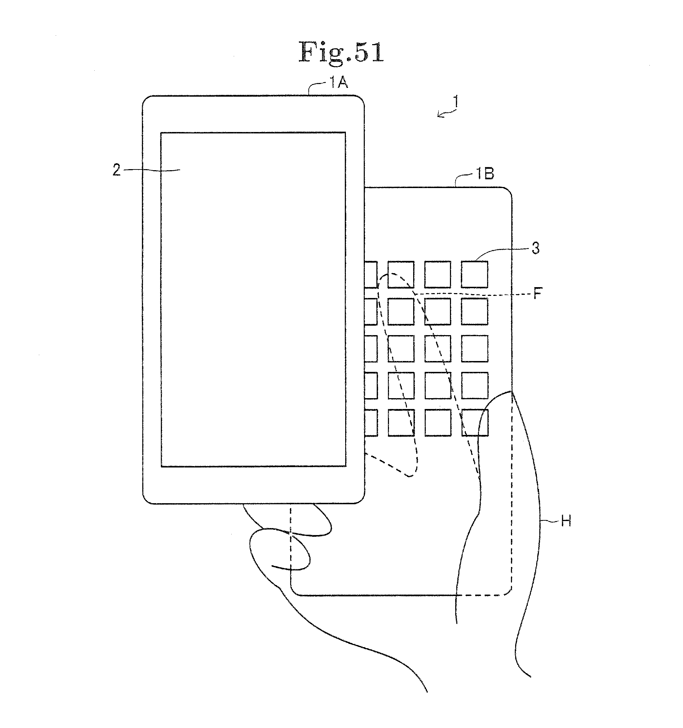

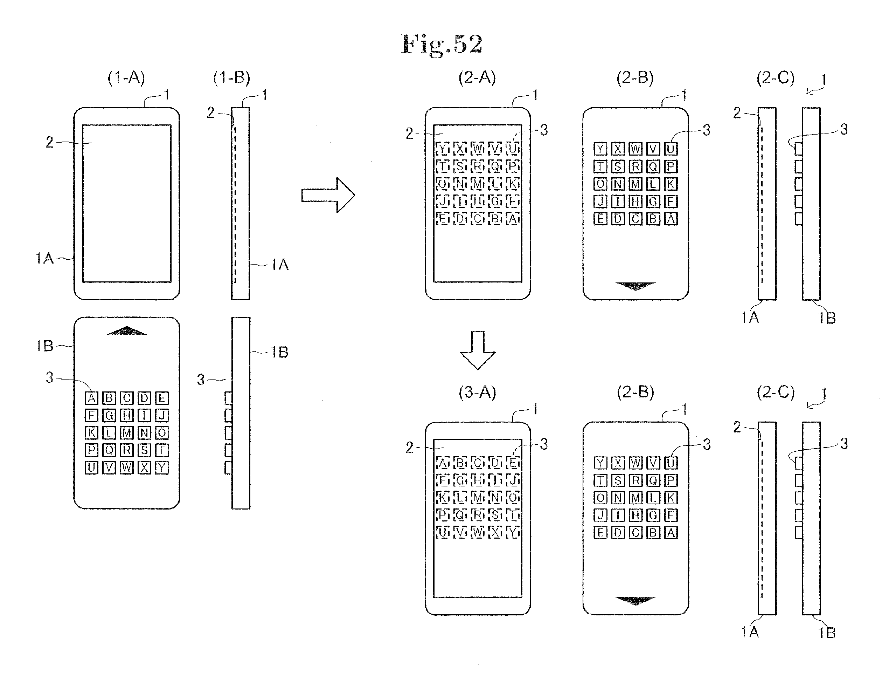

Next, a fifth exemplary embodiment of the present invention will be described with reference to Figs. 47 to 52. Fig. 47 is an external view showing the configuration of a portable information processing terminal according to the present embodiment. Fig. 48 is an illustration showing a method of detecting the direction of the operation surface, relative to the display surface, of the portable information processing terminal. Fig. 49 is an illustration showing a state of using the portable information processing terminal, and Fig. 50 is an illustration for explaining a state of converting an input value input to an input device of the portable information processing terminal. Fig. 51 is an illustration showing another state of using the portable information processing terminal, and Fig. 52 is an illustration showing another state of converting an input value input to an input device of the portable information processing terminal.

[Configuration]

Similar to the above-described third and fourth exemplary embodiments, the portable information processing terminal 1 of the present embodiment includes substantially rectangle display-side casing 1A and input device-side casing 1B having a predetermined thickness. However, as shown in Fig. 47, the display-side casing 1A and the input device-side casing 1B are separated from each other, or are configured so as to be separable from each other in an attachable/detachable manner. In that case, the respective casings 1A and 1B are connected via a flexible cable ID as shown in Fig. 47(A), or connected via wireless communication IE as shown in Fig. 47(B), with each other.

As shown in Fig. 48, the portable information processing terminal 1 includes acceleration sensors 10 and 11 as direction detection means for detecting the directions of the respective casings 1A and 1B, similar to the above-described exemplary embodiments. The portable information processing terminal 1 also includes the processor 4 which is the same as that described above, and the processor is able to detect whether the display surface of the touch panel 2 and the operation surface of the keys 3 are in the same direction or in the opposite direction, by detecting acceleration detected by the respective acceleration sensors 10 and 11. For example, as shown in Fig. 48(A), if the acceleration of gravity G is detected as a vector r by the acceleration sensor 10 and is detected as a vector d by the acceleration sensor 11 and both are in the same direction, the processor determines that the two casings are in the same direction. On the other hand, if the acceleration sensor 10 detects the vector r without changing while the acceleration sensor 11 detects as a vector d' which is an acceleration in an opposite direction to that of the vector d, the processor determines that the two casings are in the directions opposite to each other.

While the above description exemplary shows the method of detecting a relative directions of the display surface and the operation surface of the respective casings 1 A and 1B, it is also possible to detect an up and down or left and right direction of the respective casings 1A and 1B by using an acceleration sensor capable of detecting acceleration in another direction. This means that it is also possible to detect a three-dimensional relative direction in the respective casings 1A and 1B.

Further, the processor 4 of the portable information processing terminal 1 has the configuration similar to that described in the third and fourth exemplary embodiments. As such, the processor 4 has a function of converting an input value corresponding to the operated state of each of the keys 3, the pointing device 8, or the touch pad 9 into an input value corresponding to another key or an input value corresponding to another operated state and accepting it according to the direction of the operation surface relative to the direction of the display surface(input acceptance means), and a function of displaying information (operation key arrangement information, input directional information) corresponding to an input value, converted and accepted, on the display surface. This will be described in detail in the description of operation provided below.

[Operation]

Next, operation of the portable information processing terminal 1, particularly, operation of the processor 4, will be described with reference to Figs. 49 to 52. First, as shown in Fig. 49, description will be given on a state where an operator faces the display 21 of the touch panel 2 and holds the input device-side casing 1B by his/her hand H in such a manner that the keys 3 are located on the rear side in that state. As such, description will be given on the case where the display surface and the operation surface are on the opposite sides.

First, the processor 4 detects the relative directions of the casings 1A and 1B, that is, the display surface and the operation surface, according to a detected value from the acceleration sensors 10 and 11, as described above.

Then, as shown in Figs. 50(1-A) and 50(1-B), when determining that the display surface of the display-side casing 1A and the operation surface of the input device-side casing 1B are in an almost the same direction and on almost the same plane, the processor 4 accepts, as an input value when each of the keys 3 is operated, an input value preassigned to the key 3.

On the other hand, as shown in Figs. 50(2-A), 50(2-B), and 50(2-C), when determining that the operation surface of the input device-side casing 1B is in an opposite direction relative to the display surface of the touch panel 2 of the display-side casing 1A, the processor 4 displays the arrangement of the keys 3, located on the surface opposite to the display surface of the touch panel 2, on the display surface of the touch panel 2 as if they are seen through. At this moment, relative to the direction in the case of Fig. 50(1-A), the front and rear sides of the input device-side casing 1B are opposite and also the up and down direction is opposite. In that case, as shown in Figs. 50(2-A), 50(2-B), and 50 (2-C), for the operator located on the side of the touch panel 2, the arrangement of the keys 3 is in a state where "A", "B", ... are arranged from the right in the last row. As such, as shown in Figs. 50(3-A), 50(3-B), and 50(3-C), the processor 4 displays the arrangement of the keys modified to be in mirror-image symmetry, in which the arrangement of the keys are upside down relative to the actual arrangement, on the display 21 of the touch panel 2 as if they are seen through.

Further, the processor 4 modifies the input value, which is accepted when the keys 3 are actually operated, according to the modified arrangement of the keys 3. This means that the correspondence relations between the keys 3 themselves and the key codes (or key functions) assigned to the respective keys are modified so as to be the same as the modified arrangement of the keys 3 when displayed on the touch panel 2 as described above. Thereby, when a key 3 is operated, as an input value corresponding to the key 3, an input value having been corresponding to another key 3, which is assigned to the key 3 based on the above modification, is accepted. For example, when the key "U" is pressed, an input value "A" is accepted, and when the key "V" is pressed, an input value "B" is accepted.

It should be noted that the processor 4 may not display the arrangement of the keys 3, which are located on the opposite surface to the touch panel 2, as if they are seen through from the display surface of the touch panel 2, but perform modification such that an input value to be accepted when each of the keys 3 is operated, has a value of an arrangement which is upside down relative to the arrangement of the keys, as described above.

Next, as shown in Fig. 51, description will be given on the case where the operator holds the input device-side casing 1 B such that the operation surface of the keys 3 faces the same surface side relative to the display surface of the touch panel 2 but the up and down direction of the keys 3 is reversed.

When determining that the operation surface faces the same direction as that of the display surface but the up and down direction of the operation surface is reversed as described above, the processor 4 displays the arrangement of the keys 3, in which the up and down direction is opposite to that of the display surface of the touch panel 2, on the display surface of the touch panel. At this moment, as shown in Figs. 52(2-A), 52(2-B), and 52(2-C), the actual arrangement of the keys 3 is in a state where "A", "B", ... are arranged from the right in the last row for the operator. As such, the processor 4 displays, on the display device 21 of the touch panel 2, the arrangement of the keys 3 modified to be in point symmetry in which up, down, left, and right of the arrangement of the keys 3 are opposite from those of the actual arrangement of the keys 3, as shown in Figs. 52(3-A), 52(3-B), and 52(3-C).

Further, the processor 4 modifies an input value, which is accepted when the keys 3 are actually operated, according to the modified arrangement of the keys 3. This means that the correspondence relations between the keys 3 themselves and the key codes (or key functions) assigned to the respective keys 3 are modified so as to be the same as the modified arrangement of the keys 3 when displayed on the touch panel 2 as described above. Thereby, when a key 3 is operated, an input value having been corresponding to another key 3, which is assigned to the key 3 based on above modification, is accepted as an input value corresponding to the key 3. For example, when the key "Y" is pressed, an input value "A" is accepted, and when the key "X" is pressed, an input value "B" is accepted.

It should be noted that the processor 4 may not display the arrangement of the keys 3, which is located on the opposite surface to the touch panel 2, as if it is seen through from the display surface of the touch panel 2, but perform modification such that an input value to be accepted when each of the keys 3 is operated, has a value based on an arrangement which is reversed in up, down, left, and right relative to the arrangement of the keys 3, as described above.

As described above, in the portable information processing terminal 1 of the present embodiment, regarding an input value of the key 3, an image of an input value corresponding to the operating state, when the up and down and the left and right directions are reversed, is displayed on the display 21 of the touch panel 2 according to the relative directions of the respective casings 1A and 1B, and when being operated actually, it is modified to an input value when the up and down and the left and right directions are reversed, and accepted. Accordingly, for the operator, as the arrangement of the keys 3 when looking at them facing the display 21 is unified, it is possible to avoid confusion which may be caused at the time of an input operation, whereby the operability is improved.

This also applies to the case where the pointing device 8 or the touch pad 9 is provided. This means that an image of an input value corresponding to the operating state, when the up and down and the left and right directions are reversed, is displayed on the display 21 of the touch panel 2 according to the relative directions of the respective casings 1A and 1B, and when being operated actually, it is modified to an input value when the up and down and the left and right directions are reversed, and accepted.

It should be noted that regarding the key images, the size and the shape thereof may be different from those of the corresponding real keys, and the intervals between them may be different from those of the corresponding real keys, if the operator is able to recognize the arrangement of the key images.

Further, instead of displaying an image representing the direction of an input value, it is also possible to displace the displayed character or scroll the display screen in the corresponding direction.

Of course, the image display can be omitted if the operator does not need to visually check the arrangement of the keys or the direction of the input value, for example.

As described above, according to the portable information processing terminal described in the present invention, even in the case where the size of the terminal itself is reduced, the size of an input device is increased, and/or keys are arranged on the rear side of a display surface in order to realize a larger display, the keys on the rear side can maintain input operability which is similar to that of a touch panel. As it is possible to solve an inconvenience that a display is covered with a hand or fingers when the touch panel is used, operability can be improved while maintaining visibility. Further, as it is possible to operate the portable information processing terminal while holding it by one hand, operability can be further improved. Moreover, a use of the touch panel is suppressed so that power consumption can be reduced.

SIXTH EXEMPLARY EMBODIMENT

Next, a sixth exemplary embodiment of the present invention will be described. While a portable information processing device 1 according to the present embodiment is applicable to any of the portable information processing terminals described in the above exemplary embodiments, it is particularly effective for a portable information processing terminal, in which a plurality of keys 3 are constantly exposed on the surface opposite to the surface on which the touch panel 2 is provided as shown in Fig. 1(B) and elsewhere. However, the functions and the configuration of the portable information processing terminal 1, according to the present embodiment described below, are not limited to be provided to the portable information processing terminals of the above-described exemplary embodiments, and can be provided to any portable information processing terminal.

In the case that the portable information processing terminal 1 is, as shown in Fig. 1(B) and elsewhere, in a state where a plurality of keys 3 are constantly exposed on the surface opposite to the surface on which the touch panel 2 is provided, if the keys 3 are always active, an unintentional action may be caused due to various grounds including the keys 3 themselves being pressed when the portable information processing terminal 1 is placed on a desk, the keys being pressed by something neighbor when stored in a bag or in a pocket of clothes, and the keys being touched by children or pets. As such, while it is necessary to take measures to prevent such an unexpected activation, it is desirable that such measures do not prevent normal operation.

Accordingly, the processor 4 of the portable information processing terminal of the present embodiment has a function that if any operation is not performed for a certain period of time or a predetermined operation is performed, the active state is suspended so as to be in a sleep state (operation restricted state) of not accepting an input of keys other than a particular key, and a function of activating a key inputting function if the operator desires to use by means of a method or a combination of methods described below. This means that in a sleep state, if the processor 4 detects a predetermined operation performed on a predetermined key, the processor 4 releases the sleep state and activates the terminal so as to start acceptance of information inputting operation performed on any of the keys.

It should be noted that in the below description, while processing to detect an operation onto a predetermined key in a sleep state is performed by a monitoring circuit which is embedded in the processor 4 or provided outside, such a monitoring circuit is also included in the control device of the portable information processing terminal, which is the same as the processor 4.

First, as a first activation method, the key input function is activated by means of a method of " sequential operation to one key for a predetermined time period or more (e.g., press for a long time)".

The action of this case is, for example, as follows. When a predetermined key of the keys 3 is pressed, the processor 4 in a sleep state is activated, and outputs a time measurement start instruction to the timer 13, and starts press release monitoring to check whether or not the key is kept pressed and starts monitoring of an interruption from the timer 13. In the timer 13, a time threshold has been set in advance, and when the measured time exceeds the time threshold, the timer 13 outputs an interruption signal to the processor 4. If the processor 4 detects release of the press before detecting the interruption signal, the processor 4 outputs a time measurement stop instruction to the timer 13, and returns to the sleep state. Meanwhile, if the processor 4 detects an interruption signal before detecting release of the press, the processor 4 starts acceptance of input via other keys.

With the configuration described above, only when a particular key is selected from among a plurality of keys and sequentially operated for a certain time period, the remaining keys are activated. As such, unintended activation can be avoided.

It should be noted that the portable information processing terminal 1 may also have the following functions. First, a function, which allows a change in the setting of the key to be operated, may be added. This function can be implemented by providing a circuit (not shown) for setting a key to be used for activation using a flash memory in the keys 3, and changing the value of the flash memory. As a result, the key capable of activating the processor 4 in a sleep state can be changed, whereby tampering and operation of the terminal by a user other than the normal user can be prevented. Second, a function, which allows a change in the setting of the time length for long time pressing (time threshold), may be added. This function can be implemented by changing the time threshold, which will be set to the timer 13, recorded in the memory 5 (setting parameter 53). As a result, an operator can select any time threshold based on a comparison of the risk of erroneous operation, which becomes lower if a longer time is set, with the operability (activation waiting time) which becomes better if a shorter time is set.

Further, as a second activation method, the key input function is activated by means of a method of "simultaneous operation to two or more keys".

The action of this case is, for example, as follows. A monitoring circuit (in this case, it is embedded in the processor 4 and not shown) constantly monitors an input from the keys 3 even if the processor 4 is in a sleep state. When the processor 4 is in a sleep state, if the monitoring circuit detects that all of the two or more predetermined keys are pressed, the monitoring circuit activates the processor 4 and allows the processor to start acceptance of inputs of other keys. At this moment, as the first activation method described above, it is also possible that the monitoring circuit and the timer 13 measure a time length in which all of the two or more predetermined keys are pressed simultaneously, and from a comparison result between the time length and a preset time threshold, determine whether or not to activate the processor 4 based on a comparison result between the time length and a preset time threshold.

With the configuration described above, only when two or more particular keys are selected from a plurality of keys 3, the remaining keys are activated. As such, unintended activation can be avoided. Further, only when the two or more keys are operated sequentially for a certain time period, the remaining keys are activated. As such, unintended activation can be avoided more effectively.

It should be noted that the portable information processing terminal 1 may also have the following functions. First, a function, which allows a change in the setting of two or more keys to be operated, may be added. This function can be implemented by providing a switching circuit between an input of an AND circuit which determines that a plurality of keys are pressed simultaneously, and a key output, to thereby change the connection. As a result, authentication of an operator can be performed by using a combination of keys as the key of authentication, whereby security can be improved. Further, the keys, which are located at positions where the convex portions of the palm of the hand or fingers spontaneously contact when the portable information processing terminal 1 is held by a hand, are assigned to keys, which should be operated simultaneously. Accordingly, it is possible to activate the processor just by holding the terminal without performing a plurality of operating steps, whereby operability can be improved. Of course, the keys, which should be operated simultaneously, may be assigned according to the size of the hand and the length of the fingers of the operator. Second, similar to the first activation method, a function, which allows a change in the setting of a time length, in which two or more keys are operated simultaneously, may be added. Third, a function, which is capable of notifying an operator of keys which should be operated simultaneously through any of screen display, sound generation, and vibration generation, or a combination thereof, when any key or a predetermined key is pressed, and, which allows a change in the setting thereof, may be added. This function can be implemented by using part of the function of the communication system 7 (e.g., sound generation function and vibration generation function of a mobile phone). As s result, the portable information processing terminal 1 is able to assist an operator who forgets the keys which should be operated simultaneously.

Further, as a third activation method, the key input function is activated by means of a method of "sequentially operating two or more keys".

The action of this case is, for example, as follows. When a predetermined first key among the keys 3 is pressed, the processor 4, in a sleep state, is activated. After outputting a time measurement start instruction to the timer 13, the processor 4 starts press monitoring of a key which should be pressed next among the keys 3, and monitoring of an interruption from the timer 13. The timer 13 outputs an interruption signal to the processor 4 when the measured time becomes not less than an upper-limit time threshold (TH) having been recorded, for example, in the memory 5 (setting parameter 53) and set to the timer 13. If the processor 4 receives an interruption signal before detecting pressing of the key which should be pressed next, the processor 4 stops key press monitoring and returns to a sleep state immediately. On the other hand, if the processor 4 detects pressing of the key which has been waited for before receiving an interruption signal, the processor 4 reads, from the timer 13, the elapsed time from the start of time measurement, and initializes the timer 13. Then, the processor 4 compares the elapsed time with a lower-limit time threshold (TL) having been recorded in the memory 5 (setting parameter 53) or the like, and if "elapsed time < TL", immediately returns to a sleep state. If "TL ≤ elapsed time", the processor 4 checks whether or not the key which should be pressed next (the key which should be monitored) is defined. If the key is defined, the processor 4 again outputs a time measurement start instruction to the timer 13, and starts press monitoring of the key which should be pressed next and monitoring of an interruption from the timer 13. If the key which should be pressed next (the key which should be monitored) is not defined, the processor 4 starts acceptance of input via other keys as well.

With the configuration described above, only when two or more particular keys are selected from a plurality of keys and operated in a particular sequence and in particular timing, the remaining keys are activated. As such, unintended activation can be avoided.

It should be noted that the portable information processing terminal 1 may also have the following functions. First, a function, which allows a change in the setting of two or more keys, which should be operated sequentially, may be added. This function can be implemented by the sequence of the keys to be operated, which is stored in the memory 5 (setting parameter 53) so as to be changeable, and the processor 4 reading the sequence of the keys timely. As a result, authentication of an operator can be performed by using the sequence of the keys as a key of authentication, whereby security can be improved. Second, a function, which allows to set time intervals and timing (TL, TH) for pressing keys, for the respective keys, may be added. This function can be implemented by setting the different information which is stored in the memory 5 (setting parameter 53). As a result, authentication of an operator can be performed by using the time intervals or timing (or rhythm) of key operations as a key of authentication, whereby security can be improved. Third, a function, which is capable of notifying an operator of the keys which should be operated and operation timing in which the keys should be operated through any of screen display, sound generation, and vibration generation, or a combination thereof, when any key or a predetermined key is pressed, and allows a change in the settings thereof, may be added. This function can be implemented by using part of the function of the communication system 7 (e.g., sound generation function and vibration generation function of a mobile phone). As a result, the portable information processing terminal 1 is able to assist an operator who forgets the sequence of the keys to be operated, operation timing in which the keys should be operated, or the like.

Further, as a fourth activation method, the key input function is activated by means of a method of "multiple operations to one key".

The action of this case is, for example, as follows. When a predetermined key among the keys 3 is pressed, the processor 4, in a sleep state, is activated. After outputting a time measurement start instruction to the timer 13, the processor 4 starts press monitoring of the same key and monitoring of an interruption from the timer 13. The timer 13 outputs an interruption signal to the processor 4 when the measured time becomes not less than an upper-limit time threshold (TH) having been recorded, for example, in the memory 5 (setting parameter 53) and set to the timer 13. If the processor 4 receives an interruption signal before detecting the next pressing of the key, the processor 4 stops key press monitoring and immediately returns to a sleep state. On the other hand, if the processor 4 detects pressing of the key which has been waited for before receiving an interruption signal, the processor 4 reads, from the timer 13, the elapsed time from the start of the time measurement, and initializes the timer 13. Then, the processor 4 compares the elapsed time with a lower-limit time threshold (TL) having been recorded in the memory 5 (setting parameter 53) or the like, and if "elapsed time < TL", immediately returns to a sleep state. If "TL ≤ elapsed time", the processor 4 checks whether or not it is defined to continuously check the next pressing of the key. If it is defined that continuous checking is required, the processor 4 again outputs a time measurement start instruction to the timer 13, and starts press monitoring of the same key and monitoring of an interruption from the timer 13. If it is not defined that continuous checking is required, the processor 4 starts acceptance of input via other keys as well.

With the configuration described above, only when a particular key is selected from a plurality of keys and operated at a particular time, the remaining keys are activated. As such, unintended activation can be avoided.

It should be noted that the portable information processing terminal 1 may also have the following functions. First, a function, which allows a change in the setting of the key to be operated, may be added. Second, a function, which allows settings of time intervals for pressing the key and timing (TL, TH), may be added. Third, a function, which is capable of notifying an operator of the keys which should be operated and operation timing through any of screen display, sound generation, and vibration generation, or a combination thereof, when any key or a predetermined key is pressed, and allows a change in the setting thereof, may be added.

These functions can be implemented by the same methods as those shown in the first to third activation methods described above, and have similar effects.

It should be noted that while monitoring of inputs to the keys for activating the suspended key inputting function may be performed by the processor 4, it may be substituted with and performed by a dedicated monitoring circuit. Further, the arrangement of the keys is not limited to the positions described in the above exemplary embodiments, if the positions of the keys are not specified particularly. Further, the keys include a software keyboard. Furthermore, a touch sensor or an optical sensor can be used as a substitution.

Besides the methods of preventing erroneous operation of the keys 3 by the processing performed by the processor 4 as described above, it is also possible to take measures by changing the physical structure of the portable information processing terminal. For example, in order that the key tops of the keys 3 on the rear side do not protrude from the surface of the casing, it is possible to form concave portions such that the key mounting parts are embedded inside the casing. It is also possible to form eaves higher than the key tops on the surface of the casing. With this structure, it is possible to effectively prevent unintentional activation, which may be caused when the keys exposed on the surface of the casing are touched by an object around them.

SEVENTH EXEMPLARY EMBODIMENT

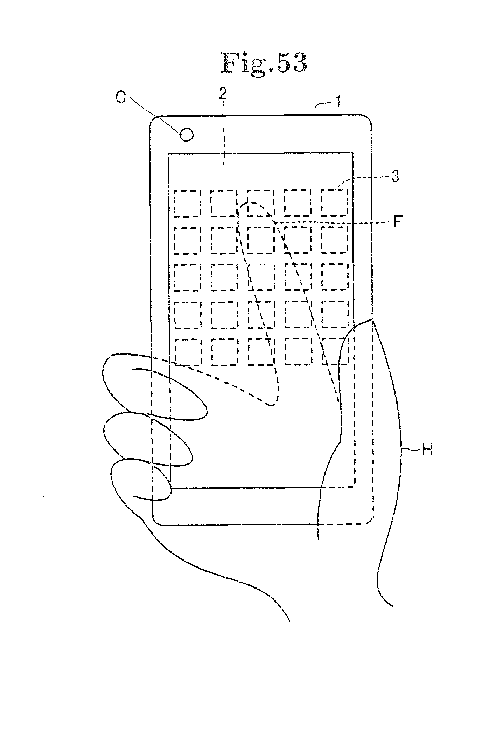

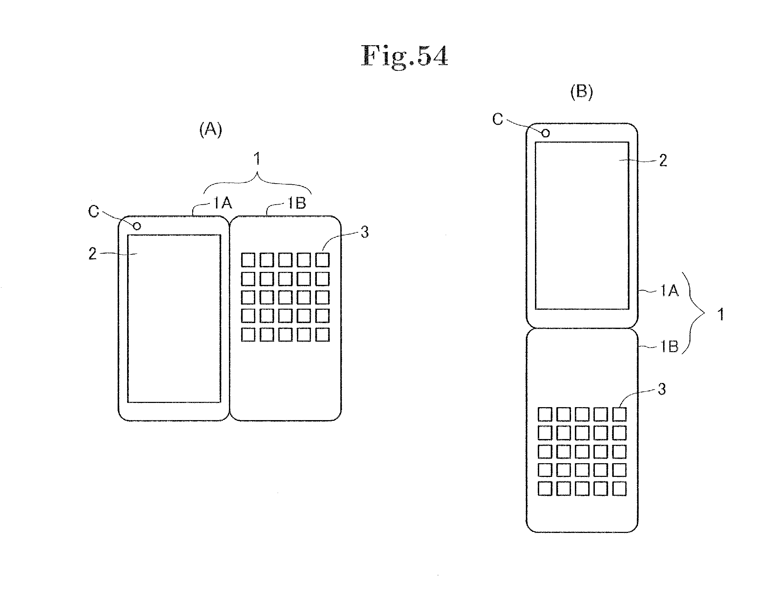

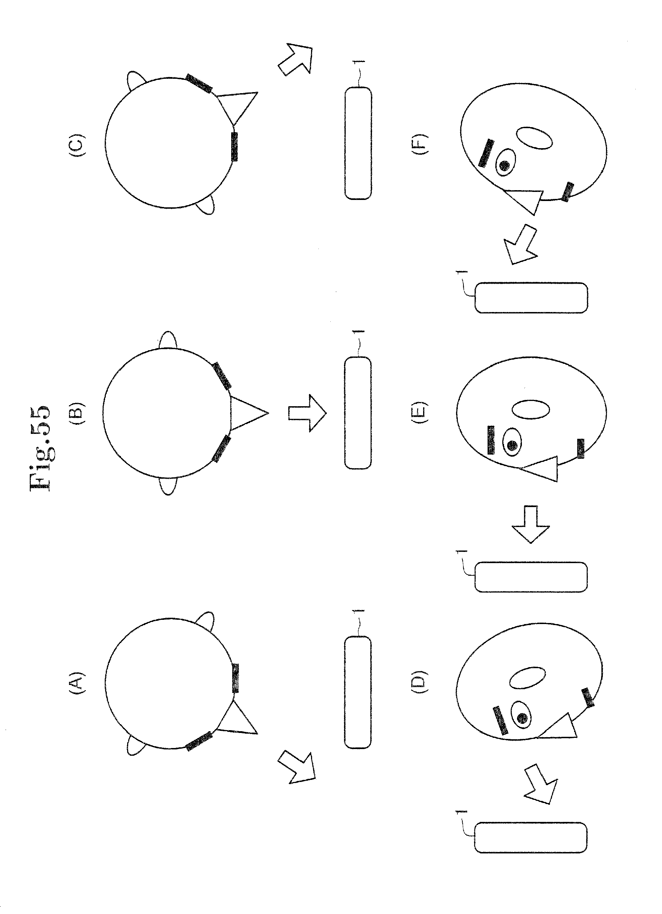

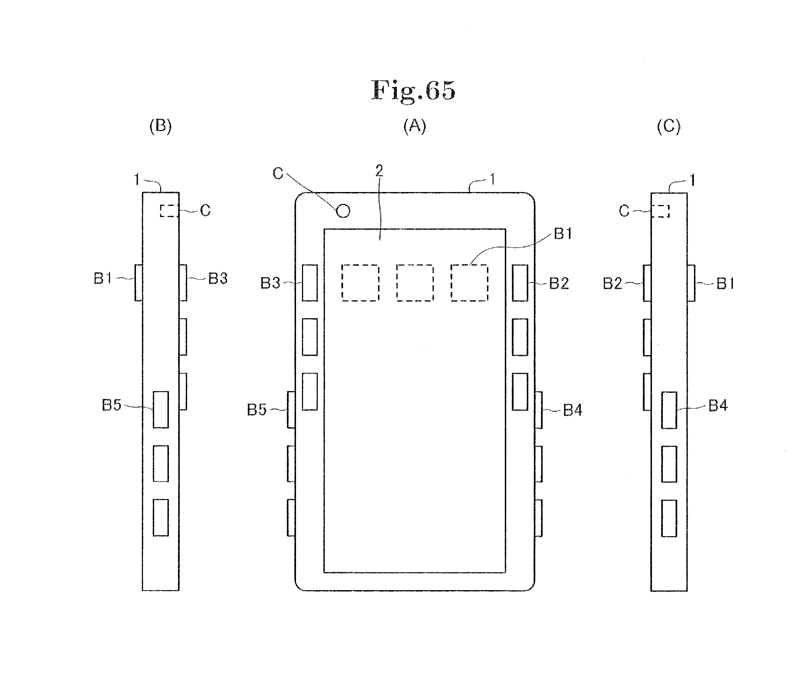

Next, a seventh exemplary embodiment of the present invention will be described with reference to Figs. 53 to 65. Fig. 53 is an illustration showing a state of using a portable information processing terminal according to the present embodiment. Fig. 54 is an external view showing the configuration of the portable information processing terminal of the present embodiment. Figs. 55 to 64 are illustrations for explaining states of inputting information in the portable information processing terminal. Fig. 65 is an external view showing another configuration of the portable information processing terminal.

[Configuration]

The portable information processing terminal 1 according to the present invention has an almost similar configuration to that described in the second exemplary embodiment, and also has the following functions. It should be noted that the portable information processing terminal 1 of the present invention may have, or may not have, the functions of the above-described other exemplary embodiments.

Fig. 53 shows a state where an operator holds the portable information processing terminal 1, configured as described above, in his/her hand H and operates it. As shown in Fig. 53, when the operator holds it in a manner that the touch panel 2 is in front and the keys 3 are located on the rear surface, the hand H of the operator is positioned on the rear side of the portable information processing terminal 1, and a finger F (index finger) of the operator is positioned on the keys 3 on the rear side. Thereby, for the operator, it is possible to prevent the visibility from being impaired by the hand H and the finger F covering the touch panel 2 including the display 21, and the operator is able to easily operate the keys 3 on the rear side by the finger F.

As shown in Fig. 53, the portable information processing terminal 1 of the present embodiment is equipped with an image acquisition means such as a camera C in the periphery of the surface of the touch panel 2 side. The portable information processing terminal 1 captures the face of an operator H, who is looking at the touch panel 2, by the camera C, and detects the direction of the face and the direction of the eye gaze of the operator H from the captured image, to thereby detect positional information and vector information corresponding to the direction of the face and the direction of the eye gaze detected. As such, while positional information and vector information are input with use of the stylus pen P or a finger in the second exemplary embodiment described above, the present embodiment is configured to input positional information and vector information by detecting the postural action of the operator such as a direction of the face and a direction of the eye gaze, in particular, facial action.

While, in the above description, the case where the portable information processing terminal 1 is formed of one casing has been shown as an example, the form of the portable information processing terminal 1 is not limited to the above-described form. For example, as shown in Fig. 54, the portable information processing terminal 1 may be formed of two casings including a display-side casing 1A having the touch panel 2 on a surface and an input device-side casing 1B having a plurality of keys on a surface, which are joined via a hinge (not shown). Fig. 54(A) shows the case where the portable information processing terminal 1 is laterally unfolded with a long side being the axis, and Fig. 54(B) shows the case where it is vertically unfolded with a short side being the axis, depending on the position of the hinge. Further, as shown in Fig. 53, the portable information processing terminal 1 may be used in a state where the display-side casing 1A and the input device-side casing 1B are folded back to back.

It should be noted that although the example shown in Figs. 53 and 54 is equipped with the touch panel 2, the portable information processing terminal 1 of the present embodiment is not necessarily equipped with the touch panel 2. The touch panel indicated by a reference numeral 2 may be a display device not having a touch sensor.

The processor 4 provided to the portable information processing terminal 1 detects an operating state input to the touch panel 2 or the keys 3, and performs processing according to the detected operating state. Further, the processor 4 controls operation of the camera C to detect postural action of the operator such as a direction of the face and a direction of the eye gaze from the captured image. The processor 4 has a function of accepting a predetermined input (input acceptance means). The predetermined input is an input according to a combination of positional information and vector information, which are determined from the postural action of the operator such as a direction of the face and a direction of the eye gaze, and the operating state input to the keys 3. This function will be described in detail in the description of operation provided below. It should be noted that while the function for implementing the operation described below is realized by programs installed in the processor 4, it may be implemented by logic circuits.

[Operation]

Next, operation of the above-described portable information processing terminal 1, in particular, operation of the processor 4, will be described with reference to Figs. 55 to 64.

As described in the second exemplary embodiment, the processor 4 executes the program while referring to the preset application data and setting parameters. As such, the processor 4 reads specified part of the image data, performs arithmetic processing to the read data, and outputs the processed data to the display, which is the touch panel 2, as display information. Then, the display presents the display information input thereto.

Then, as described with reference to Fig. 6, the processor 4 records the character 111 was image information to be displayed on the display, in the logical virtual display space 100 constructed in a physical address space of the memory. And the processor 4 outputs, to the display, the view window 110, which is part of the virtual display space 100 and is to be displayed on the display. The processor 4 performs scrolling processing by sliding the view window 110 and the character 111, and performs extension/reduction processing by changing the size of the view window 110 and the character 111, and performs rotation processing to the view window 110 and the character 111, in the virtual display space 100.

Here, description will be given on processing, performed by the processor 4 of the portable information processing terminal 1, to accept, from the camera C and the keys 3, an instruction to displace the character 111 or the like to a predetermined direction, scroll the entire screen, rotate in a predetermined direction, or extend or reduce. It should be noted that the processor 4 accepts not only a processing instruction with respect to image data such as the character 111, but also various instructions such as a character input instruction and other operational instructions.

First, an operation of determining positional information and vector information which are based on a two-dimensional coordinate on the touch panel 2, from a facial image of the operator captured by the camera C of the portable information processing terminal 1, will be described with reference to Figs. 55 to 57. In this example, the degree of the direction of the face and the direction of the eye gaze are correlated to predetermined coordinates on the touch panel 2, whereby such coordinates can be input.

Fig. 55(B) shows an illustration of the operator viewed from the top when the operator faces the front of the portable information processing terminal 1. Fig. 55(E) shows an illustration of the operator viewed from a side when the operator faces the front of the portable information processing terminal 1. In this state, the portable information processing terminal 1 captures the facial image of the operator by the camera C, performs face-recognition processing from such a facial image, and recognizes that the operator faces the front from the contour of the entire face, and the positions of the eyes, the eyebrows, the mouth, and the like. Then, when recognizing that the operator faces the front of the touch panel 2, the portable information processing terminal 1 accepts it as an input specifying the center coordinate of the touch panel 2.

When the operator moves the face to the right as shown in Fig. 55(A) from the state of Fig. 55(B), the portable information processing terminal 1 performs face-recognition processing from the facial image captured by the camera C, recognizes that the operator faces the right from the contour of the entire face, and the positions of the eyes, the eyebrows, the mouth, and the like, and accepts it as an input specifying a predetermined coordinate positioned on the right side of the center of the touch panel 2. Further, when the operator moves the face to the left as shown in Fig. 55 (C), the portable information processing terminal 1 performs face-recognition processing from the facial image captured by the camera C, recognizes that the operator faces the left from the contour of the entire face, and the positions of the eyes, the eyebrows, the mouth, and the like, and accepts it as an input specifying a predetermined coordinate positioned on the left side of the center of the touch panel 2.

Similarly, when the operator moves the face down or up as shown in Fig. 55(D) or 55(F) from the state of Fig. 55(E), the portable information processing terminal 1 performs face-recognition processing from the facial image captured by the camera C, recognizes that the operator faces downward or upward from the contour of the entire face and the positions of the eyes, the eyebrows, the mouth, and the like, and accepts it as an input specifying a predetermined coordinate positioned on the lower side or the upper side of the center of the touch panel 2 respectively.

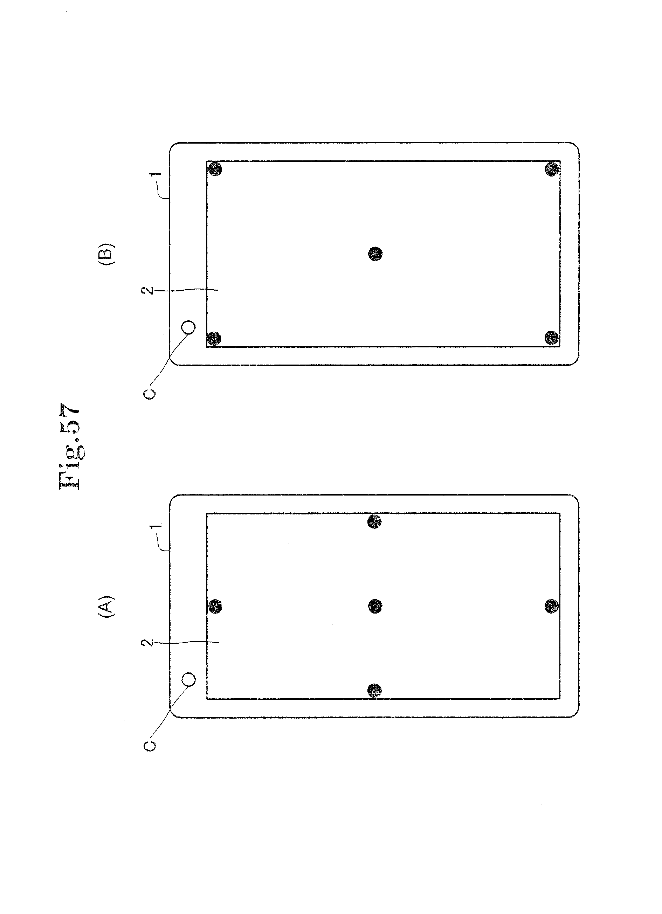

In order to determine a coordinate from the direction of the face as described above, it is preferable that the portable information processing terminal 1 performs calibration processing beforehand to associate the degree of the direction of the face of the operator and a two-dimensional coordinate on the touch panel 2. In this example, the degree of the direction of the face is given by a rotational angle of the direction of the face observed from the camera C. While the displacement quantity of the position of the face generated by moving the face in parallel in an up, down, left, or right direction can also be used as a degree, the detailed description thereof is omitted herein. For example, as shown in Figs. 57(A) and 57(B), each time black spots are displayed on particular positions (center and up, down, left, and right, or center and the four corners) on the touch panel 2, the operator changes the direction of the face such that the direction of the face becomes a degree of the direction of the face associated with the respective positions of the black spots. Then, the portable information processing terminal 1 memorizes the degree of the direction of the face of the operator detected from the image captured by the camera C when the respective black spots are displayed, in association with the display coordinates of the black spots. Further, a coordinate on the touch panel 2 other than the black spots is also associated with an intermediate direction on the basis of the degrees of the direction of the face associated with the black spots respectively. For example, a rotational angle of the direction of the face and a coordinate may be associated with each other by linear interpolation calculation.

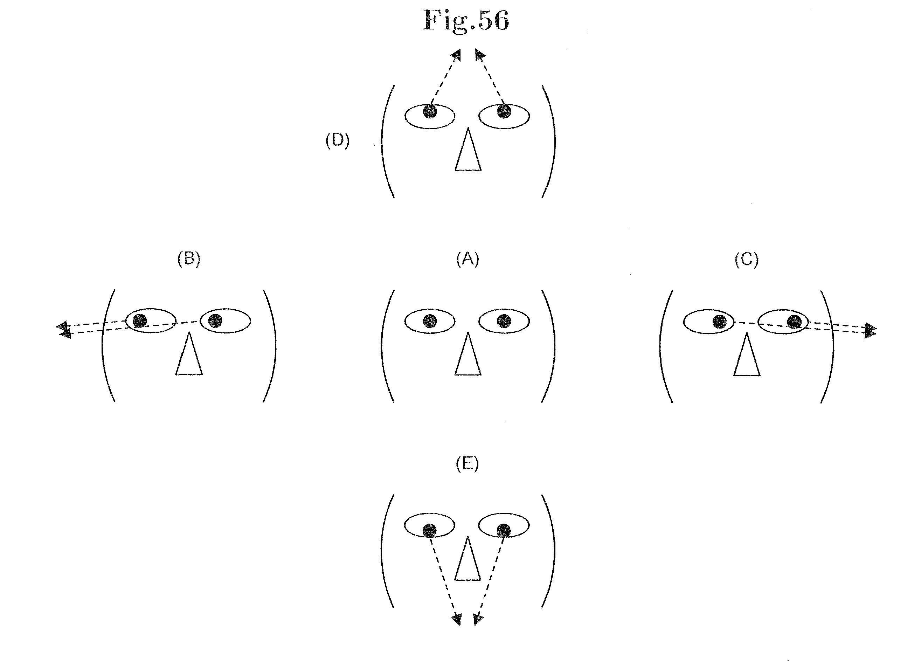

Similarly, the portable information processing terminal 1 is also able to recognize the direction of the eye gaze of the operator from the facial image captured by the camera C. To be specific, the portable information processing terminal 1 recognizes the positions of the eyes and the pupils on the face of the operator on the captured facial image. If the pupils are positioned at the centers of the eyes as shown in Fig. 56(A), the portable information processing terminal 1 recognizes that the eye gaze of the operator points to the touch panel 2 straight. On the other hand, when the operator moves the eye gaze to the right as shown in Fig. 56(B), the portable information processing terminal 1 performs face-recognition processing on the facial image captured by the camera C, and recognizes that the eye gaze of the operator points to a right direction, according to the positions of the pupils in the eyes. Thereby the portable information processing terminal 1 accepts an input specifying a predetermined coordinate positioned on the right side relative to the center of the touch panel 2. Further, when the operator moves the eye gaze to the left as shown in Fig. 56(C), the portable information processing terminal 1 performs face-recognition processing on the facial image captured by the camera C, and recognizes that the eye gaze of the operator points to a left direction, according to the positions of the pupils in the eyes. Thereby the portable information processing terminal 1 accepts an input specifying a predetermined coordinate positioned on the left side relative to the center of the touch panel 2.

Similarly, when the eye gaze of the operator points upward or downward as shown in Fig. 56 (D) or 56(E), the portable information processing terminal 1 performs face-recognition processing on the facial image captured by the camera C, and recognizes that the eye gaze of the operator points upward or downward, according to the positions of the pupils in the eyes. Thereby the portable information processing terminal 1 accepts an input specifying a predetermined coordinate positioned on the upper side or the lower side relative to the center of the touch panel 2.

In order to determine a coordinate from the direction of the eye gaze as described above, it is preferable that the portable information processing terminal 1 performs calibration processing beforehand to associate the degree of the direction of the eye gaze of the operator and a two-dimensional coordinate on the touch panel 2. In this example, the degree of the direction of the eye gaze is given by relative positions of the pupils on the basis of the form of the eyes of the operator observed from the camera C. For example, as shown in Figs. 57(A) and 57(B), each time black spots are displayed on particular positions (center and up, down, left, and right, or center and the four corners) on the touch panel 2, the operator changes the direction of the eye gaze such that the direction of the eye gaze becomes a degree of the direction of the eye gaze associated with the respective positions of the black spots. Then, the portable information processing terminal 1 memories the degree of the direction of the eye gaze of the operator detected from the image captured by the camera C when the respective black spots are displayed, in association with the display coordinates of the black spots. Further, a coordinate on the touch panel 2 other than the black spots is also associated with an intermediate direction on the basis of the degrees of the direction of the eye gaze associated with the black spots respectively. For example, a position of the pupils and a coordinate may be associated with each other by linear interpolation calculation. Further, the degree of the direction of the eye gaze is affected by the direction of the face. While such an effect can be corrected by determining the direction of the face, the detailed description thereof is omitted herein.

In this way, the portable information processing terminal 1 accepts an input of a two-dimensional coordinate on the touch panel 2 according to the direction of the face or the direction of the eye gaze recognized from the facial image captured by the camera C. However, the portable information processing terminal 1 may accept an instruction of a two-dimensional coordinate on the touch panel 2 by accepting an input of vector information, which is directional information determined based on the direction of the face or the direction of the eye gaze. For example, it is possible to associate directions of the face or directions of the eye gaze with vectors consisting of directions and magnitudes, respectively, and accept an input of a two-dimensional coordinate determined by the sum of vectors corresponding to one or more inputs of directions of the face or the directions of the eye gaze.

For example, in the case of using directions of the face, the following association can be considered.
Face direction moves to "front - up - front": Vector of "magnitude 1 upward"
Face direction moves to "front - down - frost": Vector of "magnitude 1 downward"
Face direction moves to "front - left - front": Vector of "magnitude 1 to the left"
Face direction moves to "front - right - front": Vector of "magnitude 1 to the right"
Face direction moves to "front - down - up - front": Vector of "magnitude 2 upward"
Face direction moves to "front - up - down - front": Vector of "magnitude 2 downward"
Face direction moves to "front - right - left - front": Vector of "magnitude 2 to the left"
Face direction moves to "front - left - right - front": Vector of "magnitude 2 to the right"
It should be noted that the recognizable types of the magnitudes of vectors can be increased by increasing the number of iterations of the changes in the direction of the face. This also applies to the case of using directions of the eye gaze.

The vector input described above may be used as a replacement of the vector inputting method using keys shown in Figs. 10 and 14.

Further, when starting the input operation, the portable information processing terminal 1 receives an instruction of input acceptance start. Further, regarding the end of input operation, it is performed according to an instruction of input acceptance end. Such an instruction method may be based on an input operation using an arbitrary key, a touch sensor, or an adjacent sensor, or may be performed by detecting vibration, which is applied by the operator, with an acceleration sensor, or may be performed by inputting a command using a voice.

Further, each piece of the vector information may be handled as an element constituting a code. And information can be input by handling a group including a plurality of pieces of vector information as one information unit. Specifically, a Morse code is configured by using a vector in a left direction as a dash and using a vector in a right direction as a dot. Regarding Morse codes, as a group of codes are constructed in consideration of a frequency of use of the characters, character inputs can be performed effectively. Further, as the operator is able to remember the codes, it is highly convenient. It should be noted that a combination of pieces of vector information for coding is not limited to that described above.

Next, description will be given on a specific example of inputting a two-dimensional code using the direction of the face and the direction of the eye gaze as described above. First, a method of inputting a given point (position: coordinate) on the touch panel 2 using the camera C and the keys 3, in the portable information processing terminal 1, will be described. This method is also applied to an instruction of selecting a character displayed at the input position.

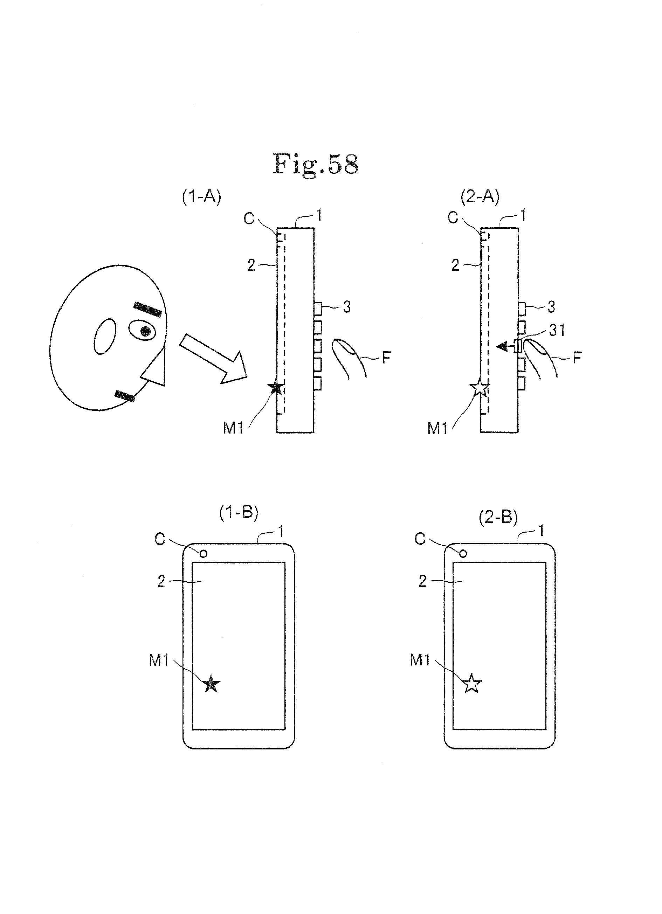

Fig. 58 is an illustration explaining a method of inputting a point (coordinate) on the touch panel 2 in the case where the touch panel 2 (display device) and the camera C, and the keys 3, are provided on the opposite surfaces of the casing of the portable information processing terminal 1, respectively.

First, the portable information processing terminal 1 has been set to accept a facial image beforehand. In this state, when the operator moves the face to the lower left as shown in Fig. 58(1-A), the portable information processing terminal 1 specifies an arbitrary point at the lower left on the touch panel 2, corresponding to the degree of the direction of the face according to the facial image captured by the camera C, as a temporary position (temporary position input). Then, as shown in Fig. 58(1-B), a provisionally determined icon M1 is displayed at the specified position on the touch panel 2. Next, as shown in Figs. 58(2-A) and 58(2-B), when a predetermined key 31 on the rear side is half-pressed while keeping the specified state of the point M 1 by the direction of the face, a position input of the point, where the provisionally determined icon M1 is displayed (temporary position input), is fixed. As such, the provisionally determined icon M1 (filled star) is changed to a determined icon M1 (outlined star), and information specifying the position of such a point is accepted as input positional information.

As described above, when inputting an arbitrary with respect point to a display device such as the touch panel 2, as the point specified on the touch panel 2 by the degree of the direction of the face of the operator is fixed by half-pressing the key 31, even if a position has been erroneously input by the direction of the face, the position can be input repeatedly until it is fixed, whereby the operability can be improved. In particular, the operability is improved even when the portable information processing terminal 1 is held by one hand. It should be noted that a point input on the touch panel 2 may be fixed by full-pressing the key 31. Further, while a temporary position input of an arbitrary point is performed by the direction of the face in the above description, a temporary position input of an arbitrary point may be performed using the direction of the eye gaze as described above.

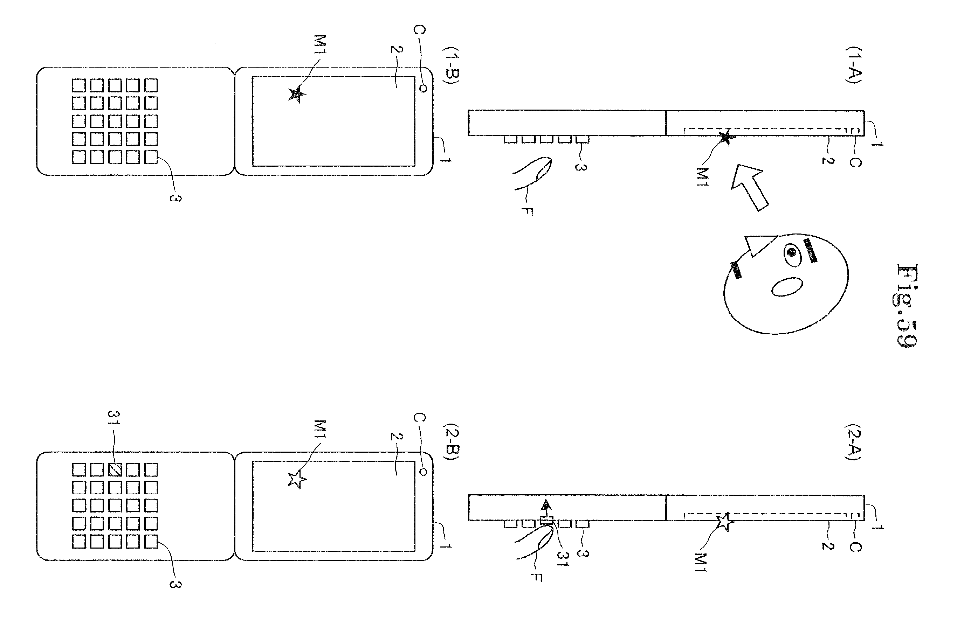

Fig. 59 shows the case where the portable information processing terminal 1 is of a folding type, and the touch panel 2 and the camera C, and the keys 3, are arranged on the same surface when unfolded. Similar to the above, even in the portable information processing terminal 1 of such a configuration, when inputting an arbitrary point by the direction of the face, a point M1 specified by the direction of the face is fixed when the key 31 is half-pressed or full-pressed.

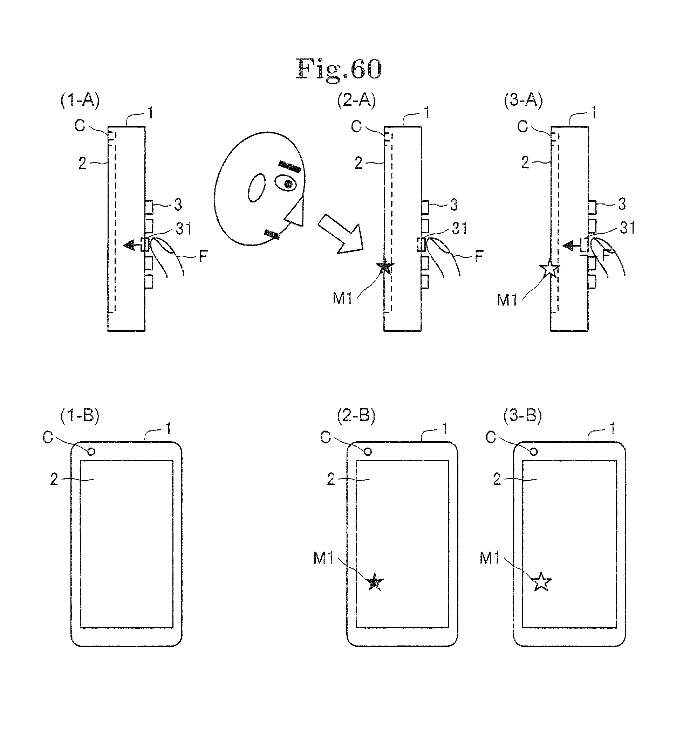

Next, Fig. 60 is an illustration for explaining another method of inputting a point (coordinate) on the touch panel 2 in the case where the touch panel 2 and the camera C, and the keys 3, are provided on the opposite surfaces of the casing of the portable information processing terminal 1.

First, as shown in Figs. 60(1-A) and 60(1-B), when a predetermined key 31 on the rear side is half-pressed, the camera C is activated and captures an image, whereby recognition processing of the direction of the face (or eye gaze) of the operator begins. This means that the state becomes an input start state by the direction of the face (or direction of the eye gaze). Next, when the operator moves the face (or eye gaze) to the lower left as shown in Figs. 60 (2-A) and 60(2-B) while keeping the half-pressed state of the key 31, the portable information processing terminal 1, specifies an arbitrary point at the lower left on the touch panel 2, corresponding to the degree of the direction of the face (or direction of the eye gaze) according to the facial image captured by the camera C, as a temporary position (temporary position input). Then, a provisionally determined icon M1 is displayed at the specified position on the touch panel 2.

Next, as shown in Figs. 60(3-A) and 60(3-B), when the predetermined key 31 on the rear side is full-pressed while keeping the specified state of the point M1 by the direction of the face (or direction of the eye gaze), the position input of the point, where the provisionally determined icon M1 is displayed (temporary position input), is fixed. As such, the provisionally determined icon M1 (filled star) is changed to a determined icon M1 (outlined star), and information specifying the position of such a point is accepted as input positional information.

As described above, as the camera C is activated by half-pressing the key 31 and a temporary position input is able to be performed using the direction of the face or the direction of the eye gaze, it is possible to reduce power consumption until that time. Further, when inputting an arbitrary point with respect to the display device such as the touch panel 2, as the point specified on the touch panel 2 by the direction of the face (or direction of the eye gaze) of the operator is fixed when the key 31 is full-pressed, even if a position has been erroneously input by the direction of the face (or the direction of the eye gaze), the position can be input repeatedly until it is fixed, whereby the operability can be improved.

Next, description will be given on a method of inputting arbitrary two points on the touch panel 2 utilizing the operation of inputting one point on the touch panel 2 as described above, to thereby input vector information including a direction linking such two points and a distance thereof.

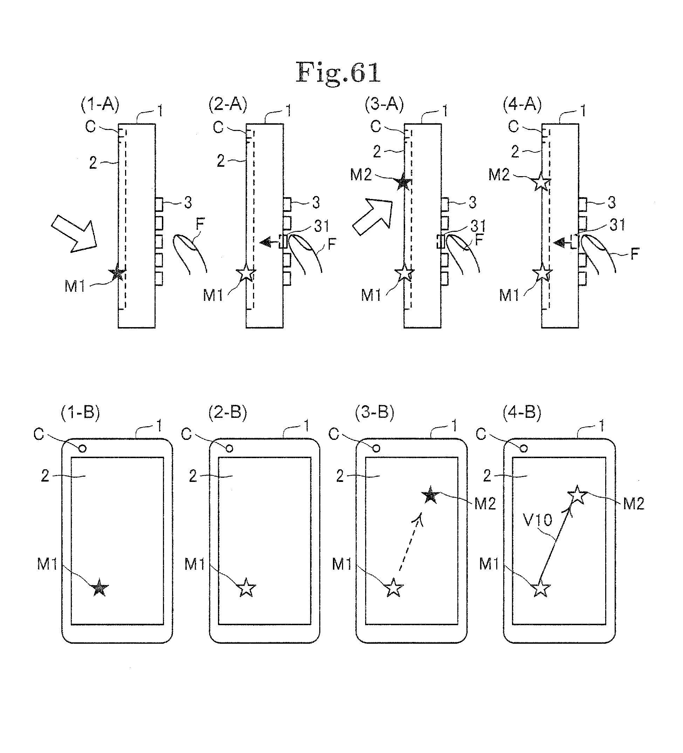

Fig. 61 shows a first method of inputting vector information on the touch panel 2 in the case where the touch panel 2 (display device) and the camera C, and the keys 3, are provided on the opposite surfaces of the casing of the portable information processing terminal 1.

First, as shown in Figs. 61(1-A) and 61(1-B), when the operator moves the face to the lower left, the portable information processing terminal 1 specifies an arbitrary point at the lower left on the touch panel 2 corresponding to the degree of the direction of the face according to the facial image captured by the camera C (first temporary position input). Then, a first provisionally determined icon M1 is displayed at the specified position on the touch panel 2. Next, as shown in Figs. 61(2-A) and 61(2-B), when the predetermined key 31 on the rear side is half-pressed while keeping the specified state of the point M1 by the direction of the face, the position input of the point, where the first provisionally determined icon M1 is displayed (first temporary position input), is fixed. As such, the provisionally determined icon M 1 (filled star) is changed to a determined icon M1 (outlined star), and information specifying the position of the first point M1 is accepted as first positional information. It should be noted that when the half-pressing of the key 31 on the rear side is canceled, the input acceptance of the first point M1 is released, whereby the state returns to the initial state.

Next, when the operator moves the face to the upper right while keeping the half-pressed state of the key 31 on the rear side, the portable information processing terminal 1 specifies a second arbitrary point at the upper right on the touch panel 2, corresponding to the degree of the direction of the face according to the facial image captured by the camera C (second temporary position input). Then, a second provisionally determined icon M2 is displayed at the specified position on the touch panel 2.

Then, as shown in Fig. 61(4-A) and Fig. 61(4-B), when the half-pressed key 31 on the rear side is full-pressed while keeping the specified state of the point M2 by the direction of the face, the position input of the point, where the second provisionally determined icon M2 is displayed (second temporary position input), is fixed. As such, the second provisionally determined icon M2 (filled star) is changed to a second determined icon M2 (outlined star), and information specifying the position of the second point M2 is accepted as second positional information.

Thereby, as shown in Fig. 61(4-A) and Fig. 61(4-B), an input of vector information V10, in which the first point M1 accepted as the first positional information is the start point and the second point M2 accepted as the second positional information is the end point, is completed, and is accepted by the processor 4.

As described above, an input of the first point M1 onto the display device such as the touch panel 2 is fixed by half-pressing the particular key 31, and the state is changed to a state of waiting for an input of a second point. Then, the second point is fixed by full-pressing the half-pressed key 31. As such, even if the first point and the second point are erroneously input, the positions can be input repeatedly until they are fixed, whereby the operability can be improved. For example, even after the predetermined key 31 is half-pressed and the first point M1 is fixed, if the pressing of the key 31 is released before full-pressing the key 31 to fix the second point M2, the processor 4 operates to invalidate the position input of the first point M1 and the second point M2.

While, in the above-description, the first point M1 and the second point M2 are fixed by pressing the same key 31, they may be fixed by pressing (half-pressing or full-pressing) different keys 3, respectively.

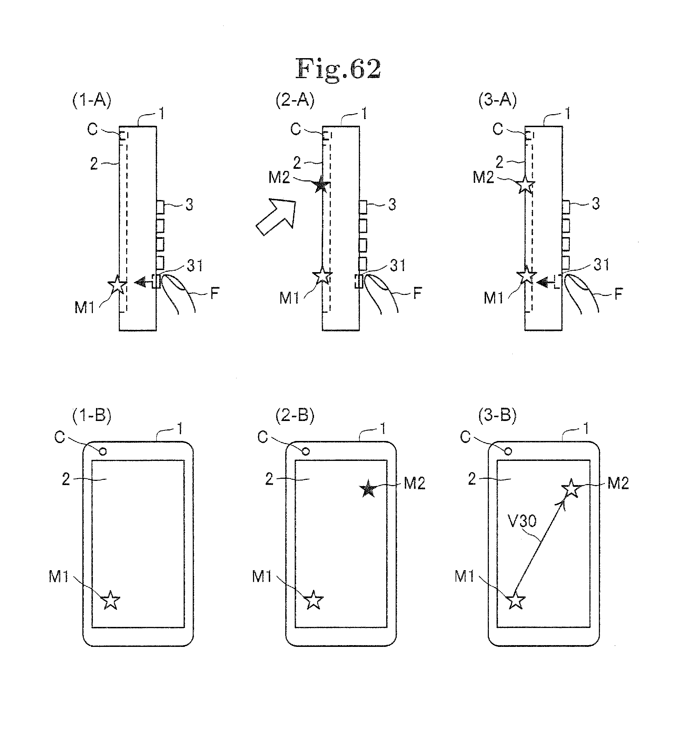

Next, Fig. 62 shows a second method of inputting vector information on the touch panel 2 in the case where the touch panel 2 (display device) and the camera C, and the keys 3, are provided on the opposite surfaces of the casing of the portable information processing terminal 1.

First, as shown in Fig. 62(1-A) and Fig. 62(1-B), when an arbitrary key 31 on the rear side is half-pressed, the camera C is activated and captures an image, whereby recognition processing of the direction of the face (or direction of the eye gaze) of the operator begins. This means that the state becomes an input start state by the direction of the face (or direction of the eye gaze). At the same time, a reference icon M 1 is displayed as a first point at the position corresponding to the half-pressed key 31 on the display 21 of the touch panel 2, and the position of the reference icon M1 is fixed as a first point M1. Then, an input of a second point is waited. It should be noted that if the half-pressing of the key 31 on the rear side is canceled, the fixing of the first point M1 is released, and the state returns to the initial state.

It should be noted that the respective keys 3 on the rear side are associated with the respective regions, formed by dividing the display surface of the touch panel 2 into a plurality of regions, corresponding to the positions of the keys 3. This means that if the keys 3 are arranged in a matrix on the rear side of the touch panel 2, the display surface of the touch panel 2 are divided and set to be a matrix having the same number as that of the arrangement of the keys 3. Then, when a key 3 positioned at a lower right, in a state of facing the surface on which the key 3 is formed, is half-pressed, a point within the corresponding lower left region on the touch panel 2, which is the opposite surface thereof, is fixed as a first point M1.

Then, an arbitrary point on the touch panel 2 is specified by the direction of the face as shown in Fig. 62(2-A) and Fig. 62(2-B), while keeping the half-pressed state of the key 31 on the rear side as described above (second temporary position input). This means that a second point M2 is specified. The second point M2 is the end point of vector information to be input, where the first point M1, which is the reference icon M1, is the start point of the vector information. Then, a provisionally determined icon M2 is displayed on the touch panel 2.

Further, as shown in Fig. 62(3-A) and Fig. 62(3-B), when full-pressing the half-pressed key 31 on the rear side while keeping the specified state of the second point M2 by the direction of the face, the second point M2 is fixed. As such, the provisionally determined icon M2 (filled star) is changed to a determined icon M2 (outlined star), and information specifying the position of the point M2 is accepted as second positional information. Thereby, an input of vector information V30 is completed, in which the first point M1 fixed by half-pressing the key 31 on the rear side is the start point and the second point M2 which specified the position on the touch panel 2 by the direction of the face and was fixed by full-pressing the key 31 is the end point. And the vector information V30 is accepted by the processor 4.

Even if the first point and the second point are erroneously input, as they can be input repeatedly until they are fixed, the operability can be improved. Additionally, as the camera C is activated by half-pressing the key 31 on the rear side, the power consumption until the activation can be saved.

It should be noted that all of temporary position inputs on the display device corresponding to given points, which are performed with the stylus pen P or a finger in the second exemplary embodiment, may be performed by the direction of the face or the direction of the eye gaze recognized according to images captured by the camera C, although the description thereof is not given in the present embodiment. Thereby, even when the portable information processing terminal is operated by one hand, the operability can be improved.

Further, while description has been given above on the case of inputting a two-dimensional coordinate, which serves as a temporary position, directly according to the direction of the face or the direction of the eye gaze, it is also possible to input a two-dimensional coordinate serving as a temporary position by using a method of inputting vector information corresponding to a change in the direction of the face or in the direction of the eye gaze as described above.

Further, while, in the above description, the direction of the face or the direction of the eye gaze of the operator is detected according to a facial image of the operator captured by the camera C, and inputs of positional information and vector information are accepted according thereto, it is also possible to detect both the "direction of the face" and the "direction of the eye gaze" according to a facial image, and accept inputs of positional information and vector information according to the detection results thereof.

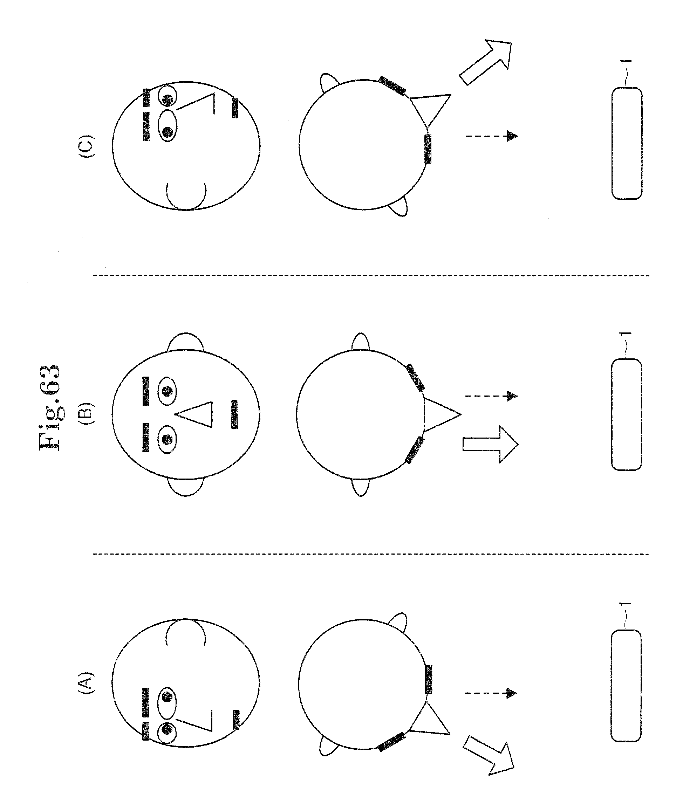

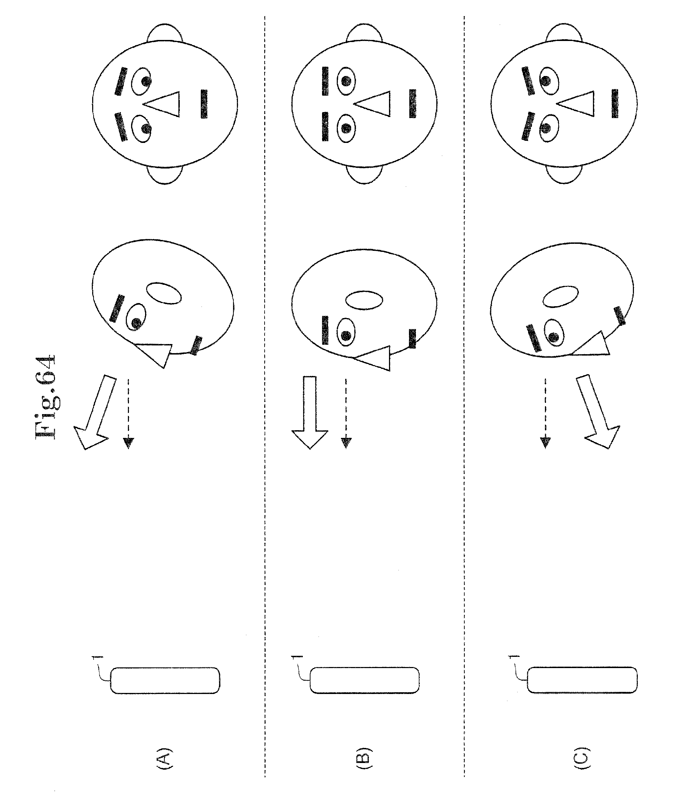

For example, if the "direction of the face" and the "direction of the eye gaze" are changed in the same direction, it is possible not to accept an input by the "direction of the face" corresponding to such a motion. Specifically, if the "direction of the face" is moved to the right and the "direction of the eye gaze" is also moved to the right, the operator turns off both of the face and the eyes from the portable information processing terminal 1. In that case, it is highly likely that the operator pays attention to an event other than the portable information processing terminal 1. On the other hand, as shown in Fig. 63(A), if the face and the eyes are moved in opposite directions such that the direction of the face is moved to the right while the eye gaze still looks at the terminal and the pupils are displaced in the left direction, it is determined that the operator performs an input operation, whereby a two-dimensional coordinate and vector information corresponding to the direction of the face at that time are accepted. Similarly even in the case of Fig. 63(C) and Figs. 64(A) and 64(C), if the face and the eye gaze are moved in opposite directions, a two-dimensional coordinate and vector information corresponding to the direction of the face at that time are accepted. Consequently, an effect of preventing an input of erroneous information can be achieved. Of course, it is possible to define a determination criterion so as to accept an input only when the direction of the eye gaze of the operator is toward the portable information processing terminal 1.

Further, the above description has exemplary described the case of operating a particular key, which has been provided to the portable information processing terminal 1, in order to allow a two-dimensional coordinate to be input as a temporary position input by the direction of the face and the direction of the eye gaze, to fix the temporary position input, and to cancel the temporary position input. But it is also possible to provide a dedicated key for performing each operation to the portable information processing terminal 1. For example, as shown in Fig. 65, the portable information processing terminal 1 may be equipped with three keys B 1 on the rear surface thereof, which are operable by the index finger of the operator, and the respective keys are assigned as a key for allowing a temporary position input, a key for fixing the temporary position input, and a key for canceling the temporary position input.

Further, the portable information processing terminal 1 may be equipped with three keys B2 on the right side of the periphery of the touch panel 2, which are operable by the thumb of the right hand of the operator, and the respective keys are assigned as a key for allowing a temporary position input, a key for fixing the temporary position input, and a key for canceling the temporary position input. Further, the portable information processing terminal 1 may be equipped with three keys B3 on the left side of the periphery of the touch panel 2, which are operable by the thumb of the left hand of the operator, and the respective keys are assigned as a key for allowing a temporary position input, a key for fixing the temporary position input, and a key for canceling the temporary position input. Further, the portable information processing terminal 1 may be equipped with three keys B4 on the right surface thereof, which are operable by the index finger, the middle finger, the ring finger, and the little finger of the left hand of the operator, and the respective keys are assigned as a key for allowing a temporary position input, a key for fixing the temporary position input, and a key for canceling the temporary position input. Further, the portable information processing terminal I may be equipped with three keys B5 on the left surface thereof, which are operable by the index finger, the middle finger, the ring finger, and the little finger of the right hand of the operator, and the respective keys are assigned as a key for allowing a temporary position input, a key for fixing the temporary position input, and a key for canceling the temporary position input. Outputs from these keys may be input to the processor 4 and processed in the same manner as outputs from the keys 3. Further, these keys may be touch sensors or adjacent sensors.

As described above, by providing, to the portable information processing terminal 1, dedicated keys for performing an operation, in which a two-dimensional coordinate is input as a temporary position input by the direction of the face or the direction of the eye gaze, operability for the operator can be improved.

It should be noted that the operation with respect to inputting a two-dimensional coordinate as a temporary position input by the direction of the face or the direction of the eye gaze as described above is not limited to be performed using the keys provided to the portable information processing terminal 1. For example, it is possible to process a facial image captured by the camera C to detect blinking of the right and left eyes and an open/close motion of the mouth, and assign processing, such as allowing a temporary position input, fixing the temporary position input, and canceling the temporary position input, to the respective motions. Further, by applying this operation, it is also possible to realize an input means which is similar to a mouse. Specifically, an input of a two-dimensional coordinate may be performed by the direction of the face or the direction of the eye gaze, and blinking by the right and left eyes may correspond to clicks of right and left buttons of a mouse, and open/close motion of the mouth may correspond to a click of the center button of the mouse.

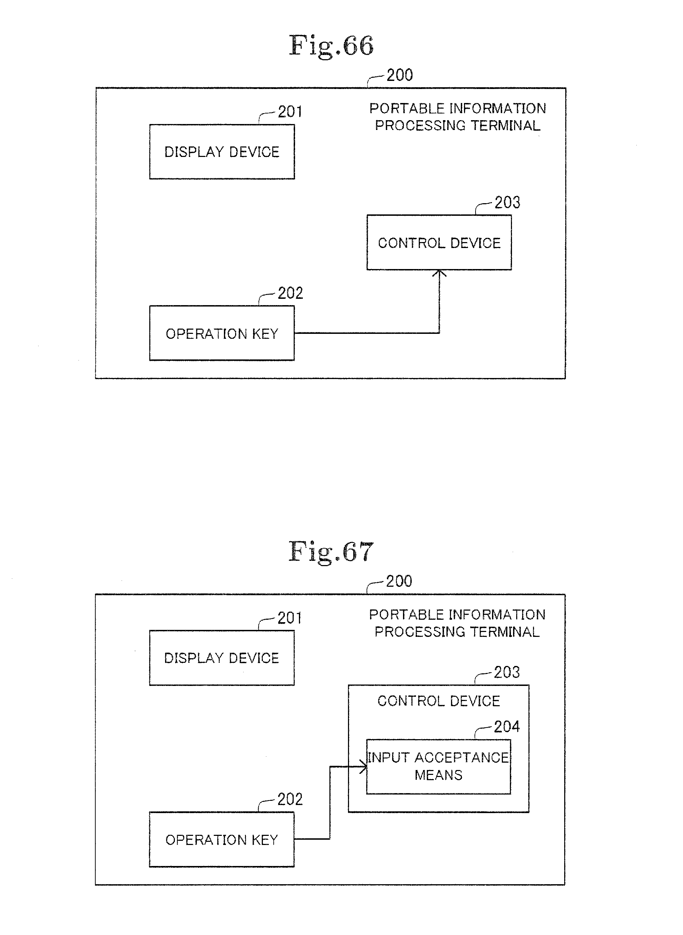

The whole or part of the exemplary embodiments disclosed above can be described as the following supplementary notes. Hereinafter, schematic configurations of the portable information processing devices according to the present invention will be described with reference to Figs. 66 to 75. Further, configurations of the programs and the input acceptance methods according to the present invention will be described. However, the present invention is not limited to the configurations described below.

(Supplementary Note A1: see Fig. 66)

A portable information processing terminal 200 comprising:

a display device 201 disposed on a predetermined surface of a casing of the portable information processing terminal 200;
operation keys 202 disposed on a surface of the casing, the surface being on an opposite side of the surface on which the display device 201 is formed; and
a control device 203 that detects an operating state input to the operation keys 202, and performs processing according to the detected operating state, wherein
when the control device 203 detects a sequential operation performed on a plurality of the operation keys 202, the control device 203 accepts an input of information representing a predetermined direction corresponding to the sequential operation performed on the plurality of the operation keys 202.

(Supplementary Note A2)

The portable information processing terminal according to supplementary note A1. wherein the control device accepts an input of vector information including the information representing the predetermined direction corresponding to the sequential operation performed on the plurality of the operation keys and information representing a magnitude corresponding to the sequential operation performed on the plurality of the operation keys.

(Supplementary Note A3)

The portable information processing terminal according to supplementary note A2, wherein the information representing the direction corresponds to the sequence of the sequentially-operated operation keys, and the information representing the magnitude corresponds to a distance between the sequentially-operated operation keys.

(Supplementary Note A4)

The portable information processing terminal according to supplementary note A2 or A3, wherein the control device converts the input vector information into information representing a vector along a display surface of the display device or information representing a rotation along the display surface of the display device.

(Supplementary Note A5)

The portable information processing terminal according to supplementary note A4, wherein the control device identifies whether to convert the vector information into information representing a vector along the display surface of the display device or information representing a rotation along the display surface of the display device, based on the input vector information.

(Supplementary Note A6)

The portable information processing terminal according to supplementary note A3, wherein the operation keys are arranged in rows and columns, and the control device accepts an input corresponding to the sequence of the sequentially-operated operation keys, in accordance with the number of rows and the number of columns of the sequentially-operated operation keys.

(Supplementary Note A7)

The portable information processing terminal according to supplementary note A3, wherein the control device accepts information corresponding to the number of the sequentially-operated operation keys as information representing the magnitude of the vector information.

(Supplementary Note A8)

The portable information processing terminal according to any of supplementary notes A 1 to A7, wherein when the control device detects a sequential operation performed on a plurality of the operation keys within a predetermined time period, the control device accepts an input of information representing a predetermined direction corresponding to the sequential operation.

(Supplementary Note A9)

The portable information processing terminal according to any of supplementary notes A1 to A8, wherein the control device has a function to be in an operation restricted state in which the control device accepts an operation only performed on a predetermined operation key among the operation keys, and in the operation restricted state, when the control device detects a predetermined operation performed on the predetermined operation key, the control device releases the operation restricted state and accepts an input of information corresponding to an operation performed on any of the operation keys.

(Supplementary Note A10)

The portable information processing terminal according to supplementary note A9, wherein in the operation restricted state, the control device releases the operation restricted state by means of any one of operations including operating a predetermined key for a predetermined time period or longer, simultaneously operating two or more predetermined keys, operating two or more predetermined keys in a predetermined sequence, and operating a predetermined key for a predetermined number of times.

(Supplementary Note A11)

A portable information processing terminal comprising:

a display device disposed on a predetermined surface of a casing of the portable information processing terminal; operation keys disposed on a surface of the casing, the surface being on an opposite side of the surface on which the display device is formed; and
a control device that detects an operating state input to the operation keys, and performs processing according to the detected operating state, wherein

the control device has a function to be in an operation restricted state in which the control device accepts an operation only performed on a predetermined operation key among the operation keys, and in the operation restricted state, when the control device detects a predetermined operation performed on the predetermined operation key, the control device releases the operation restricted state and accepts an input of information corresponding to an operation performed on any of the operation keys.

(Supplementary Note A12: see Fig. 67)

A program for causing a control device 203 of a portable information processing terminal 200 to realize, the portable information processing terminal 200 including: a display device 201 formed on a predetermined surface of a casing of the portable information processing terminal 200; operation keys 202 disposed on a surface of the casing, the surface being on an opposite side of the surface on which the display device 201 is formed; and the control device 203 that detects an operating state input to the operation keys 202 and performs processing according to the detected operating state,

input acceptance means 204 for accepting, when detecting a sequential operation performed on a plurality of the operation keys 202, an input of information representing a predetermined direction corresponding to the sequential operation performed on the plurality of the operation keys 202.

(Supplementary Note A13)

The program according to supplementary note A12, wherein

the input acceptance means accepts an input of vector information including the information representing the predetermined direction corresponding to the sequential operation performed on the plurality of the operation keys and information representing a magnitude corresponding to the sequential operation performed on the plurality of the operation keys.

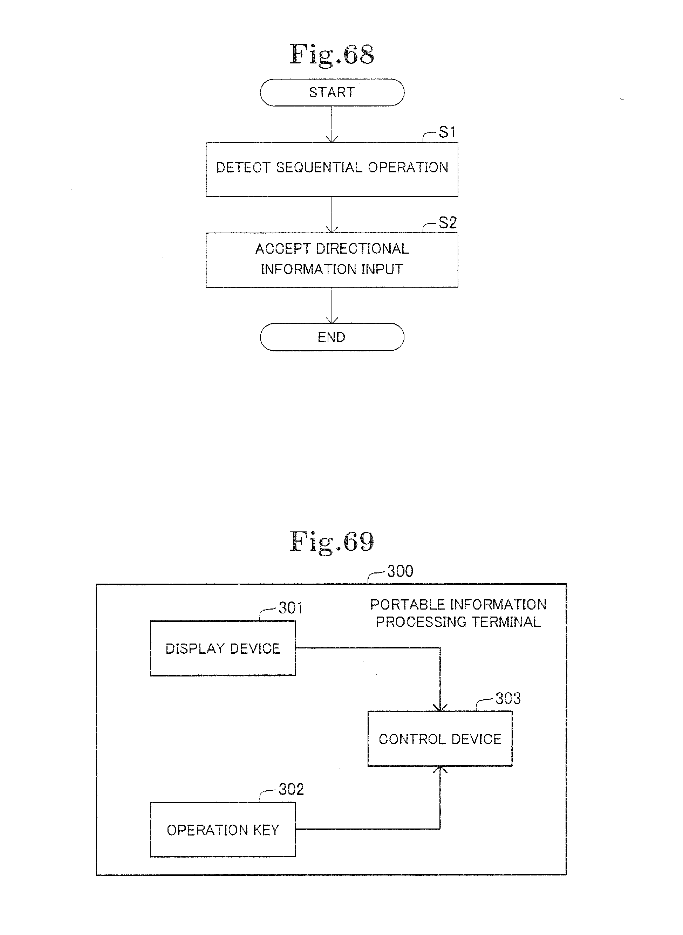

(Supplementary Note A14: see Fig. 68)

An input acceptance method comprising:

in a portable information processing terminal including: a display device formed on a predetermined surface of a casing of the portable information processing terminal; operation keys disposed on a surface of the casing, the surface being on an opposite side of the surface on which the display device is formed; and a control device that detects an operating state input to the operation keys and perform processing according to the detected operating state,

when detecting a sequential operation performed on a plurality of the operation keys (step S1), accepting an input of information representing a predetermined direction corresponding to the sequential operation performed on the plurality of the operation keys (step S2).

(Supplementary Note A15)

The input acceptance method according to supplementary note A14, wherein

the portable information processing terminal accepts an input of vector information including the information representing the predetermined direction corresponding to the sequential operation performed on the plurality of the operation keys and information representing a magnitude corresponding to the sequential operation performed on the plurality of the operation keys.

(Supplementary Note A16)

A computer-readable recording medium storing a program for causing a control device of a portable information processing terminal to realize, the portable information processing terminal including: a display device formed on a predetermined surface of a casing of the portable information processing terminal; operation keys disposed on a surface of the casing, the surface being on an opposite side of the surface on which the display device is formed; and the control device that detects an operating state input to the operation keys and performs processing according to the detected operating state,

input acceptance means for accepting, when detecting a sequential operation performed on a plurality of the operation keys, an input of information representing a predetermined direction corresponding to the sequential operation performed on the plurality of the operation keys.

(Supplementary Note B1: see Fig. 69)

A portable information processing terminal 300 comprising:

a display device 301 of a touch panel type in which information is able to be input by a touching operation;
an operation key 302 disposed at a position different from a position of the display device 301; and
a control device 303 that detects operating states of the display device 301 and the operation key 302, and performs processing according to the detected operating states, wherein
the control device 303 detects a temporary position input specifying a position on the display device 301 by a touching operation performed on the display device 301, and when detecting an operation performed on the operation key 302 in a state where the temporary position input is detected, accepts the position corresponding to the temporary position input as positional information.

(Supplementary Note B2)

The portable information processing terminal according to supplementary note B1, wherein
the control device accepts a position on the display device, input by an operation performed on the display device and/or the operation key, as first positional information, then detects a temporary position input specifying a position on the display device by a touching operation performed on the display device, and when detecting an operation performed on the operation key in a state where the temporary position input is detected, accepts the position corresponding to the temporary position input as second positional information, and accepts an input of vector information, in which the position of the first positional information is a start point and the position of the second positional information is an end point, along a display surface of the display device.

(Supplementary Note B3)

The portable information processing terminal according to supplementary note B2, wherein
a plurality of the operation keys are arranged corresponding to respective regions formed by dividing the display surface of the display device into a plurality of regions, and
the control device accepts a position, on the display surface of the display device, corresponding to one of the operation keys having been operated as the first positional information.

(Supplementary Note B4)

The portable information processing terminal according to supplementary note B3, wherein
an input is able to be made by performing an pressing operation on the operation key in multiple levels, and
the control device accepts a position, on the display surface of the display device, corresponding to a particular operation key on which a pressing operation up to a predetermined level is performed as the first positional information, detects a temporary position input specifying a position on the display device by a touching operation performed on the display device while maintaining the pressing operation up to the predetermined level of the particular operation key, and when detecting a pressing operation up to the next level performed on the particular operation key in a state where the temporary position input is detected, accepts the position corresponding to the temporary position input as the second positional information.

(Supplementary Note B5)

The portable information processing terminal according to supplementary note B2, wherein
an input is able to be made by performing an pressing operation on the operation key in multiple levels, and
the control device detects a first temporary position input specifying a position on the display device by a touching operation performed on the display device, and when detecting a pressing operation up to a predetermined level performed on a particular operation key in a state where the first temporary position input is detected, accepts the position corresponding to the first temporary position input as the first positional information, and detects a second temporary position input specifying a position on the display device by a touching operation performed on the display device while maintaining the pressing operation up to the predetermined level performed on the particular operation key, and when detecting a pressing operation up to the next level performed on the particular operation key in a state where the second temporary position input is detected, accepts the position corresponding to the second temporary position input as the second positional information.

(Supplementary Note B6)

The portable information processing terminal according to supplementary note B4 or B5, wherein during a period from a time when the control device accepts the first positional information to a time when the control device accepts the second positional information, if the pressing operation up to the predetermined level of the particular operation key on accepting the first positional information is released, the acceptance of the first positional information is invalid.

(Supplementary Note B7)

The portable information processing terminal according to any of supplementary notes B 1 to B6, wherein the display device is formed on a predetermined surface of a casing included in the portable information processing terminal, and
the operation key is formed on a surface of the casing, the surface being on an opposite side of the surface on which the display device is formed.

(Supplementary Note B8: see Fig. 69)

A portable information processing terminal 300 comprising:

a display device 301 of a touch panel type in which information is able to be input by a touching operation, the display device 301 being formed on a predetermined surface of a casing included in the portable information processing terminal 300;
an operation key 302 formed on a surface of the casing, the surface being on an opposite side of the surface on which the display device 301 is formed; and
a control device 303 that detects operating states of the display device 301 and the operation key 302, and performs processing according to the detected operating states, wherein
the control device 303 detects a touching operation performed on the display device 301 and an operation performed on the operation key 302, and accepts a predetermined input according to a combination of the touching operation performed on the display device 301 and the operation performed on the operation key 302.

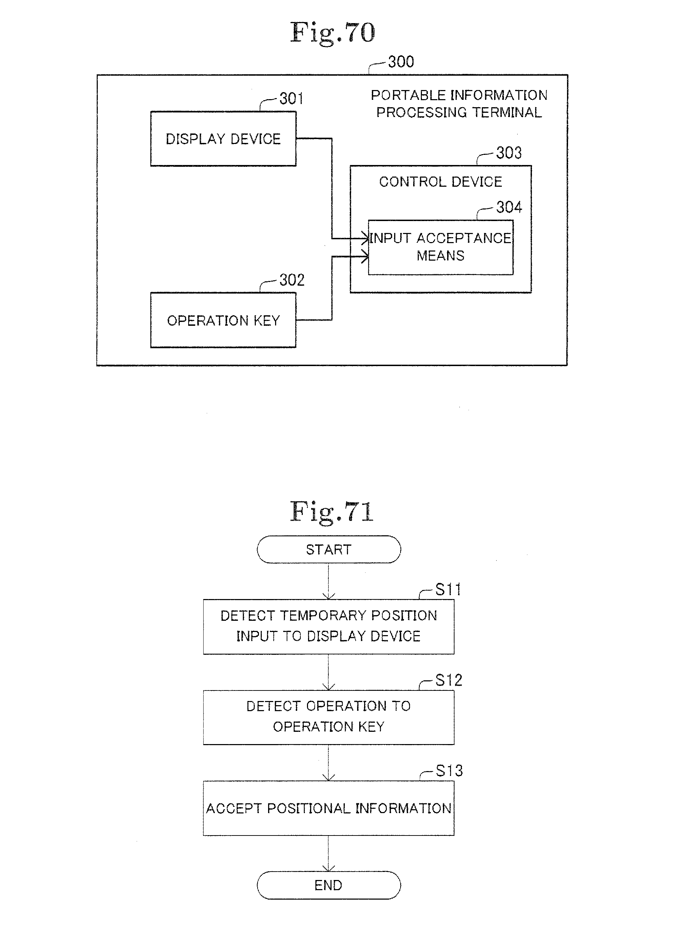

(Supplementary Note B9: see Fig. 70)

A program for causing a control device 303 of a portable information processing terminal 300 to realize, the portable information processing terminal 300 including a display device 301 of a touch panel type in which information is able to be input by a touching operation; an operation key 302 disposed at a position different from a position of the display device; and the control device 303 that detects operating states of the display device 301 and the operation key 302 and performs processing according to the detected operating states,
input acceptance means 304 for detecting a temporary position input specifying a position on the display device 301 by a touching operation performed on the display device 301, and when detecting an operation performed on the operation key 302 in a state where the temporary position input is detected, accepting the position corresponding to the temporary position input as input positional information.

(Supplementary Note B10)

The program according to supplementary note B9, wherein
the input acceptance means accepts a position on the display device, input by an operation performed on the display device and/or the operation key, as first positional information, then detects a temporary position input specifying a position on the display device by a touching operation performed on the display device, and when detecting an operation performed on the operation key in a state where the temporary position input is detected, accepts the position corresponding to the temporary position input as second positional information, and accepts an input of vector information, in which the position of the first positional information is a start point and the position of the second positional information is an end point, along a display surface of the display device.

(Supplementary Note B11: see Fig. 70)

A program for causing a control device 303 of a portable information processing terminal 300 to realize, the portable information processing terminal 300 including a display device 301 of a touch panel type in which information is able to be input by a touching operation, the display device 301 being formed on a predetermined surface of a casing included in the portable information processing terminal 300; an operation key 302 formed on a surface of the casing, the surface being on an opposite side of the surface on which the display device 301 is formed; and the control device 303 that detects operating states of the display device 301 and the operation key 302 and performs processing according to the detected operating states,

input acceptance means 304 for detecting a touching operation performed on the display device 301 and an operation performed on the operation key 302, and accepts a predetermined input according to a combination of the touching operation performed on the display device 301 and the operation performed on the operation key 302.

(Supplementary Note B12: see Fig. 71)

An input acceptance method comprising:

in a portable information processing terminal including a display device of a touch panel type in which information is able to be input by a touching operation; an operation key disposed at a position different from a position of the display device; and a control device that detects operating states of the display device and the operation key and perform processing according to the detected operating states, detecting a temporary position input specifying a position on the display device by a touching operation performed on the display device (step S11), and when detecting an operation performed on the operation key in a state where the temporary position input is detected (step S12), accepting the position corresponding to the temporary position input as input positional information (step S13).

(Supplementary Note B13)

The input acceptance method according to supplementary note B12, further comprising: accepting a position on the display device, input by an operation performed on the display device and/or the operation key, as first positional information, then detecting a temporary position input specifying a position on the display device by a touching operation performed on the display device, and when detecting an operation performed on the operation key in a state where the temporary position input is detected, accepting the position corresponding to the temporary position input as second positional information, and accepting an input of vector information in which the position of the first positional information is a start point and the position of the second positional information is an end point along a display surface of the display device.

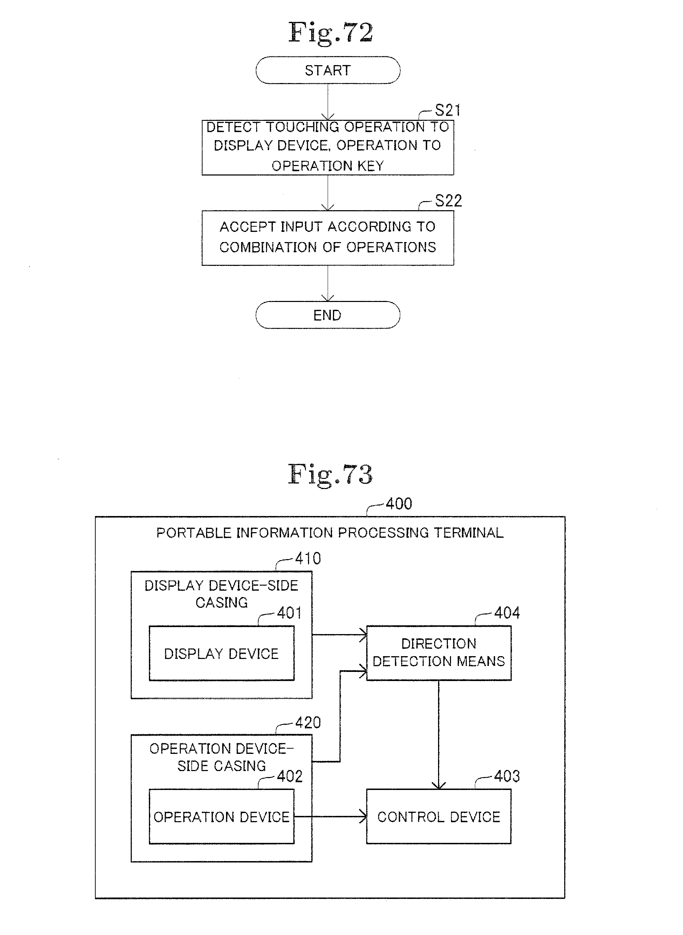

(Supplementary Note B14: see Fig. 72)

An input acceptance method comprising: in a portable information processing terminal including a display device of a touch panel type in which information is able to be input by a touching operation, the display device being formed on a predetermined surface of a casing included in the portable information processing terminal; an operation key formed on a surface of the casing, the surface being on an opposite side of the surface on which the display device is formed; and a control device that detects operating states of the display device and the operation key, and performs processing according to the detected operating states, detecting a touching operation performed on the display device and an operation performed on the operation key (step S21), and accepting a predetermined input according to a combination of the touching operation performed on the display device and the operation performed on the operation key (step S22).

(Supplementary Note B 15)

A computer-readable recording medium storing a program for causing a control device of a portable information processing terminal to realize, the portable information processing terminal including a display device of a touch panel type in which information is able to be input by a touching operation; an operation key disposed at a position different from a position of the display device; and the control device that detects operating states of the display device and the operation key and performs processing according to the detected operating states, input acceptance means for detecting a temporary position input specifying a position on the display device by a touching operation performed on the display device, and when detecting an operation performed on the operation key in a state where the temporary position input is detected, accepting the position corresponding to the temporary position input as input positional information.

(Supplementary Note B16)

A computer-readable recording medium storing a program for causing a control device of a portable information processing terminal to realize, the portable information processing terminal including a display device of a touch panel type in which information is able to be input by a touching operation, the display device being formed on a predetermined surface of a casing included in the portable information processing terminal; an operation key formed on a surface of the casing, the surface being on an opposite side of the surface on which the display device is formed; and the control device that detects operating states of the display device and the operation key, and performs processing according to the detected operating states,
input acceptance means for detecting a touching operation performed on the display device and an operation performed on the operation key, and accepting a predetermined input according to a combination of the touching operation performed on the display device and the operation performed on the operation key.

(Supplementary Note C1 : see Fig. 73)

A portable information processing terminal 400 comprising:

a display device-side casing 410 including a display device 401;
an operation device-side casing 420 including an operation device 402;
a control device 403 that accepts an input value predetermined corresponding to an operating state of the operation device 402 and performs processing according to the input value; and
detection means 404 for detecting a direction of a display surface of the display device 401 and a direction of an operation surface of the operation device 402, wherein
the control device 403 converts the input value corresponding to the operating state of the operation device 402 into an input value corresponding to another operating state according to the direction of the operation surface relative to the display surface, and accepts the converted input value.

(Supplementary Note C2)

The portable information processing terminal according to supplementary note C1, wherein
if the direction of the operation surface is determined to be in a direction opposite to the direction of the display surface based on a predetermined reference, the control device converts the input value corresponding to the operating state of the operation device into an input value corresponding to an operating state of a case where the operation device is provided such that an up and down direction and/or a left and right direction are reversed, and accepts the converted input value.

(Supplementary Note C3)

The portable information processing terminal according to supplementary note C2, wherein
the operation device includes a plurality of operation keys aligned, and
if the direction of the operation surface is determined to be in a direction opposite to the direction of the display surface based on a predetermined reference, the control device converts an input value of each of the operation keys included in the operation device into an input value of another operation key located symmetrically in an up and down direction and/or a left and right direction, and accepts the converted input value.

(Supplementary Note C4)

The portable information processing terminal according to supplementary note C3, wherein
the control device displays, on the display device, operation key arrangement information representing a state where an arrangement of the operation keys included in the operation device is changed symmetrically in an up and down direction and/or a left and right direction.

(Supplementary Note C5)

The portable information processing terminal according to supplementary note C2, wherein
the operation device includes an input device capable of inputting an input value representing a predetermined direction along the operation surface, and
if the direction of the operation surface is determined to be in a direction opposite to the direction of the display surface based on a predetermined reference, the control device converts an input value of the input device included in the operation device into an input value representing a direction which is opposite to the input direction in an up and down direction and/or a left and right direction, and accepts the converted input value.

(Supplementary Note C6)

The portable information processing terminal according to supplementary note C5, wherein as an input direction of the input device included in the operation device, the control device displays, on the display device, input directional information representing a direction opposite to the input direction of the input device in an up and down direction and/or a left and right direction.

(Supplementary Note C7)

The portable information processing terminal according to any of supplementary notes C 1 to C6, wherein the display device-side casing and the operation device-side casing are rotatably engaged with each other such that the direction of the operation surface relative to the display surface is changeable in the same direction or in the opposite direction.

(Supplementary Note C8)

The portable information processing terminal according to any of supplementary notes C1 to C6, wherein the display device-side casing and the operation device-side casing are separated from each other or are configured in a separable manner.

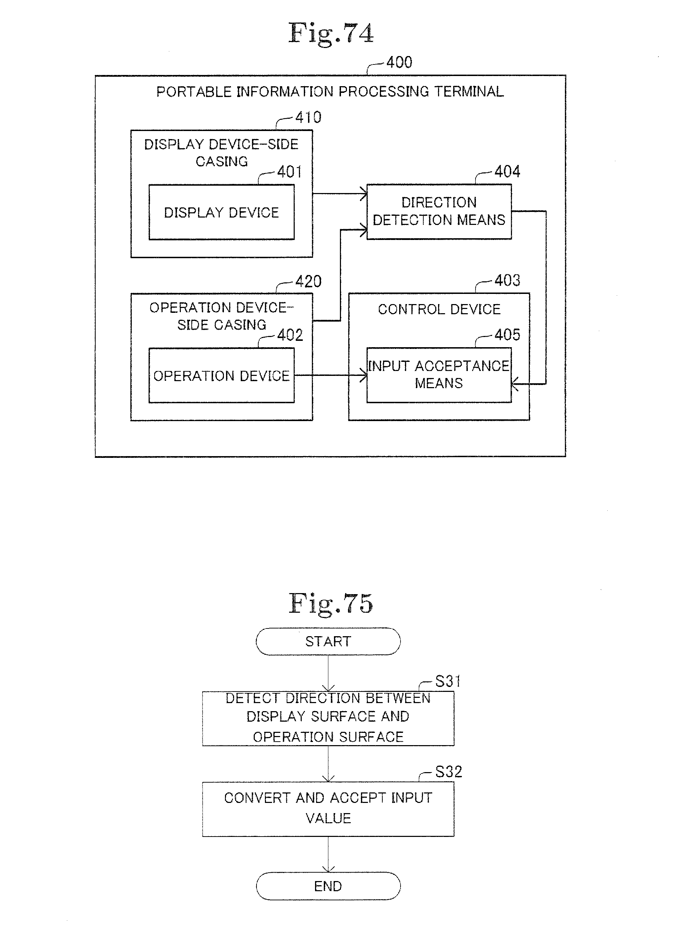

(Supplementary Note C9: see Fig. 74)

A program for causing a control device 403 of a portable information processing terminal 400 to realize, the portable information processing terminal 400 including a display device-side casing 410 including a display device 401; an operation device-side casing 420 including an operation device 402; the control device 403 that accepts an input value predetermined corresponding to an operating state of the operation device 402 and performs processing according to the input value; and detection means 404 for detecting a direction of a display surface of the display device 401 and a direction of an operation surface of the operation device 402, input acceptance means 405 for converting the input value corresponding to the operating state of the operation device 402 into an input value corresponding to another operating state according to the direction of the operation surface relative to the display surface, and accepting the converted input value.

(Supplementary Note C10)

The program according to supplementary note C9, wherein if the direction of the operation surface is determined to be in a direction opposite to the direction of the display surface based on a predetermined reference, the input acceptance means converts the input value corresponding to the operating state of the operation device into an input value corresponding to an operating state of a case where the operation device is provided such that an up and down direction and/or a left and right direction are reversed, and accepts the converted input value.

(Supplementary Note C11: see Fig. 75)

An input acceptance method comprising:

in a portable information processing terminal including a display device-side casing including a display device; an operation device-side casing including an operation device; and a control device that accepts an input value predetermined corresponding to an operating state of the operation device and performs processing according to the input value, detecting a direction of a display surface of the display device and a direction of an operation surface of the operation device (step S31); and converting the input value corresponding to the operating state of the operation device into an input value corresponding to another operating state according to the direction of the operation surface relative to the display surface, and accepting the converted input value (step S32).

(Supplementary Note C12)

The input acceptance method according to supplementary note C 11, further comprising
if the direction of the operation surface is determined to be in a direction opposite to the direction of the display surface based on a predetermined reference, converting the input value corresponding to the operating state of the operation device into an input value corresponding to an operating state of a case where the operation device is provided such that an up and down direction and/or a left and right direction are reversed, and accepting the converted input value.

(Supplementary Note C13)

A computer-readable recording medium storing a program for causing a control device of a portable information processing terminal to realize, the portable information processing terminal including a display device-side casing including a display device; an operation device-side casing including an operation device; the control device that accepts an input value predetermined corresponding to an operating state of the operation device and performs processing according to the input value; and detection means for detecting a direction of a display surface of the display device and a direction of an operation surface of the operation device,
input acceptance means for converting the input value corresponding to the operating state of the operation device into an input value corresponding to another operating state according to the direction of the operation surface relative to the display surface, and accepting the converted input value.

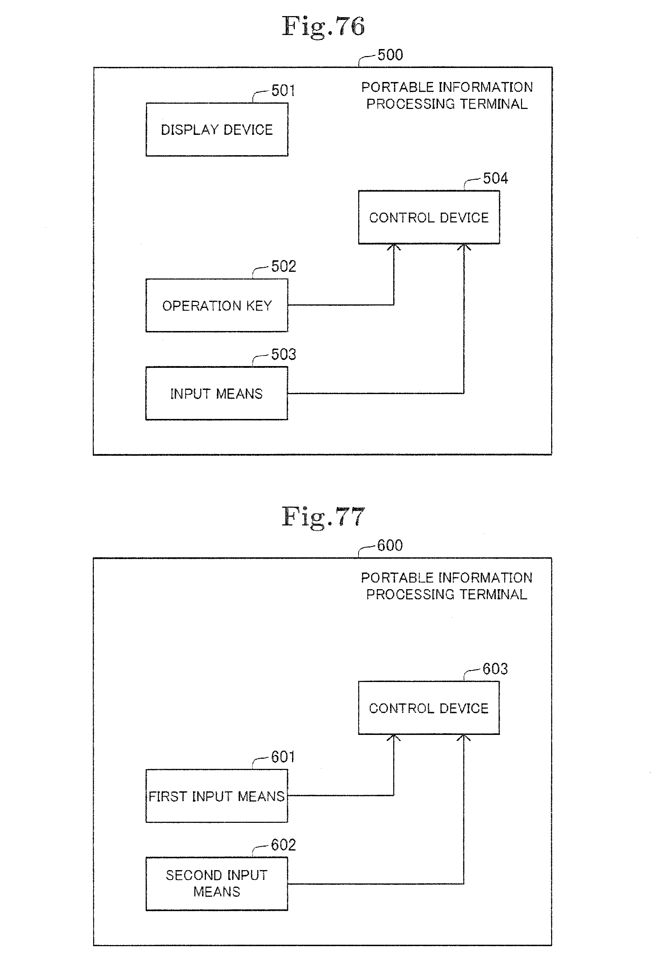

(Supplementary Note D1: see Fig. 76)

A portable information processing terminal 500 comprising:

a display device 501;
an operation key 502;
input means 503 different from the operation key 502; and
a control device 504 that detects input states of the operation key 502 and the input means 503, and performs processing according to the detected input states, wherein
the control device 504 detects a temporary position input specifying a position on the display device 501 by an input to the input means 503, and when detecting an operation performed on the operation key 502 in a state where the temporary position input is detected, accepts the position corresponding to the temporary position input as input positional information.

(Supplementary Note D2)

The portable information processing terminal according to supplementary note D1, wherein
the input means is image acquisition means, and
the control device accepts, as the temporary position input, a position on the display device corresponding to a detection value detected by performing prepared image processing on image information acquired by the image acquisition means.

(Supplementary Note D3)

The portable information processing terminal according to supplementary note D2, wherein
the control device accepts, as the temporary position input, a position on the display device corresponding to a direction of a face or a direction of eye gaze detected by performing prepared image processing on image information acquired by the image acquisition means.

(Supplementary Note D4)

The portable information processing terminal according to supplementary note D2, wherein
the control device detects a direction of a face and a direction of eye gaze by performing prepared image processing on image information acquired by the image acquisition means, and when the direction of the face and the direction of the eye gaze are changed in opposite directions, accepts a position on the display device corresponding to the direction of the face as the temporary position input.

(Supplementary Note D5: see Fig. 77)

A portable information processing terminal 600 comprising:

first input means 601;
second input means 602 different from the first input means 601; and
a control device 603 that detects input states of the first input means 601 and the second input means 602, and performs processing according to the detected input states, wherein
the control device 603 detects a temporary direction input specifying a direction with regard to the portable information processing terminal 600 by an input to the second input means 602, and when detecting an operation performed on the first input means 601 in a state where the temporary direction input is detected, accepts the direction corresponding to the temporary direction input as input directional information.

(Supplementary Note D6)

The portable information processing terminal according to supplementary note D5, wherein
the first input means is an operation key.

(Supplementary Note D7)

The portable information processing terminal according to supplementary note D5, wherein
the second input means is image acquisition means, and
the control device accepts, as the temporary direction input, a direction with regard to the portable information processing terminal corresponding to a detection value detected by performing prepared image processing on image information acquired by the image acquisition means.

(Supplementary Note D8)

The portable information processing terminal according to supplementary note D7, wherein
the control device accepts, as the temporary direction input, a direction with regard to the portable information processing terminal corresponding to a direction of a face or a direction of eye gaze detected by performing prepared image processing on image information acquired by the image acquisition means.

(Supplementary Note D9)

The portable information processing terminal according to supplementary note D7, wherein
the control device detects a direction of a face and a direction of eye gaze by performing prepared image processing on image information acquired by the image acquisition means, and when the direction of the face and the direction of the eye gaze are changed in opposite directions, accepts a direction with regard to the portable information processing terminal corresponding to the direction of the face as the temporary position input.

(Supplementary Note D10: see Fig. 76)

A computer-readable recording medium storing a program for causing a control device 504 of a portable information processing terminal 500 to realize, the portable information processing terminal 500 including a display device 501; an operation key 502; input means 503 different from the operation key 502; and the control device 504 that detects input states of the operation key 502 and the input means 503 and performs processing according to the detected input states,
means for detecting a temporary position input specifying a position on the display device 501 by an input to the input means 503, and when detecting an operation performed on the operation key 502 in a state where the temporary position input is detected, accepting the position corresponding to the temporary position input as input positional information.

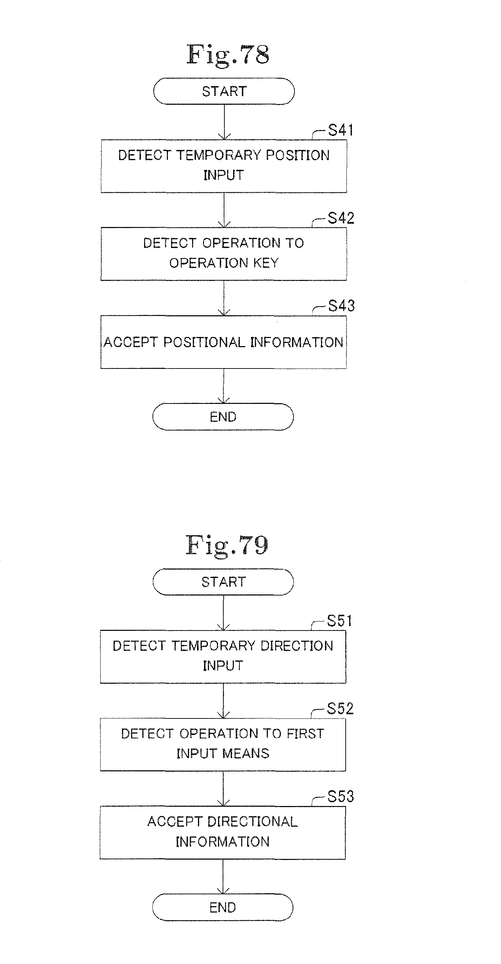

(Supplementary Note D11: see Fig. 78)

An input acceptance method comprising:

by a portable information processing terminal including a display device; an operation key; input means different from the operation key; and a control device that detects input states of the operation key and the input means and performs processing according to the detected input states,
detecting a temporary position input specifying a position on the display device by an input to the input means (step S41), and when detecting an operation performed on the operation key in a state where the temporary position input is detected (step S42), accepting the position corresponding to the temporary position input as input positional information (step S43).

(Supplementary Note D12: see Fig. 77)

A computer-readable recording medium storing a program for causing a control device 603 of a portable information processing terminal to 600 realize, the portable information processing terminal 600 including first input means 601; second input means 602 different from the first input means 601; and the control device 603 that detects input states of the first input means 601 and the second input means 602 and performs processing according to the detected input states,
means for detecting a temporary direction input specifying a direction with regard to the portable information processing terminal 600 by an input to the second input means 602, and when detecting an operation performed on the first input means 601 in a state where the temporary direction input is detected, accepting the direction corresponding to the temporary direction input as input directional information.

(Supplementary Note D13: Fig. 79)

An input acceptance method comprising:

by a portable information processing terminal including first input means; second input means different from the first input means; and a control device that detects input states of the first input means and the second input means and performs processing according to the detected input states,
detecting a temporary direction input specifying a direction with regard to the portable information processing terminal by an input to the second input means (step S51), and when detecting an operation performed on the first input means in a state where the temporary direction input is detected (step S52), accepting the direction corresponding to the temporary direction input as input directional information (step S53).

It should be noted that in the exemplary embodiments and supplementary notes described above, the programs may be stored in storage devices or computer-readable recording media. For example, recording media are portable media including flexible disks, optical disks, magneto-optical disks, and semiconductor memories.
This application is based upon and claims the benefit of priority from Japanese patent applications No. 2010-116116, No. 2010-116117, and No. 2010-116118, filed on May 20, 2010, the disclosures of which are incorporated herein in their entireties by reference.

INDUSTRIAL APPLICABILITY

The present invention is applicable to small-sized information equipment requiring portability such as mobile phones, small-sized computers, navigation systems, and game consoles.

REFERENCE NUMERALS

| | |
|---|---|
| 1 | portable information processing terminal |
| 1A | display-side casing |
| 1B | input device -side casing |
| 1C | hinge |
| 1D | cable |
| 1E | wireless communication |
| 2 | touch panel |
| 3 | key |
| 4 | processor |
| 5 | memory |
| 6 | storage device |
| 7 | communication system |

| | |
|---|---|
| 8 | pointing device |
| 9 | touch pad |
| 10, 11 | acceleration sensor |
| 12 | magnetic sensor |
| 12a | magnet |
| 13 | timer |
| 21 | display |
| 22 | touch sensor |
| 30 | key touch sensor |
| 51 | program |
| 52 | application data |
| 53 | setting parameter |
| 54 | image data |
| 100 | virtual display space |
| 110 | view window |
| 111 | character |
| C | camera |
| B1, B2, B3, B4, B5 | key |

**Claims**

1. A portable information processing terminal comprising:

    a display device formed on a predetermined surface of a casing of the portable information processing terminal;
    operation keys disposed on a surface of the casing, the surface being on an opposite side of the surface on which the display device is formed; and
    a control device that detects an operating state input to the operation keys, and performs processing according to the detected operating state, wherein
    when the control device detects a sequential operation performed on a plurality of the operation keys, the control device accepts an input of information representing a predetermined direction corresponding to the sequential operation performed on the plurality of the operation keys.

2. The portable information processing terminal according to Claim 1, wherein
the control device accepts an input of vector information including the information representing the predetermined direction corresponding to the sequential operation performed on the plurality of the operation keys and information representing a magnitude corresponding to the sequential operation performed on the plurality of the operation keys.

3. The portable information processing terminal according to Claim 2, wherein
the information representing the direction corresponds to the sequence of the sequentially-operated operation keys, and
the information representing the magnitude corresponds to a distance between the sequentially-operated operation keys.

4. The portable information processing terminal according to Claim 2 or 3, wherein
the control device converts the input vector information into information representing a vector along a display surface of the display device or information representing a rotation along the display surface of the display device.

5. The portable information processing terminal according to Claim 4, wherein
the control device identifies whether to convert the vector information into information representing a vector along the display surface of the display device or information representing a rotation along the display surface of the display device, based on the input vector information.

6. The portable information processing terminal according to Claim 3, wherein
the operation keys are arranged in rows and columns, and
the control device accepts an input corresponding to the sequence of the sequentially-operated operation keys, in accordance with the number of rows and the number of columns of the sequentially-operated operation keys.

7. The portable information processing terminal according to Claim 3, wherein
the control device accepts information corresponding to the number of the sequentially-operated operation keys as information representing the magnitude of the vector information.

8. The portable information processing terminal according to any of Claims 1 to 7, wherein
when the control device detects a sequential operation performed on a plurality of the operation keys within a predetermined time period, the control device accepts an input of information representing a predetermined direction corresponding to the sequential operation.

9. The portable information processing terminal according to any of Claims 1 to 8, wherein
the control device has a function to be in an operation restricted state in which the control device accepts an operation only performed on a predetermined operation key among the operation keys, and in the operation restricted state, when the control device detects a predetermined operation performed on the predetermined operation key, the control device releases the operation restricted state and accepts an input of information corresponding to an operation performed on any of the operation keys.

10. The portable information processing terminal according to Claim 9, wherein
in the operation restricted state, the control device releases the operation restricted state by means of any one of operations including operating a predetermined key for a predetermined time period or longer, simultaneously operating two or more predetermined keys, operating two or more predetermined keys in a predetermined sequence, and operating a predetermined key for a predetermined number of times.

11. A computer-readable recording medium storing a program for causing a control device of a portable information processing terminal to realize, the portable information processing terminal including a display device formed on a predetermined surface of a casing of the portable information processing terminal; operation keys disposed on a surface of the casing, the surface being on an opposite side of the surface on which the display device is formed; and the control device that detects an operating state input to the operation keys and performs processing according to the detected operating state,
input acceptance means for accepting, when detecting a sequential operation performed on a plurality of the operation keys, an input of information representing a predetermined direction corresponding to the sequential operation performed on the plurality of the operation keys.

12. An input acceptance method comprising:

in a portable information processing terminals including a display device formed on a predetermined surface of a casing of the portable information processing terminal; operation keys disposed on a surface of the casing, the surface being on an opposite side of the surface on which the display device is formed; and a control device that detects an operating state input to the operation keys and performs processing according to the detected operating state,
when detecting a sequential operation performed on a plurality of the operation keys, accepting an input of information representing a predetermined direction corresponding to the sequential operation performed on the plurality of the operation keys.

13. A portable information processing terminal comprising:

a display device of a touch panel type in which information is able to be input by a touching operation;
an operation key disposed at a position different from a position of the display device; and
a control device that detects operating states of the display device and the operation key, and performs processing according to the detected operating states, wherein
the control device detects a temporary position input specifying a position on the display device by a touching operation performed on the display device, and when detecting an operation performed on the operation key in a state where the temporary position input is detected, accepts the position corresponding to the temporary position input as positional information.

14. The portable information processing terminal according to Claim 13, wherein
the control device accepts a position on the display device, input by an operation performed on the display device and/or the operation key, as first positional information, then detects a temporary position input specifying a position on the display device by a touching operation performed on the display device, and when detecting an operation performed on the operation key in a state where the temporary position input is detected, accepts the position corresponding to the temporary position input as second positional information, and accepts an input of vector information, in which the position of the first positional information is a start point and the position of the second positional information is an end point, along a display surface of the display device.

15. The portable information processing terminal according to Claim 14, wherein
   a plurality of the operation keys are arranged corresponding to respective regions formed by dividing the display surface of the display device into a plurality of regions, and
   the control device accepts a position, on the display surface of the display device, corresponding to one of the operation keys having been operated as the first positional information.

16. The portable information processing terminal according to Claim 15, wherein
   an input is able to be made by performing an pressing operation on the operation key in multiple levels, and
   the control device accepts a position, on the display surface of the display device, corresponding to a particular operation key on which a pressing operation up to a predetermined level is performed as the first positional information, detects a temporary position input specifying a position on the display device by a touching operation performed on the display device while maintaining the pressing operation up to the predetermined level of the particular operation key, and when detecting a pressing operation up to the next level performed on the particular operation key in a state where the temporary position input is detected, accepts the position corresponding to the temporary position input as the second positional information.

17. The portable information processing terminal according to Claim 14, wherein
   an input is able to be made by performing an pressing operation on the operation key in multiple levels, and
   the control device detects a first temporary position input specifying a position on the display device by a touching operation performed on the display device, and when detecting a pressing operation up to a predetermined level performed on a particular operation key in a state where the first temporary position input is detected, accepts the position corresponding to the first temporary position input as the first positional information, and detects a second temporary position input specifying a position on the display device by a touching operation performed on the display device while maintaining the pressing operation up to the predetermined level performed on the particular operation key, and when detecting a pressing operation up to the next level performed on the particular operation key in a state where the second temporary position input is detected, accepts the position corresponding to the second temporary position input as the second positional information.

18. The portable information processing terminal according to any of Claims 16 or 17, wherein
   during a period from a time when the control device accepts the first positional information to a time when the control device accepts the second positional information, if the pressing operation up to the predetermined level of the particular operation key on accepting the first positional information is released, the acceptance of the first positional information is invalid.

19. The portable information processing terminal according to any of Claims 13 to 18, wherein
   the display device is formed on a predetermined surface of a casing included in the portable information processing terminal, and
   the operation key is formed on a surface of the casing, the surface being on an opposite side of the surface on which the display device is formed.

20. A portable information processing terminal comprising:

   a display device of a touch panel type in which information is able to be input by a touching operation, the display device being formed on a predetermined surface of a casing included in the portable information processing terminal;
   an operation key formed on a surface of the casing, the surface being on an opposite side of the surface on which the display device is formed; and
   a control device that detects operating states of the display device and the operation key, and performs processing according to the detected operating states, wherein
   the control device detects a touching operation performed on the display device and an operation performed on the operation key, and accepts a predetermined input according to a combination of the touching operation performed, on the display device and the operation performed on the operation key.

21. A computer-readable recording medium storing a program for causing a control device of a portable information processing terminal to realize, the portable information processing terminal including a display device of a touch panel type in which information is able to be input by a touching operation; an operation key disposed at a position different from a position of the display device; and the control device that detects operating states of the display device and the operation key and performs processing according to the detected operating states, input acceptance means for detecting a temporary position input specifying a position on the display device by a touching operation performed on the display device, and when detecting an operation performed on the operation key in a state where the temporary position input is detected, accepting the position corresponding to the temporary position input as input positional information.

22. An input acceptance method comprising:

in a portable information processing terminal including a display device of a touch panel type in which information is able to be input by a touching operation; an operation key disposed at a position different from a position of the display device; and a control device that detects operating states of the display device and the operation key and performs processing according to the detected operating states, detecting a temporary position input specifying a position on the display device by a touching operation performed on the display device, and when detecting an operation performed on the operation key in a state where the temporary position input is detected, accepting the position corresponding to the temporary position input as input positional information.

23. A portable information processing terminal comprising:

a display device-side casing including a display device;
an operation device-side casing including an operation device;
a control device that accepts an input value predetermined corresponding to an operating state of the operation device and performs processing according to the input value; and
detection means for detecting a direction of a display surface of the display device and a direction of an operation surface of the operation device, wherein
the control device converts the input value corresponding to the operating state of the operation device into an input value corresponding to another operating state according to the direction of the operation surface relative to the display surface, and accepts the converted input value.

24. The portable information processing terminal according to Claim 23, wherein if the direction of the operation surface is determined to be in a direction opposite to the direction of the display surface based on a predetermined reference, the control device converts the input value corresponding to the operating state of the operation device into an input value corresponding to an operating state of a case where the operation device is provided such that an up and down direction and/or a left and right direction are reversed, and accepts the converted input value.

25. The portable information processing terminal according to Claim 24, wherein the operation device includes a plurality of operation keys aligned, and if the direction of the operation surface is determined to be in a direction opposite to the direction of the display surface based on a predetermined reference, the control device converts an input value of each of the operation keys included in the operation device into an input value of another operation key located symmetrically in an up and down direction and/or a left and right direction, and accepts the converted input value.

26. The portable information processing terminal according to Claim 25, wherein the control device displays, on the display device, operation key arrangement information representing a state where an arrangement of the operation keys included in the operation device is changed symmetrically in an up and down direction and/or a left and right direction.

27. The portable information processing terminal according to Claim 24, wherein the operation device includes an input device capable of inputting an input value representing a predetermined direction along the operation surface, and if the direction of the operation surface is determined to be in a direction opposite to the direction of the display surface based on a predetermined reference, the control device converts an input value of the input device included in the operation device into an input value representing a direction which is opposite to the input direction in an up and down direction and/or a left and right direction, and accepts the converted input value.

28. The portable information processing terminal according to Claim 27, wherein
as an input direction of the input device included in the operation device, the control device displays, on the display device, input directional information representing a direction opposite to the input direction of the input device in an up and down direction and/or a left and right direction.

29. The portable information processing terminal according to any of Claims 23 to 28, wherein
the display device-side casing and the operation device-side casing are rotatably engaged with each other such that the direction of the operation surface relative to the display surface is changeable in the same direction or in the opposite direction.

30. The portable information processing terminal according to any of Claims 23 to 28, wherein
the display device-side casing and the operation device-side casing are separated from each other or are configured in a separable manner.

31. A computer-readable recording medium storing a program for causing a control device of a portable information processing terminal to realize, the portable information processing terminal including a display device-side casing including a display device; an operation device-side casing including an operation device; the control device that accepts an input value predetermined corresponding to an operating state of the operation device and performs processing according to the input value; and detection means for detecting a direction of a display surface of the display device and a direction of an operation surface of the operation device,
input acceptance means for converting the input value corresponding to the operating state of the operation device into an input value corresponding to another operating state according to the direction of the operation surface relative to the display surface, and accepting the converted input value.

32. An input acceptance method comprising:

in a portable information processing terminal including a display device-side casing including a display device; an operation device-side casing including an operation device; and a control device that accepts an input value predetermined corresponding to an operating state of the operation device and performs processing according to the input value,
detecting a direction of a display surface of the display device and a direction of an operation surface of the operation device; and
converting the input value corresponding to the operating state of the operation device into an input value corresponding to another operating state according to the direction of the operation surface relative to the display surface, and accepting the converted input value.

33. A portable information processing terminal comprising:

a display device;
an operation key;
input means different from the operation key; and
a control device that detects input states of the operation key and the input means, and performs processing according to the detected input states, wherein
the control device detects a temporary position input specifying a position on the display device by an input to the input means, and when detecting an operation performed on the operation key in a state where the temporary position input is detected, accepts the position corresponding to the temporary position input as input positional information.

34. The portable information processing terminal according to Claim 33, wherein
the input means is image acquisition means, and
the control device accepts, as the temporary position input, a position on the display device corresponding to a detection value detected by performing prepared image processing on image information acquired by the image acquisition means.

35. The portable information processing terminal according to Claim 34, wherein
the control device accepts, as the temporary position input, a position on the display device corresponding to a

# EP 2 573 650 A1

direction of a face or a direction of eye gaze detected by performing prepared image processing on image information acquired by the image acquisition means.

**36.** The portable information processing terminal according to Claim 34, wherein
the control device detects a direction of a face and a direction of eye gaze by performing prepared image processing on image information acquired by the image acquisition means, and when the direction of the face and the direction of the eye gaze are changed in opposite directions, accepts a position on the display device corresponding to the direction of the face as the temporary position input.

**37.** A portable information processing terminal comprising:

first input means;
second input means different from the first input means; and
a control device that detects input states of the first input means and the second input means, and performs processing according to the detected input states, wherein
the control device detects a temporary direction input specifying a direction with regard to the portable information processing terminal by an input to the second input means, and when detecting an operation performed on the first input means in a state where the temporary direction input is detected, accepts the direction corresponding to the temporary direction input as input directional information.

**38.** The portable information processing terminal according to Claim 37, wherein
the first input means is an operation key.

**39.** The portable information processing terminal according to Claim 37, wherein
the second input means is image acquisition means, and
the control device accepts, as the temporary direction input, a direction with regard to the portable information processing terminal corresponding to a detection value detected by performing prepared image processing on image information acquired by the image acquisition means.

**40.** The portable information processing terminal according to Claim 39, wherein
the control device accepts, as the temporary direction input, a direction with regard to the portable information processing terminal corresponding to a direction of a face or a direction of eye gaze detected by performing prepared image processing on image information acquired by the image acquisition means.

**41.** The portable information processing terminal according to Claim 39, wherein
the control device detects a direction of a face and a direction of eye gaze by performing prepared image processing on image information acquired by the image acquisition means, and when the direction of the face and the direction of the eye gaze are changed in opposite directions, accepts a direction with regard to the portable information processing terminal corresponding to the direction of the face as the temporary position input.

**42.** A computer-readable recording medium storing a program for causing a control device of a portable information processing terminal to realize, the portable information processing terminal including a display device; an operation key; input means different from the operation key; and the control device that detects input states of the operation key and the input means and performs processing according to the detected input states,
means for detecting a temporary position input specifying a position on the display device by an input to the input means, and when detecting an operation performed on the operation key in a state where the temporary position input is detected, accepting the position corresponding to the temporary position input as input positional information.

**43.** An input acceptance method comprising:

by a portable information processing terminal including a display device; an operation key; input means different from the operation key; and a control device that detects input states of the operation key and the input means and performs processing according to the detected input states,
detecting a temporary position input specifying a position on the display device by an input to the input means, and when detecting an operation performed on the operation key in a state where the temporary position input is detected, accepting the position corresponding to the temporary position input as input positional information.

**44.** A computer-readable recording medium storing a program for causing a control device of a portable information processing terminal to realize, the portable information processing terminal including first input means; second input means different from the first input means; and the control device that detects input states of the first input means and the second input means and performs processing according to the detected input states,

means for detecting a temporary direction input specifying a direction with regard to the portable information processing terminal by an input to the second input means, and when detecting an operation performed on the first input means in a state where the temporary direction input is detected, accepting the direction corresponding to the temporary direction input as input directional information.

**45.** An input acceptance method comprising:

by a portable information processing terminal including first input means; second input means different from the first input means; and a control device that detects input states of the first input means and the second input means and performs processing according to the detected input states,

detecting a temporary direction input specifying a direction with regard to the portable information processing terminal by an input to the second input means, and when detecting an operation performed on the first input means in a state where the temporary direction input is detected, accepting the direction corresponding to the temporary direction input as input directional information.

# Fig.1

(A)

(B)

(C)

EP 2 573 650 A1

Fig.2

# Fig.3

(A)

(B)

(C)

EP 2 573 650 A1

Fig.4

(A)

1

1A    1B

2    3

(B)

2

1A

1B

1

3

EP 2 573 650 A1

## Fig.5

PORTABLE INFORMATION PROCESSING TERMINAL — 1

| Component | Ref |
|---|---|
| KEY | 3 |
| KEY TOUCH SENSOR | 30 |
| POINTING DEVICE | 8 |
| TOUCH PAD | 9 |
| FIRST ACCELERATION SENSOR | 10 |
| SECOND ACCELERATION SENSOR | 11 |
| MAGNETIC SENSOR | 12 |
| TIMER | 13 |

PROCESSOR — 4

TOUCH PANEL — 2
DISPLAY — 21
TOUCH SENSOR — 22

MEMORY — 5
PROGRAM — 51
APPLICATION DATA — 52
SETTING PARAMETER — 53
IMAGE DATA — 54

STORAGE DEVICE — 6

COMMUNICATION SYSTEM — 7

CAMERA — C

EP 2 573 650 A1

# Fig.6

VIRTUAL DISPLAY SPACE

100

110

111

1

21

## Fig.7

(A)

| | | | | |
|---|---|---|---|---|
| A | B | C | D | E |
| F | G | H | I | J |
| K | L | M | N | O |
| P | Q | R | S | T |
| U | V | W | X | Y |

(B)

(C)

| | | | | |
|---|---|---|---|---|
| E | D | C | B | A |
| J | I | H | G | F |
| O | N | M | L | K |
| T | S | R | Q | P |
| Y | X | W | V | U |

EP 2 573 650 A1

Fig.8

(A)

(B)

(C)

# Fig.9

Fig.10

(A)

(B)

EP 2 573 650 A1

# Fig.11

(A)

(B)

(C)

Fig.12

# Fig.13

(A)

(B)

Fig.14

(A)

(B)

Fig.15

72

# Fig.16

(A)                    (B)                    (C)

EP 2 573 650 A1

## Fig.17

(A)

(B)

EP 2 573 650 A1

EP 2 573 650 A1

## Fig.18

(A)

(B)

| | | | | |
|---|---|---|---|---|
| A | B | C | D | E |
| F | G | H | I | J |
| K | L | M | N | O |
| P | Q | R | S | T |
| U | V | W | X | Y |

M  N  O

R  S  T

W  X  Y

EP 2 573 650 A1

# Fig.19

(A)

(B)

(C)

Fig.20

Fig.21

# Fig.22

EP 2 573 650 A1

# Fig.23

(1-A)

(2-A)

(1-B)

(2-B)

# Fig.24

Fig.25

(1-A)

(2-A)

(3-A)

(1-B)

(2-B)

(3-B)

# Fig.26

(1-A)

1

2

3

31

F

(2-A)

1

2

P

3

31

F

(3-A)

1

2

P

3

31

F

(1-B)

1

2

3

31

(2-B)

1

2

M1

P

3

31

(3-B)

1

2

M1

P

3

31

# Fig.27

(1-A)  (2-A)  (3-A)  (4-A)

(1-B)  (2-B)  (3-B)  (4-B)

# Fig.28

# Fig.29

# Fig.30

# Fig.31

(1-A) (2-A) (3-A) (4-A)

(1-B) (2-B) (3-B) (4-B)

# Fig.32

# Fig.33

# Fig.34

# Fig.35

(A)

(B)

# Fig.36

(A)
(B)
(C)

EP 2 573 650 A1

Fig.37

# Fig.38

(A)

(B)

EP 2 573 650 A1

# Fig.39

(A)

(B)

EP 2 573 650 A1

Fig.40

EP 2 573 650 A1

Fig.41

Fig.42

EP 2 573 650 A1

## Fig.43

(1-A)

(2-A)

(2-C)

(1-B)

(2-B)

Fig.44

(1-A)

(2-A)

(2-C)

(1-B)

(3-A)

(3-C)

EP 2 573 650 A1

# Fig.45

EP 2 573 650 A1

Fig.46

# Fig.47

(A)              (B)

Fig.48

Fig.49

Fig.50

EP 2 573 650 A1

## Fig.51

Fig.52

EP 2 573 650 A1

Fig.53

Fig.54

Fig.55

Fig.56

Fig.57

# Fig.58

(1-A)

(2-A)

(1-B)

(2-B)

# Fig.59

(1-A)

(2-A)

(1-B)

(2-B)

EP 2 573 650 A1

# Fig.60

(1-A)

(2-A)

(3-A)

(1-B)

(2-B)

(3-B)

117

# Fig.61

(1-A)    (2-A)    (3-A)    (4-A)

(1-B)    (2-B)    (3-B)    (4-B)

# Fig.62

(1-A)

(2-A)

(3-A)

(1-B)

(2-B)

(3-B)

Fig.63

(A)

(B)

(C)

Fig.64

Fig.65

# Fig.66

200

PORTABLE INFORMATION
PROCESSING TERMINAL

201

DISPLAY DEVICE

203

CONTROL DEVICE

202

OPERATION KEY

# Fig.67

200

PORTABLE INFORMATION
PROCESSING TERMINAL

201

DISPLAY DEVICE

203

CONTROL DEVICE

204

INPUT ACCEPTANCE
MEANS

202

OPERATION KEY

# Fig.68

```
        ┌─────────────┐
        │    START    │
        └─────────────┘
               │
               ▼              ╭─S1
   ┌───────────────────────────────┐
   │  DETECT SEQUENTIAL OPERATION  │
   └───────────────────────────────┘
               │
               ▼              ╭─S2
   ┌───────────────────────────────┐
   │      ACCEPT DIRECTIONAL       │
   │     INFORMATION INPUT         │
   └───────────────────────────────┘
               │
               ▼
        ┌─────────────┐
        │     END     │
        └─────────────┘
```

# Fig.69

# Fig.70

300

PORTABLE INFORMATION PROCESSING TERMINAL

301

DISPLAY DEVICE

303

CONTROL DEVICE

304

INPUT ACCEPTANCE MEANS

302

OPERATION KEY

# Fig.71

START

S11

DETECT TEMPORARY POSITION INPUT TO DISPLAY DEVICE

S12

DETECT OPERATION TO OPERATION KEY

S13

ACCEPT POSITIONAL INFORMATION

END

# Fig.72

```
        ┌──────────────┐
        │    START     │
        └──────────────┘
               │
               ▼
   ┌─────────────────────────────┐  ⌐S21
   │ DETECT TOUCHING OPERATION TO │
   │  DISPLAY DEVICE, OPERATION TO│
   │       OPERATION KEY          │
   └─────────────────────────────┘
               │
               ▼
   ┌─────────────────────────────┐  ⌐S22
   │  ACCEPT INPUT ACCORDING TO   │
   │  COMBINATION OF OPERATIONS   │
   └─────────────────────────────┘
               │
               ▼
        ┌──────────────┐
        │     END      │
        └──────────────┘
```

# Fig.73

⌐400

PORTABLE INFORMATION PROCESSING TERMINAL

⌐410

DISPLAY DEVICE-SIDE CASING
⌐401
DISPLAY DEVICE

⌐404
DIRECTION DETECTION MEANS

⌐420

OPERATION DEVICE-SIDE CASING
⌐402
OPERATION DEVICE

⌐403
CONTROL DEVICE

# Fig.74

~400

PORTABLE INFORMATION PROCESSING TERMINAL

~410

DISPLAY DEVICE-SIDE CASING

~401

DISPLAY DEVICE

~404

DIRECTION DETECTION MEANS

~420

OPERATION DEVICE-SIDE CASING

~402

OPERATION DEVICE

~403

CONTROL DEVICE

~405

INPUT ACCEPTANCE MEANS

# Fig.75

START

~S31

DETECT DIRECTION BETWEEN DISPLAY SURFACE AND OPERATION SURFACE

~S32

CONVERT AND ACCEPT INPUT VALUE

END

# Fig.76

_500_
PORTABLE INFORMATION
PROCESSING TERMINAL

_501_
DISPLAY DEVICE

_504_
CONTROL DEVICE

_502_
OPERATION KEY

_503_
INPUT MEANS

# Fig.77

_600_
PORTABLE INFORMATION
PROCESSING TERMINAL

_603_
CONTROL DEVICE

_601_
FIRST INPUT MEANS

_602_
SECOND INPUT
MEANS

# Fig.78

```
      ( START )
          │
          ▼                    ─S41
┌──────────────────────────┐
│  DETECT TEMPORARY POSITION │
│          INPUT             │
└──────────────────────────┘
          │
          ▼                    ─S42
┌──────────────────────────┐
│    DETECT OPERATION TO     │
│      OPERATION KEY         │
└──────────────────────────┘
          │
          ▼                    ─S43
┌──────────────────────────┐
│ ACCEPT POSITIONAL INFORMATION │
└──────────────────────────┘
          │
          ▼
      ( END )
```

# Fig.79

```
      ( START )
          │
          ▼                    ─S51
┌──────────────────────────┐
│ DETECT TEMPORARY DIRECTION │
│          INPUT             │
└──────────────────────────┘
          │
          ▼                    ─S52
┌──────────────────────────┐
│   DETECT OPERATION TO FIRST │
│       INPUT MEANS          │
└──────────────────────────┘
          │
          ▼                    ─S53
┌──────────────────────────┐
│    ACCEPT DIRECTIONAL      │
│      INFORMATION           │
└──────────────────────────┘
          │
          ▼
      ( END )
```

## INTERNATIONAL SEARCH REPORT

International application No.

PCT/JP2011/002667

A. CLASSIFICATION OF SUBJECT MATTER

*G06F3/02*(2006.01)i, *G06F3/023*(2006.01)i, *G06F3/033*(2006.01)i, *G06F3/041* (2006.01)i, *G06F3/048*(2006.01)i, *H03M11/08*(2006.01)i, *H04M1/247*(2006.01)i

According to International Patent Classification (IPC) or to both national classification and IPC

B. FIELDS SEARCHED

Minimum documentation searched (classification system followed by classification symbols)

G06F3/02, G06F3/023, G06F3/033, G06F3/041, G06F3/048, H03M11/08, H04M1/247

Documentation searched other than minimum documentation to the extent that such documents are included in the fields searched

| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2005/010740 A1  (NEC Corp.),<br>03 February 2005 (03.02.2005),<br>entire text; all drawings<br>& US 2007/0063976 A1    & EP 1653338 A1<br>& CN 1829954 A | 1-12 |
| Y | JP 2006-048589 A  (NEC Corp.),<br>16 February 2006 (16.02.2006),<br>entire text; all drawings<br>(Family: none) | 1-12 |
| Y | JP 2004-159022 A  (NEC Saitama, Ltd.),<br>03 June 2004 (03.06.2004),<br>paragraphs [0032] to [0034]; fig. 4<br>& US 2004/0082322 A1    & EP 1418737 A1<br>& CN 1499886 A | 9,10 |

☒ Further documents are listed in the continuation of Box C.　　☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>11 July, 2011 (11.07.11) | Date of mailing of the international search report<br>19 July, 2011 (19.07.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/002667

| C (Continuation). | DOCUMENTS CONSIDERED TO BE RELEVANT | |
|---|---|---|
| Category* | Citation of document, with indication, where appropriate, of the relevant passages | Relevant to claim No. |
| X<br>Y | JP 2003-271294 A (Canon Inc.),<br>26 September 2003 (26.09.2003),<br>paragraphs [0054] to [0065]; fig. 18 to 32<br>(Family: none) | 13,19,21,22<br>14-18 |
| Y | JP 2006-134090 A (Matsushita Electric<br>Industrial Co., Ltd.),<br>25 May 2006 (25.05.2006),<br>paragraphs [0074] to [0081]; fig. 7 to 9<br>(Family: none) | 14-18 |
| X | JP 2009-069510 A (Ricoh Co., Ltd.),<br>02 April 2009 (02.04.2009),<br>paragraphs [0019] to [0031]; fig. 1 to 7<br>(Family: none) | 20 |
| X | JP 2007-535768 A (Scenera Technologies,<br>L.L.C.),<br>06 December 2007 (06.12.2007),<br>entire text; all drawings<br>& US 2005/0246652 A1 & EP 1745346 A<br>& WO 2005/111769 A2 & CN 101164095 A | 23-32 |
| X | JP 08-335135 A (Canon Inc.),<br>17 December 1996 (17.12.1996),<br>paragraphs [0015] to [0044]; fig. 1 to 5<br>(Family: none) | 33-36,42,43 |
| X | JP 09-081305 A (Canon Inc.),<br>28 March 1997 (28.03.1997),<br>paragraphs [0012] to [0031]; fig. 1 to 5<br>& US 6300933 B1 | 37-41,44,45 |

Form PCT/ISA/210 (continuation of second sheet) (July 2009)

**INTERNATIONAL SEARCH REPORT**

| International application No. |
|---|
| PCT/JP2011/002667 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
   The inventions in claims 1-12 relate to a continuous operation for a plurality of operation keys,
   the inventions in claims 13-19, 21 and 22 relate to a temporary position input by a contact operation for a display device,
   the invention in claim 20 relates to an input corresponding to a combination of a contact operation for a display device and an operation for an operation key,
   the inventions in claims 23-32 relate to control corresponding to the direction of an operation surface with respect to a display surface,
                              (Continued to the extra sheet.)

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (July 2009)

| INTERNATIONAL SEARCH REPORT | International application No. |
|---|---|
| | PCT/JP2011/002667 |

Continuation of Box No.III of continuation of first sheet(2)

the inventions in claims 33-36, 42 and 43 relate to a temporary position input on a display device by an input means different from an operation key, and

the inventions in claims 37-41, 44 and 45 relate to a temporary direction input.

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4161224 B
- JP 2010116116 A
- JP 2010116117 A
- JP 2010116118 A